# EUROPEAN PATENT SPECIFICATION

(11) **EP 4 504 981 B1**
(45) Date of publication and mention of the grant of the patent: **25.11.2026**
(21) Application number: 23718077.3
(22) Date of filing: 31.03.2023
(51) Int. Cl.: C21B 13/00, C21B 13/02, C21B 13/14

(54) **METHOD FOR PRODUCING STEEL AND SPONGE IRON MANUFACTURING PROCESS**
VERFAHREN ZUR HERSTELLUNG VON STAHL UND VERFAHREN ZUR HERSTELLUNG VON EISENSCHWAMM
PROCÉDÉ DE PRODUCTION D'ACIER ET PROCÉDÉ DE FABRICATION DE FER SPONGIEUX

(30) Priority: 01.04.2022 SE 2250421
(43) Date of publication of application: 12.02.2025
(73) Proprietor: LUOSSAVAARA-KIIRUNAVAARA AB, 971 28 Luleå (SE)
(72) Inventor: ERIKSSON, Ola, 981 33 Kiruna (SE); ÅSTRÖM, Björn, 981 37 Kiruna (SE); MARJAVAARA, Daniel, 981 37 Kiruna (SE); ROSTMARK, Susanne, 981 37 Kiruna (SE); TUOMAS, Göran, 972 39 Luleå (SE)
(74) Representative: Zacco Sweden AB
(86) International application number: PCT/SE2023/050293
(87) International publication number: WO 2023/191699

(56) References cited:
- WO-A1-2021/183022
- CA-A1- 3 176 355
- US-A1- 2015 259 760

## Description

### TECHNICAL FIELD

The present invention primarily relates to a process for producing steel, whereby iron ore oxide material is reduced with a reducing agent and the so-obtained intermediate product (direct reduced iron ore material) and eventually accompanying substances is/are metallurgically processed.

The present invention further relates to a steel production configuration and to a data program programmed for causing the steel production configuration o execute the process.

The present disclosure may relate to a process for the production of a carbon-free intermediate product.

The present invention primarily concerns the mining industry producing direct reduced iron ore material and/or relates to the steel making industry producing steel. Furthermore, the present invention also may concern manufacturers and suppliers of iron ore oxide material provider devices, direct reduction facilities, steel production devices etc.

### BACKGROUND OF THE INVENTION

Different ways of meeting fluctuations in production of re-generative energy used in processes for producing steel are known today.

One way to meet fluctuations may be storage of re-generative energy by means of the intermediate product per se, and use it as storage means for storing the re-generative energy until the intermediate product is processed by the steel making industry.

Current steel production can be carried out by producing pig iron in a so-called hot furnace process. In such production, usually coke from coal is used, which releases very significant quantities of CO₂. Furthermore, the so-called "direct reduction methods" are known (methods according to the brands MIDREX, FINMET, ENERGIRON/HYL, etc.), in which the produced sponge iron (intermediate product) may be in the form of HDRI (hot direct reduced iron), CDRI (cold direct reduced iron), or so-called HBI (hot briquetted iron).

The steel making industry of today often uses sponge iron in the form of HDRI, CDRI, and HBI for the production of steel and usually process the sponge iron in electric furnaces, which is extraordinarily energy-intensive, or in LD-converters (basic oxygen steelmaking where carbon rich pig iron is made into steel).

Today, for the manufacture of the intermediate product, the direct reduction facility is used for providing direct reduction by introducing heated hydrogen into the direct reduction facility for heating the iron ore oxide material charged into the direct reduction facility, thereby providing a chemical reaction between the hydrogen and the iron ore oxide material. Some current methods make use of hydrogen and carbon monoxide from methane and synthesis gas if necessary. For example, in the so-called MIDREX method, methane is transformed into a carbon containing molecule (according to the following reaction CH₄+CO₂=2CO+2H₂), providing that the iron ore oxide reacts with the achieved reduction gas; Fe₂O₃+6CO(H₂)=2Fe+3CO₂(H₂O)+3 CO(H₂).

At least one aspect herein described may relate to a process for producing steel, processing a carbon free intermediate product, at the same time as fluctuations in production of re-generative energy are met.

At least one aspect herein described may relate to a process for producing steel, processing an intermediate product comprising carbon, at the same time as fluctuations in production of re-generative energy are met.

At least one aspect herein described may relate to a process for producing steel, processing an intermediate product comprising carbon by incorporating carbon during the reduction of the iron ore oxide material, at the same time as fluctuations in production of re-generative energy are met.

At least one aspect herein described may relate to a process for producing steel, processing an intermediate product comprising carbon by incorporating carbon to the direct reduced iron ore material in a separate carburizing zone of the direct reduction facility and/or in a carburizing reactor, at the same time as fluctuations in production of re-generative energy are met.

Current methods thus use the intermediate product per se as a storage means for storing re-generative energy for meeting fluctuations in production of re-generatively generated electric energy.

In a majority of the steel making industries and methods for producing steel, there is a lack of a sustainable, comprehensive production concept, based on re-generative resources for steel production on an industrial scale and in an optimal way.

Known technologies introduce thermal energy to the hydrogen injected into the direct reduction facility for generating thermal energy needed for the chemical reaction between the hydrogen and the iron ore oxide material. The hydrogen to be injected has a very high temperature (e.g. 700-1050 °C) for providing the chemical reaction.

However, such beforehand and vigorous heating of the hydrogen destroys the reduction potential of the hydrogen.

In some cases and for compensating the loss of said reduction potential of the heated hydrogen, the hydrogen is re-used and re-heated and this further destroys the reduction potential of the hydrogen.

In some cases and for compensating the loss of said reduction potential of the heated hydrogen, further hydrogen is introduced into the direct reduction facility. Nonetheless, further addition and heating of the hydrogen is not an efficient way to provide a process for production of steel in a fossil-free way, or at least in a substantially fossil-free way, for producing the intermediate product.

According to known processes, the chemical reaction implies that oxygen is reduced from the iron ore oxide material by means of the heated hydrogen, whereby there will be a temperature rise of the iron ore oxide material under reduction.

Accordingly, the direct reduced iron ore material is discharged from the direct reduction facility and will thus be of high temperature due to that the thermal energy of the heated hydrogen is transferred from the hydrogen to the iron ore material during the reduction.

Thereby, the direct reduced iron ore material discharged from the direct reduction facility must be cooled down, which ruins the energy efficiency of the process of steel production and is not optimal.

Direct reduction of the iron ore oxide material may be referred to as a solid-state process reducing the iron ore oxide material to a direct reduced iron ore material at a temperature below the melting point of the iron ore.

Prior art technology described in US 2015/0259760 aims to solve the problem how to use re-generative resources for steel production on an industrial scale, seen in a perspective of a production value chain needed to produce steel from iron ore, making use of a direct reduction method for reducing the iron ore oxide into the intermediate product.

There have been several approaches to present an efficient solution on existing technical problems over long time, i.e. how to store and meeting fluctuations in the production of re-generative energy in an efficient manner.

The technology described in US 2015/0259760 uses the intermediate product per se as a storage means for storing the re-generative energy until the intermediate product is processed in the steel making industry using electric furnaces to process the intermediate product or using LD-converters. This kind of storage provided by the prior art technology is one way to meet fluctuations in production of re-generative energy. Another way to store re-generative energy according to US 2015/0259760 involves that the re-generative energy may be stored in the form of hydrogen if a surplus of it is available, thus compensating for temporary fluctuations in the production of re-generative energy.

According to US 2015/0259760, the direct reduction facility configured for reducing the iron ore may make use of hydrogen produced at the site of the direct reduction facility, and the electric furnace of the steel making industry may use said re-generative energy (e.g. wind-, hydroelectric-, or solar energy). According to US 2015/0259760, the temperatures of the hydrogen may be adjusted by heaters or partial oxidation. The temperature of the hydrogen may be 450 °C up to 1200 °C, preferably 600 °C to 1200 °C and in particular 700 °C to 900 °C

Another prior art document WO 2021/225500 A1 reveals that the reducing gas is heated to 1050 °C for the direct reduction.

Another prior art document US 2021/0246521 reveals that the reducing gas is heated to above 700 °C for said direct reduction.

### SUMMARY OF THE INVENTION

There is an object to provide a process for producing steel, making use of re-generative energy, and/or a process for producing an intermediate product, such as sponge iron (DRI, HBI etc.), as efficient as possible at the same time as fluctuations in production of re-generative energy are met.

There is an object to provide an energy saving and time saving process for producing steel using re-generative energy on industrial scale, seen in a perspective of needed re-generative energy and meeting fluctuations in production of re-generative energy.

There is an object to develop a process for producing steel in a sustainable way with a comprehensive production concept, which is based on re-generative energy.

There is an object to provide a process by which an intermediate product and/or steel can be produced on an industrial scale, in an optimal way and in a CO2-neutral and/or CO2-low emission and/or CO2 free fashion.

There is an object to provide a process for producing steel in an energy saving way at the same time as CO2- and NOx-emissions are reduced or eliminated.

There is an object to minimize utilization of the hydrogen as a reducing agent for the reduction of iron ore oxide material in a direct reduction facility.

There is an object minimize utilization of re-generative energy required for operating an electrolysis unit producing hydrogen and oxygen.

There is an object to maintain the reduction potential of the hydrogen during the reduction of the iron ore oxide material into the intermediate product.

There is an object to maintain the chemical reactivity and/or high impetus of the hydrogen, which chemical reactivity is essential for providing an efficient chemical reaction between the hydrogen and the iron ore oxide material.

There is an object to provide a carbon containing intermediate product, produced in a fossil-free way, or at least in a substantially fossil-free way.

There is an object to provide a carbon free intermediate product, produced in a fossil-free way, or at least in a substantially fossil-free way.

There is an object to provide a process for producing steel and a steel production configuration, which configuration makes it possible to, in an energy saving way, produce a carbon free and/or carbon containing intermediate product.

There is an object to provide efficient reduction of the iron ore oxide material at the same time as efficient control of a heat treatment process is achieved by the option of maintaining the reduction potential of the reducing agent for achieving an efficient production of reduced iron ore material that is resistant to re-oxidation.

There is an object to provide cost-efficient transportation supply chains of reduced iron ore material to other industries, such as to a steel making industry.

There is an object to produce a reduced iron ore material that can be used in cost-efficient production of steel making use of e.g. an electric arc furnace.

These or at least one of said objects has been achieved by a process for producing steel, according to appended claims 1-20.

In such way is achieved an efficient solution how to store re-generative energy and meeting fluctuations in the production of steel in an efficient way.

In such way is achieved an energy efficient process for producing steel.

By transferring the iron ore oxide material from an iron ore oxide material provider device directly into the direct reduction facility, which iron ore oxide material holds thermal energy that originates from the iron ore oxide material provider device, there is achieved a very efficient reduction and chemical reaction between the iron ore oxide material and the reducing agent. For example, there is no need to heat the reducing agent to high temperatures (e.g. above 700 °C), instead the present disclosure makes use of the thermal energy of the iron ore oxide material holding thermal energy originating from the ore oxide material provider device, whereby the reduction potential of the reducing agent is preserved.

By utilizing the thermal energy of the iron ore oxide material to heat or further heat the introduced reducing agent for achieving a chemical reaction between the iron ore oxide material and the reducing agent, maintaining the reduction potential of the reducing agent, there is achieved a fast reduction, less use of reducing agent (decreased use and production of re-generative energy which implies high flexibility in meeting fluctuations in the production of re-generative energy for producing the reducing agent by the electrolysis). Alternatively, the reducing agent is produced independently of the current demand, if sufficient generatively generated electric energy is available, which produced reducing agent is temporary stored for meeting fluctuations in production of re-generative energy.

The iron ore oxide material is reduced with a reducing agent in a direct reduction facility, which reducing agent is produced by electrolysis of water.

The electric energy necessary for the electrolysis comprises re-generative energy derived from hydropower and/or wind power and/or photovoltaic or other re-generative energy forms.

The intermediate product is produced independently of the current demand, if sufficient reducing agent is available.

Alternatively, the reducing agent and/or the intermediate product (e.g. direct reduced iron ore material) is/are always produced independently of the current demand, if sufficient re-generatively generated electric energy is available; the intermediate product that is not demanded is stored until demand/use, so that the re-generative energy that is saved therein is also stored; during the reduction of the iron ore oxide material to the intermediate product, a carbon- or hydrogen-containing gas is added to the reducing agent in order to incorporate carbon into the intermediate product, at least so much carbon- or hydrogen-containing gas is added to the reducing agent for the reduction, that the carbon content in the intermediate product is 0,0005 mass-% to 6,3 mass-%, the carbon- or hydrogen-containing gas is methane or other carbon-containing gases from biogas production, or from pyrolysis of renewable raw materials or synthetic gas from biomass.

Alternatively, the reducing agent for the reduction has at least enough carbon-containing or hydrogen-containing gas added to it to make the carbon content in the intermediate product 1 mass % to 3 mass %.

Alternatively, the reducing agent for the reduction comprises hydrogen for reduction of the iron ore oxide material providing the chemical transformation into the carbon-free intermediate product.

Alternatively, the reducing agent (e.g. composed of hydrogen and possibly a carbon-containing gas) is introduced into the reduction process at a temperature lower than that of the iron ore oxide material being charged into the direct reduction facility.

Alternatively, the reducing agent may be pre-heated to some extent before being introduced into the direct reduction facility, wherein the introduced reducing agent may have a temperature of about 300 °C to about 700 °C, preferably about 400 °C to about 650 °C. In such case, the temperature of the iron ore oxide material to be charged into the direct reduction facility is always higher than that of the reducing agent. For example, if the temperature of the reducing agent is lower than 700 °C, the temperature of the iron ore oxide material being charged into the direct reduction facility is controlled to be higher, thus above 700 °C. For example, if the temperature of the reducing agent is lower than 600 °C, the temperature of the iron ore oxide material being charged into the direct reduction facility being higher, such as above about 650 °C.

By utilizing the thermal energy of the iron ore oxide material to heat or further heat the introduced reducing agent, a chemical reaction between the iron ore oxide material and the reducing agent is achieved in an energy efficient fashion. During the reduction, the thermal energy of the iron ore oxide material is of such value that it is possible to heat or further heat the reducing agent for achieving said chemical reaction.

Alternatively, in case of carburizing the discharged direct reduced iron ore material, the introduced reducing agent may be pre-heated to some extent for adding the required temperature to the direct reduced iron ore material, but still the iron ore oxide material holds thermal energy being warmer than the reducing agent during the chemical reaction.

Alternatively, excess pressure in the reduction is between 0 bar and 15 bar.

Alternatively, the discharged direct reduced iron ore material from the direct reduction facility may have a temperature of about 20 °C to 500 °C or about 400 °C to 700 °C, preferably about 500 °C to 650 °C.

For example:
- The iron ore oxide material has a temperature of about 1100 °C when being charged into the direct reduction facility.
- The reducing agent (e.g. having a hydrogen content of 100% by volume) has a temperature of about 500 °C when introduced into the direct reduction facility, wherein the reducing agent reacts with the iron ore oxide material reducing the iron ore oxide material into the intermediate product by utilizing the thermal energy of the iron ore oxide material to heat or further heat the introduced reducing agent for achieving a chemical reaction between the iron ore oxide material and the reducing agent.
- The direct reduced iron ore material, ready to be discharged from the direct reduction facility and/or being ready for carburizing, has a temperature of about 600 °C (1100 °C - 500 °C).

In such way, for example, the direct reduced iron ore material has a desired temperature of about 600 °C, at which desired temperature carburizing of the direct reduced iron ore material is most efficient,

Alternatively, a control circuitry is adapted to control the iron ore oxide material temperature of the iron ore oxide material transferred into the direct reduction facility and/or to control the interior gas pressure in the direct reduction facility and/or the reducing agent temperature and/or the reducing agent gas pressure of the introduced reducing agent, for reaching (aiming at) the desired temperature (e.g. 600 °C).

Alternatively, the control circuitry is adapted to control the iron ore oxide material production unit to provide that the iron ore oxide material has a specific temperature (e.g. about 1100 °C) for reaching said desired temperature (e.g. about 600 °C) of the direct reduced iron ore material.

For example, the amount of hydrogen and/or oxygen produced by the electrolysis unit and used by the iron ore oxide material production unit may be regulated for providing heat for the induration process (oxidation and/or sintering) performed by an indurating apparatus of the iron ore oxide material production unit for producing the iron ore oxide material holding the thermal energy.

Alternatively, the control circuitry is adapted to control of the pre-heating apparatus to provide the iron ore oxide material having a specific temperature (e.g. about 1100 °C) for reaching said desired temperature (e.g. about 600 °C) of the direct reduced iron ore material.

Alternatively, the discharged direct reduced iron ore material may be subjected to carburizing in a separate carburizing reactor, wherein the method of reduction of iron ore oxide material is configured to provide direct reduced iron ore material of a temperature, e.g. about 400 °C to 700 °C, preferably about 500°C to 650 °C, to be discharged from the direct reduction facility and directly transferred into the separate carburizing reactor.

Alternatively, the direct reduction facility is configured to be charged with an iron ore oxide material having a temperature within the range of about 800 to 1300 °C.

Alternatively, the direct reduction facility is configured to be charged with an iron ore oxide material having a temperature within the range of about 700 to 1400 °C.

Alternatively, the direct reduction facility is configured to be charged with an iron ore oxide material having a temperature within the range of about 600 to 1500 °C.

Alternatively, the direct reduction facility is configured to be charged with an iron ore oxide material having a temperature within the range of about 500 °C to 1600 °C, preferably within the range of about 800 °C to 1300 °C.

The direct reduction facility is configured to be charged with an iron ore oxide material holding thermal energy, the thermal energy is generated by the iron ore oxide material provider device.

Alternatively, the iron ore oxide material, being transferred from the iron ore oxide material provider device into the direct reduction facility exhibits a thermal energy (heat energy), originating from the manufacturing thermal process or pre-heating apparatus, corresponds to a temperature higher than 500 °C.

Alternatively, the iron ore oxide material transferred from the iron ore oxide material provider device into the direct reduction facility is made when the thermal energy (heat energy), originating from the manufacturing thermal process or pre-heating apparatus, corresponds to a temperature above 900 °C.

Alternatively, the substantially or completely endothermal chemical reaction may consume thermal energy equivalent to about 300 °C to 700 °C, preferably about 450 °C to 550 °C, which energy is extracted from the iron ore oxide material holding the thermal energy during the reduction and chemical reaction performed in the direct reduction facility. Alternatively, the iron ore oxide material provider device provides an iron ore oxide material (agglomerates or pellets) holding a temperature of about 900 °C to 1300 °C, preferably about 1000 °C to 1100 °C.

In such way is achieved that there is less need to heat the hydrogen for reaching a chemical reaction and reduction of the iron ore oxide material.

In such way is achieved that the reduction potential of the hydrogen will not be destroyed during the chemical reaction and reduction process.

Alternatively, the direct reduction facility may be formed as a shaft furnace, a rotary kiln, or a cross- or counter current heat exchanger or other direct reduction facility configured for reducing the iron ore oxide material.

Alternatively, the direct reduction facility may be configured to be operated under pressure.

By increasing the interior gas pressure in the reduction facility it is achieved that the gas volume can be decreased, which in turn is cost-effective and space saving.

In such way, this promotes the use of a smaller or less bulky reduction facility and is energy saving.

Alternatively, the entire system of the direct reduction facility is subjected to overpressure.

Alternatively, the interior (e.g. a chamber) of the direct reduction facility, in which interior the chemical reaction is performed, is subjected to overpressure (at a pressure higher than atmospheric pressure).

Alternatively, the overpressure is achieved by injecting pressurized hydrogen into the reduction facility.

Alternatively, the hydrogen is pressurized be means of a compressor device.

Alternatively, the iron ore oxide material provider device comprises an iron ore oxide material production unit, which is configured to produce the iron ore oxide material holding said thermal energy, which iron ore oxide material holding said thermal energy is transferred into the direct reduction facility.

Alternatively, the iron ore oxide material holds thermal energy that originates from a manufacturing thermal process of the iron ore oxide material production unit.

Alternatively, the iron ore oxide material provider device comprises a pelletizing plant configured for production of iron ore oxide material holding thermal energy.

Alternatively, the iron ore oxide material provider device comprises a pre-heating apparatus, which is configured for pre-heating the iron ore oxide material before transferring the iron ore oxide material into the direct reduction facility.

Alternatively, the technical feature regarding pre-heating the iron ore oxide material before transferring the iron ore oxide material into the direct reduction facility, combined with the technical feature of introducing oxygen, produced by the electrolysis unit (also producing the hydrogen), into the iron ore oxide material production unit for manufacturing the iron ore oxide material thus increasing the oxidation rate, provides a sustainable, comprehensive production concept for production of steel, wherein re-generative energy can be used in industrial scale.

Alternatively, the technical feature regarding pre-heating the iron ore oxide material before transferring the iron ore oxide material into the direct reduction facility, combined with the technical feature of introducing the oxygen-enriched process gas into an indurating apparatus for increasing the oxidation rate in the manufacture of the iron ore oxide material and for providing additional operational control by means of a control circuitry coupled to the iron ore oxide material production unit, by controlling the amount of the thermal energy of the iron ore oxide material toward a temperature, when charged into the direct reduction facility, set from a desired temperature value of the discharged direct reduced iron ore material, which promotes optimal carburizing of the direct reduced iron ore material.

The introduction of oxygen into the iron ore oxide material production unit provides an effective manufacturing thermal process by that the oxygen from the electrolysis of water efficiently can be used. The oxygen may be introduced into a pelletizing unit of the iron ore oxide material production unit for providing oxidizing/sintering of the iron ore mixture.

Alternatively, the pre-heating apparatus is configured for preheating previously cooled down iron ore oxide material ready to be transferred into direct reduction facility by means of, to some extent, recovered heat from the direct reduction facility and/or the iron ore oxide material production unit.

Alternatively, an electrolysis unit configured for providing said electrolysis of water, also produces oxygen, which oxygen is used by the iron ore oxide material production unit for manufacturing the iron ore oxide material by said manufacturing thermal process, wherein the iron ore oxide material effectively can be direct reduced in the direct reduction facility by said chemical reaction using the thermal energy recovered from said manufacturing thermal process.

Alternatively, the electrolysis unit also produces oxygen, which oxygen is used by the iron ore oxide material production unit for manufacturing the iron ore oxide material.

The electrolysis unit configured to produce the hydrogen and oxygen.

The induration of the iron ore mixture provided by the indurating apparatus of the iron ore oxide material production unit is achieved by a hydrogen burner device making use of hydrogen and oxygen for producing heat.

Alternatively, a carbon containing substance extracted from a carbon source is added to the direct reduced iron ore material in a separate carburizing zone of the direct reduction facility and/or in a separate carburizing reactor configured for introducing carbon into the iron ore oxide material for providing the intermediate product discharged from the direct reduction facility or a separate carburizing reactor.

Alternatively, the carbon containing substance comprises pure carbon element or being an element of molecules, such as methane, propane or other hydrocarbon or other molecules.

Alternatively, the carbon source comprises; a carbon capture and utilization unit and/or;a carbon production unit configured for production of carbon or non-fossil produced carbon and/or a biogas production unit configured for production of carbon containing gas and/or a synthetic gas production unit configured for production of carbon containing synthetic gas from biomass.

Alternatively, the carbon production unit comprises means for providing a Bosch reaction making use of iron as a catalysator for the production of carbon as e.g. defined by the formula: CO2(g) + 2H2(g) → C(s) + 2H2O(g) + thermal energy.

Alternatively, the carbon production unit may be called carburizing zone.

Alternatively, the carbon C may be produced in a separate carburizing zone and/or in a carburizing reactor.

Alternatively, the carbon C may be transferred directly into the separate carburizing zone and/or carburizing reactor.

Alternatively, the carbon production unit comprises a Sabatier reactor producing methane CH4 from a reaction between Hydrogen H2 and Carbon Dioxide CO2, which methane CH4 being the carbon- or hydrogen-containing gas transferred to the separate carburizing zone and/or to the separate carburizing reactor.

Alternatively, the carbon production unit and/or the carbon capture and utilization unit and/or the biogas production unit and/or the synthetic gas production unit is/are incorporated as integrated unit/s of the pre-heating apparatus and/or the iron ore production unit and/or the direct reduction facility and/or the electrolysis unit.

Alternatively, the carbon production unit comprises a Fischer-Tropsch apparatus configured to produce a carbon containing product by reducing the methane CH4 produced by the Sabatier reactor, which carbon containing product is transferred to the separate carburizing zone and/or to the separate carburizing reactor .

Alternatively, the carbon capture and utilization unit (CCU) comprises a CO2 capturing device CCD configured for capturing of CO2 from the atmosphere, which captured CO2 may be transferred to said Sabatier reactor configured for production of carbon respective methane CH4.

Alternatively, the carbon production unit configured for production of non-fossil produced carbon is used by a cement industry plant manufacturing cement from mined calcium minerals.

Alternatively, the carbon production unit of the cement industry plant comprises a cement kiln configured to capture Carbon Dioxide CO2 emitted from cement kiln during the production of cement, which Carbon Dioxide CO2 is transferred to said Sabatier reactor configured for production of carbon respective methane CH4.

Alternatively, the intermediate product comprises a carbon-free intermediate product.

Alternatively, the intermediate product is transferred to a steel making industry in a flammable product storage transport device.

Alternatively, the flammable product storage transport device comprises a thermo-cabinet containing e.g. inert atmosphere, into which the carbon-free intermediate product is transferred from the direct reduction facility.

Alternatively, a control circuitry is adapted to control the iron ore oxide material temperature of the iron ore oxide material transferred into the direct reduction facility and/or to control the interior gas pressure in the direct reduction facility and/or the reducing agent temperature and/or reducing agent pressure of the introduced reducing agent.

Alternatively, the hydrogen (reducing agent) from the re-generative production can be used with carbon-containing or hydrogen containing gas, such as CH4, COG, synthesis gas etc., in a direct reduction facility. The ratio of hydrogen from the re-generative production to carbon-containing or hydrogen-containing gas flows can be continuously varied as a function of availability. That is, if there is a low re-generative production of hydrogen containing gas, there is a possibility to use stored re-generative produced hydrogen containing gas or to use natural gas, biogas, gas from pyrolysis or renewable resources.

Alternatively, a first control circuitry is adapted to control the iron ore oxide material temperature of the iron ore oxide material transferred into the direct reduction facility by controlling the iron ore oxide material production unit discharging the iron ore oxide material at a specific temperature, which specific temperature corresponds with a first temperature value that is determined from a desired parameter value of the direct reduced iron ore material and/or intermediate product.

Alternatively, the first control circuitry is adapted to control the iron ore oxide material temperature of the iron ore oxide material transferred into the direct reduction facility by controlling the iron ore oxide material provider device to discharge the iron ore oxide material from the iron ore oxide material production unit at a specific temperature, which specific temperature has a first temperature value that is determined from a desired carburizing parameter value of the direct reduced iron ore oxide material ready for carburizing.

Alternatively, the iron ore oxide material provider device comprises an iron ore oxide material production unit and/ or a pre-heating apparatus.

Alternatively, the iron ore oxide material provider device comprises an iron ore oxide transfer device configured to discharge the iron ore oxide material into the direct reduction facility.

Alternatively, a first detector member of a carburizing reactor and/or of a carburizing zone is electrically coupled to the first control circuitry.

Alternatively, a first sensor device is arranged at an iron ore oxide material discharge outlet of the iron ore oxide material production unit and/or at a charging inlet of the direct reduction facility, which first sensor device is coupled to the first control circuitry.

Alternatively, the first sensor device is configured to detect said first temperature value.

Alternatively, the first control circuitry is configured to control the iron ore oxide material production unit to discharge the iron ore oxide material at a first temperature value that is determined from the desired carburizing parameter value of the direct reduced iron ore material ready for carburizing, wherein the first control circuitry takes into account the desired carburizing parameter value when determining said first temperature value of the iron ore oxide material to be charged into the direct reduction facility.

Alternatively, the desired carburizing parameter value is a parameter value of the direct reduced iron ore material (and/or the iron ore oxide material subject to reduction) that provides optimal carburizing of the direct reduced iron ore material and/or optimal carburizing of the iron ore oxide material subject to reduction.

Alternatively, a second control circuitry is adapted to control the iron ore oxide material temperature of the iron ore oxide material transferred into the direct reduction facility by controlling the pre-heating apparatus discharging the iron ore oxide material from the pre-heating apparatus at a specific temperature, which specific temperature has a second value that is determined from a desired parameter value of the direct reduced iron ore material and/or intermediate product.

Alternatively, the second control circuitry is adapted to control the iron ore oxide material temperature of the iron ore oxide material transferred into the direct reduction facility by controlling the pre-heating apparatus to discharge the iron ore oxide material from the pre-heating apparatus at a specific temperature, which specific temperature has a second temperature value that is determined from the desired carburizing parameter value of the direct reduced iron ore material ready for carburizing.

Alternatively, a second sensor device is arranged at an iron ore oxide material discharge outlet of the pre-heating apparatus and/or at a charging inlet of the direct reduction facility, which second sensor device is coupled to the second control circuitry.

Alternatively, the pre-heating apparatus is provided with a heating element that pre-heats the iron ore oxide material to have said specific temperature value before charging the iron ore oxide material into the direct reduction facility.

Alternatively, the heating element may be fed with thermal energy extracted from the manufacturing thermal process of the iron ore oxide material production unit, which thermal energy is used for pre-heating the iron ore oxide material .

Alternatively, the second sensor device is configured to detect said second temperature value.

A second detector member of the carburizing reactor and/or of the carburizing zone is electrically coupled to the second control circuitry.

Alternatively, the second control circuitry is configured to control the iron ore oxide material production unit to discharge the iron ore oxide material at a first temperature value that is determined from the desired carburizing parameter value of the direct reduced iron ore material ready for carburizing, wherein the second control circuitry takes into account the desired carburizing parameter value when determining said first temperature value of the iron ore oxide material to be charged into the direct reduction facility.

Alternatively, the desired carburizing parameter value is a temperature value of the direct reduced iron ore material (and/or the iron ore oxide material subject to reduction) that provides optimal carburizing of the direct reduced iron ore material and/or optimal carburizing of the iron ore oxide material subject to reduction.

Alternatively, a third control circuitry is adapted to control the reducing agent pressure of the reducing agent transferred into the direct reduction facility by controlling a first pressurizing device adapted to pressurize the reducing agent entering the direct reduction facility at a specific reducing agent pressure, which specific reducing agent pressure has a first reducing agent pressure value that is determined from a desired parameter value of the direct reduced iron ore material and/or intermediate product.

Alternatively, the third control circuitry is adapted to control the reducing agent pressure by controlling the first pressurizing device to inject the reducing agent into the direct reduction facility at said first reducing agent pressure value.

Alternatively, a third sensor device is arranged at a reducing agent inlet of the direct reduction facility, which third sensor device is coupled to the third control circuitry.

Alternatively, the third sensor device is configured to detect said first reducing agent pressure value.

Alternatively, a third detector member of a carburizing reactor and/or of a carburizing zone is electrically coupled to the third control circuitry.

Alternatively, the third control circuitry is configured to control the first pressurizing device to pressurize the reducing agent in the direct reduction facility at said first reducing agent pressure value that is determined from the desired carburizing parameter value of the direct reduced iron ore material ready for carburizing, wherein the third control circuitry takes into account the desired carburizing parameter value when determining said first reducing agent pressure value.

Alternatively, the desired carburizing parameter value is a temperature value of the direct reduced iron ore material (and/or the iron ore oxide material subject to reduction) that provides optimal carburizing of the direct reduced iron ore material and/or optimal carburizing of the iron ore oxide material subject to reduction.

Alternatively, a fourth control circuitry is adapted to control the reduction pressure in the direct reduction facility by controlling a second pressurizing device adapted to pressurize the reducing agent entering the direct reduction facility at a specific reduction pressure, which specific reduction pressure has a first reduction pressure value that is determined from a desired parameter value of the direct reduced iron ore material and/or intermediate product.

Alternatively, the fourth control circuitry is adapted to adjust the pressure of the reducing agent introduced into the direct reduction facility and/or to adjust the pressure of the drawn-off excess reducing agent by means of a gas pressure regulation device disposed in a direct reduction facility export gas line.

Alternatively, the fourth control circuitry is adapted to control the reduction pressure by controlling the second pressurizing device to inject the reducing agent into the direct reduction facility for providing said first reduction pressure value in the direct reduction facility.

Alternatively, a fourth sensor device is arranged at the direct reduction facility, which fourth sensor device is coupled to the fourth control circuitry.

Alternatively, the fourth sensor device is configured to detect said first reduction pressure value.

A fourth detector member of a carburizing reactor and/or of a carburizing zone is electrically coupled to the fourth control circuitry.

Alternatively, the fourth control circuitry is configured to control the second pressurizing device to pressurize the reducing agent in the direct reduction facility at said first reduction pressure value that is determined from the desired carburizing parameter value of the direct reduced iron ore material ready for carburizing, wherein the fourth control circuitry takes into account the desired carburizing parameter value when determining said first reduction pressure value.

Alternatively, the desired carburizing parameter value is a desired parameter value of the direct reduced iron ore material (and/or the iron ore oxide material subject to reduction) that provides optimal carburizing of the direct reduced iron ore material and/or optimal carburizing of the iron ore oxide material subject to reduction.

For example, the desired parameter value of the direct reduced iron ore material may correspond with a desired carburizing temperature value of the direct reduced iron ore material, a desired iron ore porosity value of the direct reduced iron ore material, a desired iron ore dimension value of the direct reduced iron ore material, etc.

Alternatively, a fifth control circuitry is adapted to control the reducing agent temperature of the reducing agent injected into the direct reduction facility by controlling a heating device configured to heat the reducing agent at a specific reducing agent temperature, which specific reducing agent temperature has a first reducing agent temperature value that is determined from a desired parameter value of the direct reduced iron ore material and/or intermediate product.

Alternatively, the fifth control circuitry is adapted to control the reducing agent temperature by controlling the heating device for providing said first reducing agent temperature value.

Alternatively, a fifth sensor device is arranged at the direct reduction facility, which fifth sensor device is coupled to the fifth control circuitry and is configured to detect the first reducing agent temperature value said first reducing agent temperature value.

Alternatively, the fifth control circuitry is configured to control the second pressurizing device to pressurize the reducing agent in the direct reduction facility at said first reduction pressure value that is determined from the desired carburizing parameter value of the direct reduced iron ore material ready for carburizing, wherein the fifth control circuitry takes into account the desired carburizing parameter value when determining said first reduction pressure value.

Alternatively, a fifth detector member of a carburizing reactor and/or of a carburizing zone is electrically coupled to the fifth control circuitry.

Alternatively, the desired carburizing parameter value is a parameter value of the direct reduced iron ore material (and/or the iron ore oxide material subject to reduction) that provides optimal carburizing of the direct reduced iron ore material and/or optimal carburizing of the iron ore oxide material subject to reduction.

Alternatively, at least one of the desired carburizing parameter values corresponds/correspond with a desired carburizing temperature value of the direct reduced iron ore material, a desired iron ore porosity value of the direct reduced iron ore material, a desired iron ore dimension value of the direct reduced iron ore material, etc.

Alternatively, the process comprises the steps of; directly reducing the iron ore oxide material by means of a reducing agent having a hydrogen content of at least 80% by volume; wherein a carbon content in the direct reduced iron ore material is then increased by means of a carburizing gas, and thereafter used carburizing gas is at least partly taken off while largely avoiding mixing the carburizing gas with the reducing agent.

Alternatively, an oxygen-enriched process gas is introduced into an indurating apparatus for increasing the oxidation rate and enabling control of operating the iron ore oxide material production unit by means of a control circuitry coupled to the iron ore oxide material production unit.

The amount of the thermal energy of the iron ore oxide material to be charged into the direct reduction facility may thus be controlled toward a specific temperature set in accordance with a desired temperature value of the discharged direct reduced iron ore material, which promotes optimal carburizing of the direct reduced iron ore material.

Alternatively, the control circuitry adjusts the iron ore oxide material temperature and/or the reduction pressure and/or the reducing agent temperature and/or reducing agent pressure from customer demanded properties of the intermediate product.

This or at least one of said objects has been achieved by a product by process, wherein the intermediate product is a carburized product produced by the reduction related to carburizing.

Alternatively, during the reduction of the iron ore oxide material into the intermediate product, a carbon- or hydrogen-containing gas is added to the reducing agent or as solid carbon containing material, in order to incorporate carbon into the intermediate product,

Alternatively, in order to compensate for temporary fluctuations in the production of renewable energy, this energy is stored in the form of reducing agent if a surplus of it is available, at the same time as the process for producing steel according to the invention requires less re-generative energy for reduction and is time saving.

This storage can occur, e.g. in a reducing agent gas holder tank. Such a store can then be used in the event of fluctuations. Temporary fluctuations can be predictable, for example, at night in solar installations, or unpredictable, e.g. fluctuations in wind intensity in wind energy plants.

Longer-term fluctuations that can occur among other things due to different seasons and may be factored into the energy storage in the form of HBI, at the same time as the process for producing steel according to the invention requires less re-generative energy for reduction and is time saving.

If necessary, it is also possible to make use of carbon-containing or hydrogen containing gases, such as natural gas and also use of reducing agent can optimally be carried out only with sufficient renewable electrical power.

This advantageously yields the optimal potential uses of re-generative energy since this energy can be used continously as a function of availability of the corresponding form of energy and the remaining energy that is lacking can be supplemented as needed by means of other energy carriers, at the same time as the process for producing steel according to the invention requires less re-generative energy for reduction and is time saving.

It is thus possible at any time to reduce the emission of Carbon dioxide CO2 to the minimum possible at this moment through the use of re-generative energy sources by the process for producing steel according to the invention as it requires less re-generative energy for reduction and is time saving.

The exemplary processes may be combined and the first, second, third, fourth and fifth control circuitries may be circuits of the control circuitry that adjusts the iron ore temperature and/or the reduction pressure and/or the reducing agent temperature and/or reducing agent pressure from customer demanded properties of the intermediate product.

Alternatively, the direct reduced iron ore material discharged from the direct reduction facility has a temperature that is lower than the temperature at which the iron ore oxide material being charged into the direct reduction facility.

Alternatively, the reducing agent introduced into the direct reduction facility has a temperature that is lower than the temperature at which the waste reducing fluid is discharged from the direct reduction facility.

Alternatively, the direct reduction facility comprises a waste reducing fluid gas line connected for drawing off waste reducing fluid from the direct reduction facility.

Alternatively, the waste reducing fluid gas line comprises a regulator device for regulating the pressurized reducing agent injected into the direct reduction facility and/or for regulating the drawn-off top gas.

Alternatively, a ratio between reducing agent from re-generative production and carbon-containing or hydrogen-containing gas flows is varied continuously as a function of availability; when there is sufficient re-generative energy, the reducing agent from the production with re-generative energy is used and in the absence of re-generative energy, then the process and configuration switches to purely carbon-containing or hydrogen-containing gas flows.

Alternatively, an adjustment of the temperature of the iron ore oxide material to be charged into the direct reduction facility is provided by any of the control circuitries, and adjustment of the content of the reducing agent and/or carbon-containing or hydrogen-containing gas, as a part of the overall gas flow, is carried out by at least one of the control circuitries.

Alternatively, the at least one control circuitry may be used to also measure and control a predicted yield/production quantity of reducing agent and/or re-generative energy and/or carbon-containing or hydrogen-containing gas that flows from a biogas production unit or from pyrolysis of renewable resources and/or forecasts for estimation of the needed re-generative energy in view of demand predictions of external consumers.

In such way is achieved that the re-generative energy can be distributed optimally and in a most economical fashion.

Alternatively, the gas flow that is emitted as exhaust from the direct reduction may be transferred into the process as a carbon-containing or hydrogen-containing gas flow.

The iron ore oxide material production unit may comprise a grate furnace device comprising a drying and pre-heating unit, which prepares iron ore mixture (e.g. green pellets) for an induration process.

Alternatively, the grate furnace device is configured to deliver thermal energy to the iron ore mixture under oxidization and produce iron ore oxide material with high thermal energy. The grate furnace device sinters the iron ore mixture for achieving additional mechanical strength to the pellets.

The grate furnace device may be divided in four zones. In the first two zones, the iron ore mixture is dried e.g. by hot air blown in from below a pellet bed. Subsequently leaving the first two zones, the iron ore mixture may be transferred through a tempered pre-heat zone and through a pre-heat zone. These two last zones serve to increase the temperature of the iron ore mixture prior to entering e.g. a rotary kiln unit.

Alternatively, the iron ore oxide material production unit comprises a process gas feeding line configured to feed oxygen deficient process gas to the grate furnace device for drying and/or pre-heating and/or heating the iron ore mixture.

Alternatively, subsequently leaving the grate furnace device, the iron ore mixture being subjected to oxygen-enriched process gas e.g. fed into the rotary kiln unit for oxidization of the iron ore mixture into the iron ore oxide material holding said thermal energy.

In such way is achieved an efficient way to save energy by delaying the oxidation during the drying and/or pre-heating and/or heating of the iron ore oxide material and subsequently enrichment of oxygen during the oxidization provided by the iron ore oxide material production unit.

In such way is achieved a time saving manufacturing thermal process at the same time as the exhaust gas generated by the manufacturing thermal process will be decreased (such as nitrogen).

Alternatively, for providing an efficient oxidation and/or sintering of iron ore in processed in an indurating apparatus, such as a straight grate induration furnace (entire induration process performed in one), a grate-kiln (pre-heater/kiln/cooler) apparatus, steel belt plant etc. for producing the iron ore oxide material, an oxygen-enriched process gas is fed into the indurating apparatus.

In such way, the oxidation rate of the oxidization of the iron ore is increased in the indurating apparatus.

Alternatively, the iron ore oxide material production unit comprises a pelletizing plant configured for production of iron ore oxide material holding thermal energy.

Alternatively, the process for producing steel and steel production configuration comprises an electrolysis unit, which also produces oxygen used by the iron ore oxide material production unit for manufacturing of the iron ore oxide material.

Alternatively, the carburizing zone corresponds with a separate (insulated) carburizing zone configured for avoiding mixing the carbon containing substance with the reducing agent.

Alternatively, the carburizing zone constitutes a carburizing volume of the interior of the direct reduction facility, which carburizing volume is configured for reduction of the iron ore oxide material and configured for carburizing the iron ore oxide material subject to reduction, and mixing the carbon containing substance with the reducing agent.

Alternatively, the carburizing zone is configured to provide a separate (insulated) carburizing chemical reaction between hydrogen H2 and Carbon dioxide CO2 for achieving carburizing of the direct reduced iron ore material, wherein the direct reduced iron ore material acting as catalyst to produce a carbon containing material added to the direct reduced iron ore material.

Alternatively, the carburizing zone is configured to provide an un-insulated carburizing chemical reaction between hydrogen H2 and Carbon dioxide CO2 for achieving carburizing of the iron ore oxide material subject to reduction, wherein the iron ore oxide material subject to reduction, acting as catalyst to produce a carbon containing material added to the iron ore oxide material subject to reduction.

CO₂ + 2H₂ → C + 2 H₂O

CO₂ + H₂ → CO + H₂O

CO + H₂ → C + H₂O

Alternatively, the carburizing zone is configured with a carburizing zone-hydrogen inlet device and/or a carburizing zone-carbon containing substance inlet device.

Alternatively, the carburizing zone-hydrogen inlet device is configured for feeding hydrogen H2 into the carburizing zone.

Alternatively, the carburizing zone-carbon containing substance inlet device is configured for feeding CO2, CH4 or other carbon containing compound into the carburizing zone.

Alternatively, the carburizing zone is configured as a separate carburizing reactor that is configured with a first reactor fluid inlet device for feeding the first reactor fluid into the separate carburizing reactor and a second reactor fluid inlet device for feeding the second reactor fluid into the separate carburizing reactor, for providing a chemical reaction between said first and second reactor fluid.

Alternatively, the first reactor fluid inlet device and/or the second reactor fluid inlet device comprises a regulating device for regulating the properties of the first and/or second reactor fluid.

Alternatively, the regulating device is electrically coupled to a control circuitry adapted to regulate the properties of the first and/or second reactor fluid, such as concentration, temperature, flow rate, pressure, etc.

Alternatively, the direct reduced iron ore material and/or the iron ore oxide material subject to reduction acting as catalyst to produce a carbon containing material, such as methane CH4 and/or Carbon monoxide CO and/or solid Carbon C and/or other carbon compound, which carburizes the direct reduced iron ore material and/or the iron ore oxide material subject to reduction.

Alternatively, the carburizing zone is configured for introducing carbon into the direct reduced iron ore material and/or into the iron ore oxide material subject to reduction, for providing the intermediate product to be discharged from the direct reduction facility.

Alternatively, the carburizing zone is configured as said separate carburizing reactor configured for avoiding mixing the carbon containing substance with the reducing agent.

Alternatively, the separate carburizing reactor is configured for a chemical reaction between the first reactor fluid comprising a hydrogen content of 50% to 100% by volume and the second reactor fluid comprising Carbon dioxide CO2, wherein the direct reduced iron ore material acts as catalyst to produce CH4 and/or Carbon monoxide CO and/or solid Carbon C and/or other carbon compound, which carburizes the direct reduced iron ore material.

Alternatively, the first reactor fluid comprises pure hydrogen.

Alternatively, the second reactor fluid comprises pure Carbon dioxide CO2.

Alternatively, the hydrogen content of 80%-100% by volume is renewable hydrogen.

Alternatively, the hydrogen comprises fossil hydrogen content produced by carbon capture and/or low-carbon hydrogen.

Alternatively, the hydrogen is produced by electrolysis of water using electricity from renewable sources and/or is produced by reforming of biogas and/or by biochemical conversion of biomass.

Alternatively, the hydrogen is produced by hydrogen-derived synthetic fuels as a variety of gaseous and liquid fuels based on hydrogen and carbon.

Alternatively, the chemical reaction between said first and second reactor fluid is controlled by the control circuitry for providing a carburizing chemical reaction between hydrogen H2 and Carbon dioxide CO2 for providing carburizing of the direct reduced iron ore material within the separate carburizing reactor, wherein the direct reduced iron ore material acts as catalyst to produce CH4 and/or Carbon monoxide and/or solid Carbon and/or other carbon compound, acting to carburize the direct reduced iron ore material.

CO₂(g) + 2 H₂(g) → C(s) + 2 H₂O(g)

CO₂ + H₂ → CO + H₂O

CO + H₂ → C + H₂O

Alternatively, the separate carburizing reactor is configured for introducing carbon into the direct reduced iron ore material for providing the intermediate product to be discharged from the separate carburizing reactor.

Alternatively, the carbon containing substance comprises Carbon dioxide CO2 and/or Carbon monoxide CO and/or solid carbon C is fed into the carburizing zone for providing carburizing of the direct reduced iron ore material.

Alternatively, the carburizing zone is configured for providing a Sabatier and/or Fischer-Tropsch reaction or other possible reaction wherein the iron ore oxide material acts as catalyst to produce CH4 and/or other carbon compound and/or Carbon monoxide and/or Carbon acting as a carburizing agent for providing the direct reduced iron ore material.

This or at least one of said objects has been achieved by a steel production configuration provided for production of steel and for a process for producing steel, the steel production configuration being disclosed in appended claims 21 and 22.

Alternatively, the control circuitry is configured to operate charging of the iron ore oxide material into the direct reduction facility; wherein the control circuitry is configured to control the temperature of the iron ore oxide material transferred into the direct reduction facility and/or to control the interior gas pressure in the direct reduction facility and/or the reducing agent temperature and/or the reducing agent gas pressure of the introduced reducing agent.

This or at least one of said objects has been achieved by a data program adapted to execute the process herein disclosed, wherein the data program comprises a program code readable on a computer of the control circuitry for providing the process.

Alternatively, the carbon containing substance is fed into the carburizing zone together with the reducing agent.

This or at least one of said objects has been achieved by a method for providing the process, which method comprises the steps of; producing the iron ore oxide material; charging the iron ore oxide material, holding thermal energy provided by the iron ore oxide material provider device, from the iron ore oxide material provider device into the direct reduction facility; introducing the reducing agent into the direct reduction facility; reducing said iron ore oxide material into an intermediate product by utilizing said thermal energy of the iron ore oxide material to heat or further heat the introduced reducing agent for achieving a chemical reaction; and discharging the intermediate product from the direct reduction facility; and/or transferring the intermediate product to the steel making industry. Alternatively, the method comprises the further step of; signalling a parameter value signal from a detector member of the direct reduction facility to the control circuitry; and commanding a transferring device of the iron ore oxide material provider device to stop charging the iron ore oxide material, holding thermal energy, into the direct reduction facility.

Alternatively, the method comprises the step of commanding the direct reduction facility to stop the chemical reaction between the iron ore oxide material and the reducing agent if the parameter value signal is an interruption value;

Alternatively, the method comprises the further step of signalling a stop signal to an operator if the parameter value signal corresponds with the interruption value.

Alternatively, the electric energy necessary for the electrolysis may be re-generative energy, partly or fully, which is derived from hydropower and/or wind power and/or photovoltaic or other re-generative energy forms.

Alternatively, the reducing agent (hydrogen) is produced by electrolysis of water. Suitably, the electric energy necessary for the electrolysis is re-generative energy, which is derived from hydropower and/or wind power and/or photovoltaic or other re-generative energy forms.

Alternatively, the present disclosure relates to a process for the production of a carburized intermediate product comprising the steps of; reducing iron ore oxide material by means of a reducing agent, such as hydrogen, in a direct reduction facility to provide a reduced iron material, transferring the reduced iron material to a carburization zone, and carburizing the reduced iron material in the carburization zone using a carbon containing substance, such as carburizing gas and/or solid carbon, to provide the carburized intermediate product.

Alternatively, the present invention relates to a process for producing a carburized intermediate product (iron ore oxide material) comprising the steps of; directly reducing the iron ore oxide material by means of a reducing agent (such a hydrogen) having a hydrogen content of at least 80% by volume; wherein a carbon content in the intermediate product then is increased by means of a carburizing gas, and thereafter used carburizing gas is at least partly taken off while largely avoiding mixing the carburizing gas with the reducing agent.

Alternatively, the technical feature regarding pre-heating the iron ore oxide material before transferring the iron ore oxide material into the direct reduction facility, combined with a further technical feature of introducing oxygen, produced by the electrolysis unit, to the iron ore oxide material production unit for manufacturing the iron ore oxide material, provides a sustainable, comprehensive production concept for efficient production of steel, wherein re-generative energy can be used in industrial scale, and meeting fluctuations in production of re-generative energy.

Alternatively, the carbon production unit and/or the Sabatier reactor and/or the Fischer-Tropsch apparatus and/or the carbon production unit and/or the carbon capture and utilization unit and/or the biogas production unit and/or the synthetic gas production unit is/are incorporated as integrated unit/s of the pre-heating apparatus and/or the iron ore oxide material production unit and/or the direct reduction facility and/or the electrolysis unit and/or the steel making industry are integrated parts of an integrated steel production configuration for production of steel.

Alternatively, the electric energy necessary for the electrolysis is energy derived from nuclear power, partly or fully.

The wording reducing agent may be replaced by the wording reduction agent.

The reducing agent may be a gas containing a hydrogen content of 50% to 100% by volume. The word "process" may be changed to "method" or vice versa.

An upper interior portion of the reduction facility is configured to receive the iron ore oxide material holding thermal energy to be charged into the reduction facility Alternatively, an iron ore oxide inlet of the reduction facility is configured to transfer the iron ore oxide material holding thermal energy from the iron ore oxide material provider device via an iron ore oxide transfer device configured charge the iron ore oxide material holding thermal energy into the direct reduction facility.

A first sensor device may be arranged at an iron ore oxide material discharge outlet of the iron ore oxide material production unit and/or at an iron ore oxide material charging inlet. The wording "heat treatment" may be changed to the wording "heat hardening".

The wording "iron ore" may mean a metal ore or iron ore comprising other elements and/or minerals than iron, such as natural alloy elements or minerals of less quantity not constituting alloys.

The wording "iron ore" may mean iron ore including introduced additives such as quartzite, silicon, etc.

The wording "iron ore" may be replaced by the wording "metal ore".

The wording "reduction facility" may be changed to "direct reduction facility".

The control circuitry may comprise the first and/or second and/or third and/or fourth and/or fifth and/or sixth control circuitry.

Alternatively, the heat treatment comprises heat hardening.

Alternatively, the heat treatment comprises a heat hardening process, which heat hardening process involves sintering of the reduced iron ore material and/or shrinkage of the reduced iron ore material and/or densification of the reduced iron ore material.

Alternatively, the reduction facility is configured to provide, and/or is coupled to a heat treatment apparatus for providing, a heat treatment process of the iron ore oxide material (preferably below about 700 °C, or below about 650 °C - 750 °C or below about 600 °C - 750 °C) before reduction of the iron ore oxide material.

These or at least one of said objects has been achieved by an unclaimed method of reduction of an iron ore oxide material holding thermal energy into a reduced iron ore material; wherein the iron ore oxide material holding thermal energy is provided by means of the iron ore oxide material provider device and is charged via an iron ore oxide material charging device into an upper interior portion of a reduction facility of a metal material production configuration; a sixth control circuitry is electrically coupled to a reducing agent temperature adjusting device configured to adjust the temperature of a hydrogen containing reducing agent to be introduced into an intermediate portion and/or a lower interior portion of the reduction facility via a reducing agent inlet device; the method is characterized by the steps of; reducing the iron ore oxide material in the upper interior portion by utilizing the thermal energy of the iron ore oxide material to heat or further heat the introduced hydrogen containing reducing agent for providing a chemical reaction between the hydrogen containing reducing agent and the iron ore oxide material; providing a heat treatment process for heat treatment of the iron ore oxide material subject to reduction and/or the reduced iron ore material before being discharged from the lower interior portion; and controlling the temperature of the introduced hydrogen containing reducing agent for adjustment of the chemical reaction and/or the heat treatment process for reaching at least one desired passivation parameter value of the reduced iron ore material

In such way is achieved that the chemical reactivity and/or high impetus of the hydrogen is maintained to a great extent. The chemical reactivity and/or high impetus being essential for providing an efficient reduction of the iron ore oxide material.

Alternatively, the sixth control circuitry is adapted for coarse setting of the thermal energy and is adapted for fine setting of the temperature of the introduced (pre-heated or cooled down) hydrogen containing reducing agent for achieving the at least one desired passivation parameter value.

In such way there is achieved efficient adjustment of the temperature for reduction of the iron ore oxide material at the same time as efficient adjustment of the temperature for heat treatment of the reduced iron ore material is achieved.

Alternatively, the intermediate interior portion and lower interior portion are configured for introduction of the pre-heated hydrogen containing reducing agent, which pre-heated hydrogen containing reducing agent is adapted to react with the iron ore oxide material holding the thermal energy.

Alternatively, the hydrogen containing reducing agent is introduced into the intermediate interior portion and into the lower interior portion.

Alternatively, a bottom section of the upper interior portion is configured for introduction of the pre-heated hydrogen containing reducing agent, which pre-heated hydrogen containing reducing agent is adapted to react with the iron ore oxide material holding the thermal energy.

Alternatively, the hydrogen containing reducing agent is introduced into the bottom section of the upper interior portion.

Alternatively, the direct reduction facility is configured for permitting the reduced iron ore material to descend into the lower interior portion and/or into the intermediate interior portion for providing the heat treatment process for heat treatment of the reduced iron ore material making use of additional thermal energy provided by the pre-heated hydrogen containing reducing agent.

Alternatively, the additional thermal energy is defined as thermal energy that is added to thermal energy of the iron ore oxide material holding thermal energy and/or as thermal energy that is added to the thermal energy of the reduced iron ore material descending through the intermediate interior portion and/or the lower interior portion.

Alternatively, a control circuit, electrically coupled to a reducing agent temperature adjusting device configured to adjust the temperature of the hydrogen containing reducing agent, is adapted for controlling the temperature of the introduced hydrogen containing reducing agent for reaching at least one desired passivation parameter value of the reduced iron ore material.

In such way is achieved that the intermediate product (such as sponge iron, e.g. pellets, briquettes etc.) is prevented from having a tendency to revert back to an oxide state when exposed to natural environments and reduces the risk for spontaneous ignition process.

Alternatively, the sixth control circuitry is adapted to control the interior gas pressure in the direct reduction facility and/or the hydrogen temperature and/or hydrogen gas pressure of introduced hydrogen gas used as reducing agent.

Alternatively, a reducing agent inlet device configured to introduce the reducing agent into the direct reduction facility.

Alternatively, the sixth control circuitry is electrically coupled to a reducing agent temperature adjusting device configured to adjust the temperature of the reducing agent to be introduced into an intermediate portion and/or a lower interior portion of the reduction facility via the reducing agent inlet device of the direct reduction facility.

Alternatively, an iron ore oxide material charging transfer unit of the metal material production configuration is configured to charge the iron ore oxide material into an upper interior portion of the direct reduction facility.

Alternatively, an iron ore oxide material charging device is configured to charge the iron ore oxide material into the upper interior portion of a reduction facility.

Alternatively, a discharge transport unit is coupled to an opening of the lower interior portion of the direct reduction facility, which opening is configured for discharging the direct reduced iron ore material from the direct reduction facility.

Alternatively, the direct reduction facility further comprises a waste reduction fluid outlet device configured for discharging waste reduction fluid, such as water steam and hydrogen gas, from the direct reduction facility.

Alternatively, the reducing agent may be pre-heated before introduction into the direct reduction facility, wherein the introduced reducing agent may be pre-heated to a temperature (e.g. in some cases called high temperature) of about 200 to about 500 °C or about 300 °C to about 600 °C or about 400 °C to about 700 °C or about 500 °C to about 800 °C or about 600 °C to about 900 °C or about 700 °C to about 1000 °C or about 800 °C to about 1100 °C or about 900 °C to about 1200 °C or higher.

Alternatively, the temperature (e.g. in some cases called high temperature) of the iron ore oxide material to be charged into the direct reduction facility may have a temperature of about 50°C to about 350 °C or about 100°C to about 400 °C or about 200 to about 500 °C or about 300 °C to about 600 °C or about 400 °C to about 700 °C or about 500 °C to about 800 °C or about 600 °C to about 900 °C or about 700 °C to about 1000 °C or about 800 °C to about 1100 °C or about 900 °C to about 1200 °C or higher.

For example, the reducing agent having the temperature (e.g. in some cases called high temperature) (e.g. any temperature between the range about 600-1000°C or about 500-900°C or about 700-1100°C) to be introduced and/or being introduced into the direct reduction facility meets the direct reduced iron material and/or the iron ore oxide material subject to direct reduction, which descends through the direct reduction facility, for decreasing the cooling rate of the direct reduced iron material and/or the iron ore oxide material subject to direct reduction descending through the direct reduction facility.

Alternatively, the temperature (e.g. in some cases called high temperature) (e.g. any temperature between the range about 600 °C to about 900 °C or about 700 °C to about 1000 °C or about 800 °C to about 1100 °C or about 900 °C to about 1200 °C or higher) of the iron ore oxide material to be charged and/or being charged into the direct reduction facility meets the reducing agent, the majority of which has been used for the chemical reaction, in the upper interior portion of the reduction facility for partly further providing said chemical reaction, meanwhile the iron ore oxide material subject to direct reduction and/or the direct reduced iron material farther down in the direct reduction facility preferably is subject to said heat treatment process, whereby the top gas to be drawn from the reduction facility and formed by the chemical reaction in the upper interior portion will be very hot and comprises high temperature water steam to be fed to a high temperature electrolysis unit.

Alternatively, the reduction potential of the hydrogen of the reducing agent is lower than that of the hydrogen of the reducing agent introduced farther down in the reduction facility.

Alternatively, a temperature (e.g. any temperature between the range about 50°C to about 350 °C or about 100°C to about 400 °C) of the iron ore oxide material to be charged and/or being charged into the direct reduction facility meets the reducing agent, the majority of which has been used for the chemical reaction, in the upper interior portion of the reduction facility for partly further providing said chemical reaction to at least some extent by further heating the introduced reducing agent for achieving said chemical reaction between the iron ore oxide material and the reducing agent.

Thereby is achieved an energy saving process for direct reduction of iron ore oxide material by means of hydrogen and/or hydrogen containing reducing agent, the hydrogen of which preferably may be temporarily stored in a gas storing tank and/or in a storage facility of a geological repository and/or in other buffer facilities, so that hydrogen of the reducing agent is available and can be used when re-generative energy is not sufficiently produced, i.e. for meeting fluctuations in production of re-generatively generated electric energy. Alternatively, the temperature of the iron ore oxide material to be charged into the direct reduction facility may be lower than the temperature of the reducing agent to be introduced and/or being introduced into the direct reduction facility.

The present invention relates to a process for producing steel, whereby iron ore oxide material is reduced with a reducing agent, such as a hydrogen containing reducing agent, in a direct reduction facility and the so-obtained intermediate product of direct reduced metal material and eventually accompanying substances is/are metallurgically processed; the reducing agent is produced by electrolysis of water by means of an electrolysis unit, such as a high temperature electrolysis unit, the electric energy necessary for the electrolysis may be re-generative energy which is derived from hydropower and/or wind power and/or photovoltaic and/or other re-generative energy forms and/or a nuclear plant, such as a plant comprising a small modular reactor SMR, wherein produced reduced iron material, such as sponge iron, so called an intermediate product, is produced independently of the current demand, if sufficient reducing agent is available.

The iron ore oxide material is transferred from an iron ore oxide material provider device, such as a pelletizing plant and/or a pre-heating apparatus, into the direct reduction facility and holds thermal energy that originates from the iron ore oxide material provider device. The direct reduction facility is configured for introduction of the reducing agent adapted to react with the iron ore oxide material holding thermal energy, thus reducing the iron ore oxide material into the intermediate product by utilizing the thermal energy of the iron ore oxide material to further heat the introduced reducing agent for achieving a chemical reaction between the iron ore oxide material and the reducing agent, for providing an energy saving and time saving process for producing steel using re-generative energy on industrial scale, and for saving re-generative energy for meeting fluctuations in production of re-generatively generated electric energy.

Alternatively, the reducing agent is produced independently of the current demand, if sufficient generatively generated electric energy is available, which produced reducing agent is temporary stored for meeting said fluctuations.

The hydrogen of the hydrogen containing reducing agent and/or the hydrogen containing reducing agent may be stored in a gas storing tank and/or in a storage facility of a geological repository and/or in other buffer facilities.

The gas storing tank or the storage facility in geological repository may be located between the electrolysis unit and/or the high temperature electrolysis unit and the direct reduction facility.

The hydrogen and/or the hydrogen containing reducing agent is configured to be fed and/transferred to the direct reduction facility to be uses as reducing agent in the event of fluctuations, for example during summer season.

The re-generative electricity may be produced by the wind energy plants, coupled to and used by the electrolysis unit and/or the high temperature electrolysis unit, during spring and autumn seasons. The hydrogen of the hydrogen containing reducing agent and/or the hydrogen containing reducing agent produced by the re-generative energy by this means, during spring and autumn seasons, preferably being temporary stored in the gas storing tank and/or in the storage facility of the geological repository.

In such way is achieved efficient storage of re-generative energy (in the form of hydrogen and/or hydrogen containing reducing agent), which later on can be used by the direct reduction facility as a reducing agent during the summer season when the production of re-generative electricity is low, i.e. when sufficient re-generatively generated electric energy is not available.

Alternatively, the reducing agent may be pre-heated to some extent before being introduced into the direct reduction facility.

Alternatively, the temperature of the iron ore oxide material to be charged into the direct reduction facility may be higher than the temperature of the reducing agent to be introduced and/or being introduced into the direct reduction facility.

Alternatively, the temperature of the iron ore oxide material to be charged into the direct reduction facility may be lower than the temperature of the reducing agent to be introduced and/or being introduced into the direct reduction facility.

The temperature of the iron ore oxide material to be charged into the direct reduction facility may have a temperature of about 50°C to about 350 °C or about 100°C to about 400 °C or about 200 to about 500 °C or about 300 °C to about 600 °C or about 400 °C to about 700 °C or about 500 °C to about 800 °C or about 600 °C to about 900 °C or about 700 °C to about 1000 °C or about 800 °C to about 1100 °C or about 900 °C to about 1200 °C or higher.

The reducing agent may be pre-heated before introduction into the direct reduction facility, wherein the introduced reducing agent may be pre-heated to a temperature of about 200 to about 500 °C or about 300 °C to about 600 °C or about 400 °C to about 700 °C or about 500 °C to about 800 °C or about 600 °C to about 900 °C or about 700 °C to about 1000 °C or about 800 °C to about 1100 °C or about 900 °C to about 1200 °C or higher.

Alternatively, by introducing a relatively warm reducing agent (e.g. about 600 °C to 900 °C) into the direct reduction facility it is achieved that the iron ore oxide material-, holding thermal energy, reaching the intermediate portion and/or the lower interior portion of the direct reduction facility and being subjected for direct reduction and/or the heat treatment, -does not cool down rapidly in the direct reduction facility.

Thereby the heat treatment can be performed efficiently. The passivated and reduced iron material will have a compact and dense structure for achieving an intermediate product that is resistant to re-oxidation.

The intermediate product may be defined as a small, round, pear, droplet, globule, bead, spheroid or oval shaped body of passivated reduced iron ore material having a compact and dense structure for producing an intermediate product that is resistant to re-oxidation.

Alternatively, the direct reduction facility is configured for permitting the reduced iron ore material to descend into the lower interior portion and/or into the intermediate interior portion for providing the heat treatment process for heat treatment of the reduced iron ore material making use of the relatively warm reducing agent providing thermal energy for avoiding rapid cooling the iron ore material subject to direct reduction and/or heat treatment.

Alternatively, a control circuitry is coupled to an iron ore oxide pre-heating plant and/or heating device and is configured to control the temperature of the iron ore oxide material to be charged such that the iron ore oxide material subject to reduction and/or heat treatment will strive toward a pre-determined temperature of about 200-600 °C, preferably about 300-500 °C, during a pre-determined time period sufficient long to enable the heat treatment process providing said desired passivation parameter value of the reduced iron ore material, in turn providing the intermediate product resistant to re-oxidation.

Alternatively, the pre-determined temperature is about 400-800 °C, preferably about 500-700 °C.

Alternatively, the pre-determined temperature is about 600-1000 °C, preferably about 700-900 °C.

Alternatively, the control circuitry is further coupled to a reducing agent pre-heating device configured to pre-heat the reducing agent before introduction into the direct reduction facility and is configured to control the temperature of the reducing agent such that the iron ore oxide material subject to reduction and/or heat treatment will strive toward a pre-determined temperature of the of about 200-600 °C, preferably about 300-500 °C, during a pre-determined time period sufficient long to enable the heat treatment process providing said desired passivation parameter value of the reduced iron ore material, in turn providing the intermediate product resistant to re-oxidation.

Alternatively, the control circuitry may be adapted to control the temperature of the iron ore oxide material holding thermal energy toward the pre-determined temperature for providing the heat treatment process in the direct reduction facility for heat treatment of the iron ore oxide material subject to reduction during a pre-determined time period, thereby reaching a desired passivation parameter value regarding porosity and/or a sponge iron dimension and/or weight per volume of produced sponge iron and/or iron ore particle structure and/or sample cut evenness and/or shrinkage and/or sintering and/or Cold Crushing Strength etc.

Alternatively, the desired passivation parameter value may defined as a value of the rate and/or degree and/or grade and/or quota and/or proportion of re-oxidation of the intermediate product (sponge iron and/or reduced iron ore material).

Alternatively, the desired passivation parameter value regarding porosity, the definition of which can be expressed as the ratio of pore volume of the produced sponge iron to its total volume. The sponge iron dimension may be expressed as the average diameter of the generally produced sponge iron agglomerate. The weight per volume may be defined as the measure of the iron concentration of the generally produced sponge iron agglomerate. The iron ore particle structure may be defined as the final microstructure and distribution of dense and porous regions of the produced sponge iron agglomerate. The sample cut evenness may define the density of the produced sponge iron agglomerate.

Alternatively, the heat treatment process, provided by means of the control circuitry during a pre-determined time period, thereby reaching the desired passivation parameter value of the produced sponge iron, produces a sponge iron or intermediate product that has a dense structure and/or high uniformity of eventual porosity in specific regions (such as central region of the sponge iron agglomerate) and/or high uniform chemical composition for cost effective and energy saving production in subsequent steel production in steel plants and that is resistant to re-oxidation and that is produced with low Carbon dioxide emissions.

The present disclosure or disclosures may not be restricted to the examples described above, but many possibilities to modifications, or combinations of the described examples thereof should be apparent to a person with ordinary skill in the art without departing from the basic idea as defined in the appended claims.

### BRIEF DESCRIPTION OF THE DRAWING

Hereinafter, exemplary embodiments of the present invention will be described with reference to the accompanying drawings, wherein for the sake of clarity and understanding of the invention some details of no importance may be deleted from the drawings.
Fig. 1 illustrates a steel production configuration and process using re-generative energy according to a first example;
Fig. 2 illustrates a steel production configuration and process using re-generative energy according to a second example;
Figs. 3a to 3d illustrate a steel production configuration and process according to exemplary embodiments using e.g. re-generative energy and using carbon containing material for producing the intermediate product reducing the emission of carbon dioxide;
Figs. 4a to 4d illustrate a steel production configuration and process according to exemplary embodiments comprising a control circuitry adapted to provide desired carburizing parameter values of the direct reduced iron ore material/the iron ore oxide material subject to reduction for optimizing carburizing and present demand;
Fig. 4e illustrates a pre-heating apparatus of a steel production configuration according to one aspect;
Fig. 5 illustrates a steel production configuration and process according to an exemplary embodiment;
Fig. 6 illustrates an iron ore oxide material production unit of a steel production configuration according to a fifth example;
Fig. 7 illustrates a steel production configuration and process using re-generative energy according to a sixth example;
Fig. 8 illustrates a steel production configuration and process using re-generative energy according to a seventh example;
Fig. 9 illustrates a direct reduction facility of a steel production configuration and process according to an eight example;
Fig. 10 illustrates a flowchart showing an exemplary method of reduction of iron ore oxide material of a steel production configuration and process;
Fig. 11 illustrates a flowchart showing an exemplary method of reduction of iron ore oxide material of a steel production configuration and process;
Fig. 12 illustrates a control circuitry of a steel production configuration and process according to a further example;
Fig. 13 illustrates an integrated steel production configuration according to one aspect;
Figs. 14a-14d illustrate exemplary iron ore oxide material production units; and
Figs. 15a-15c illustrate exemplary steel production configurations.

### DETAILED DESCRIPTION

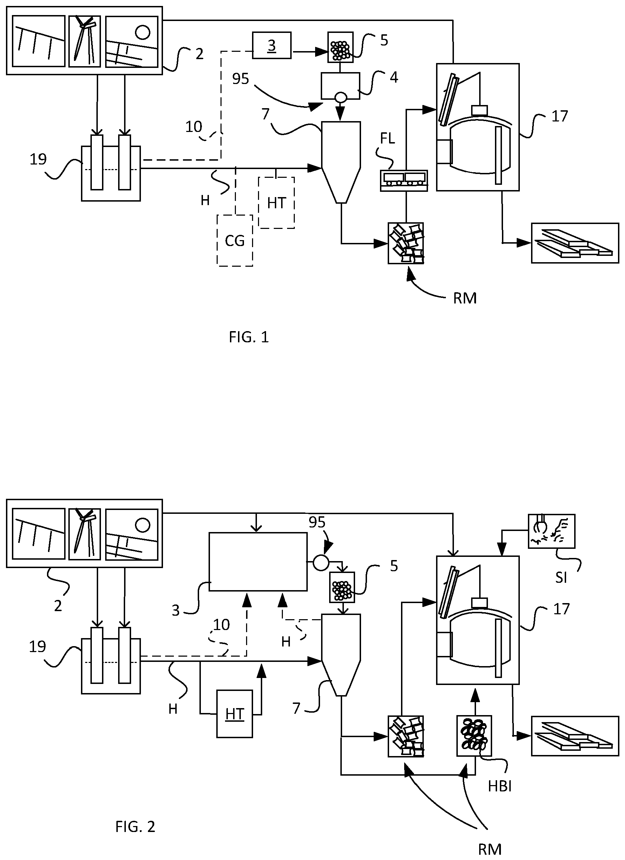

Fig. 1 illustrates a steel production configuration and process using re-generative energy according to a first example. The process for producing steel comprises process steps where iron ore oxide material 5 (such as iron ore pellets) is reduced with hydrogen H in a direct reduction facility 7 and the so-obtained intermediate product RM (such as sponge iron) of direct reduced iron ore material and possible accompanying substances is/are metallurgically processed by a steel producer 17. The hydrogen H is produced by electrolysis of water by means of an electrolysis unit 19. The electric energy necessary for the electrolysis is re-generative energy, which is derived from hydropower and/or wind power and/or photovoltaic or other re-generative energy supply 2. The hydrogen H and/or the intermediate product RM is/are produced independently of the current demand, if sufficient re-generatively generated electric energy is available. The iron ore oxide material 5 is transferred from a pre-heating apparatus 4 into the direct reduction facility 7 and holds thermal energy that originates from the pre-heating apparatus 4. The pre-heating apparatus 4 is configured for pre-heating the iron ore oxide material 5 before transferring the iron ore oxide material 5 into the direct reduction facility 7 by means of a transferring device 95 from the pre-heating apparatus 4.

Alternatively, the pre-heating apparatus 4 is configured for preheating the iron ore oxide material ready to be transferred into direct reduction facility by means of, to some extent, recovered heat from the direct reduction facility and/or from an iron ore oxide material production unit 3 configured for manufacturing the iron ore oxide material 5.

Alternatively, the technical feature regarding pre-heating the iron ore oxide material 5 before transferring the iron ore oxide material 5 into the direct reduction facility 7, combined with a further technical feature of introducing oxygen 10, produced by the electrolysis unit 19 (also producing the hydrogen H), to the iron ore oxide material production unit 3 for manufacturing the iron ore oxide material 5, provides a sustainable, comprehensive production concept for efficient production of steel, wherein re-generative energy can be used in industrial scale, and meeting fluctuations in production of re-generative energy.

The direct reduction facility 7 is configured for introduction of the hydrogen H adapted to react with the iron ore oxide material 5 holding thermal energy provided by the pre-heating apparatus 4, thus reducing the iron ore oxide material 5 into the intermediate product RM by utilizing the thermal energy of the iron ore oxide material 5 to heat or further heat the introduced hydrogen H for achieving a chemical reaction between the iron ore oxide material 5 and the hydrogen H.

The hydrogen H and/or the intermediate product RM is/are always produced independently of the current demand, if sufficient re-generatively generated electric energy is available. The intermediate product RM that is not demanded is stored until demand/use, so that the re-generative energy that is saved therein is also stored.

Alternatively, during the reduction of the iron ore oxide material 5 into the intermediate product RM, a carbon- or hydrogen-containing gas may be added to the hydrogen H, in order to incorporate carbon into the intermediate product RM. At least so much carbon- or hydrogen-containing gas is added to the hydrogen H for the reduction, that the carbon content in the intermediate product is 0,0005 mass-% to 6,3 mass-%.

Alternatively, the carbon- or hydrogen-containing gas is methane or other carbon-containing gases from biogas production or from pyrolysis of renewable raw materials or synthetic gas from biomass.

Alternatively, the hydrogen H for the reduction has at least enough carbon-containing or hydrogen-containing gas added to it to make the carbon content in the intermediate product 1 mass-% to 3 mass-%.

Alternatively, the hydrogen H being composed of pure hydrogen gas and possibly a carbon-containing gas, and is introduced into the reduction process at a temperature of 450 °C to 1200 °C, which the reduction process uses the thermal energy from the charged iron ore oxide material holding the thermal energy from the pre-heating apparatus 4.

Alternatively, the reduction facility 7 is configured to produce a carbon-free intermediate product RM.

Alternatively, excess pressure in the reduction is between 0 bar and 15 bar.

Alternatively, the steel production configuration comprises an iron ore oxide material production unit 3, such as a pelletizing plant, configured for production of the iron ore oxide material 5.

Alternatively, the electric energy necessary for the electrolysis comprises electric energy, partly derived from nuclear power.

The electrolysis unit 19 is electrically coupled to the hydropower and/or wind power and/or photovoltaic or other re-generative energy supply 2 and is configured for providing said electrolysis of water that also produces oxygen 10, which oxygen 10 is used by the iron ore oxide material production unit 3 for manufacturing the iron ore oxide material 5.

The pre-heating apparatus 4 heats the iron ore oxide material 5 prior to be charged into the direct reduction facility 7.

In such way is provided that the iron ore oxide material 5 to be reduced in the direct reduction facility 7 holds thermal energy that originates from the pre-heating apparatus 4.

In such way is provided a process for producing steel using re-generative energy for steel production on an industrial scale and achieving a sustainable and comprehensive production concept, which is based on re-generative energy.

In such way is provided a process for producing steel meeting fluctuations in production of re-generative energy used in the process for producing steel, as the process for producing steel requires less re-generative energy for the reduction and is time saving.

This is due to the fact that the reduction potential of the hydrogen is maintained during the reduction of the iron ore oxide material into the intermediate product. The chemical reactivity of the hydrogen and/or high impetus of the hydrogen being maintained, which chemical reactivity is essential for providing an efficient chemical reaction with the iron ore oxide material 5.

This is due to the fact that utilization of the hydrogen as a reducing agent for the reduction of iron ore oxide material 5 is minimized for saving re-generative energy.

Alternatively, transport of the carbon-free intermediate product is performed by means of flammable storage transport train cars FL comprising thermo-cabinets, into which the carbon-free intermediate product RM is transferred from the direct reduction facility 7.

Fig. 2 illustrates a steel production configuration and process using re-generative energy according to a second example. The process for producing steel comprises process steps where iron ore oxide material 5 (such as iron ore pellets) is reduced with hydrogen H in a direct reduction facility 7 and the so-obtained intermediate product RM of direct reduced iron ore material and possible accompanying substances is/are metallurgically processed by a steel producer 17. Scrap iron SI may be added to the process for producing steel.

The hydrogen H is produced by electrolysis of water in an electrolysis unit 19. The electric energy necessary for the electrolysis is re-generative energy which is derived from hydropower and/or wind power and/or photovoltaic or other re-generative energy supply 2.

The direct reduction facility 7 is configured for introduction of the hydrogen H adapted to react with the iron ore oxide material 5 holding thermal energy, thus reducing the iron ore oxide material 5 into the intermediate product RM by utilizing the thermal energy of the iron ore oxide material 5 to heat or further heat the introduced hydrogen H for achieving a chemical reaction between the iron ore oxide material 5 and the hydrogen H. The hydrogen H and/or the intermediate product RM is/are always produced independently of the current demand, if sufficient re-generatively generated electric energy is available. The intermediate product RM that is not demanded is stored until demand/use, so that the re-generative energy that is saved therein is also stored.

An iron ore oxide material production unit 3 is configured to produce the iron ore oxide material 5 holding thermal energy. The iron ore oxide material 5 holding the thermal energy is transferred into the direct reduction facility 7 by means of a transferring device 95. The thermal energy originates from a manufacturing thermal process of the iron ore oxide material production unit 3 from the iron ore oxide material production unit 3.

The reduction potential of the hydrogen H is thus maintained and not destroyed during the reduction of the iron ore oxide material in the direct reduction facility 7 by using the thermal energy of the iron ore oxide material 5. The chemical reactivity of the hydrogen H and/or high impetus of the hydrogen H is in such way maintained, which chemical reactivity is essential for providing an efficient chemical reaction with the iron ore oxide material 5.

The used amount of hydrogen H, as a reducing agent, for the reduction of iron ore oxide material 5 is minimized for saving re-generative energy.

In order to compensate for temporary fluctuations in the production of re-generative energy, this energy is stored in the form of hydrogen if a surplus of it is available, at the same time as the process for producing steel according to the invention requires less re-generative energy for reduction and is time saving.

Alternatively, a hydrogen storage tank HT is provided between the electrolysis unit 19 and the direct reduction facility 7. Such a hydrogen storage tank configuration HT can then be used in the event of fluctuations in the production of re-generative energy. Temporary fluctuations can be predictable, for example, at night in solar installations, or unpredictable, e.g. fluctuations in wind intensity in wind energy plants.

Longer-term fluctuations that can occur among other things due to different seasons and may be factored into the energy storage in the form of HBI (hot briquetted iron), at the same time as the process for producing steel according to the invention requires less re-generative energy for the reduction and is time saving.

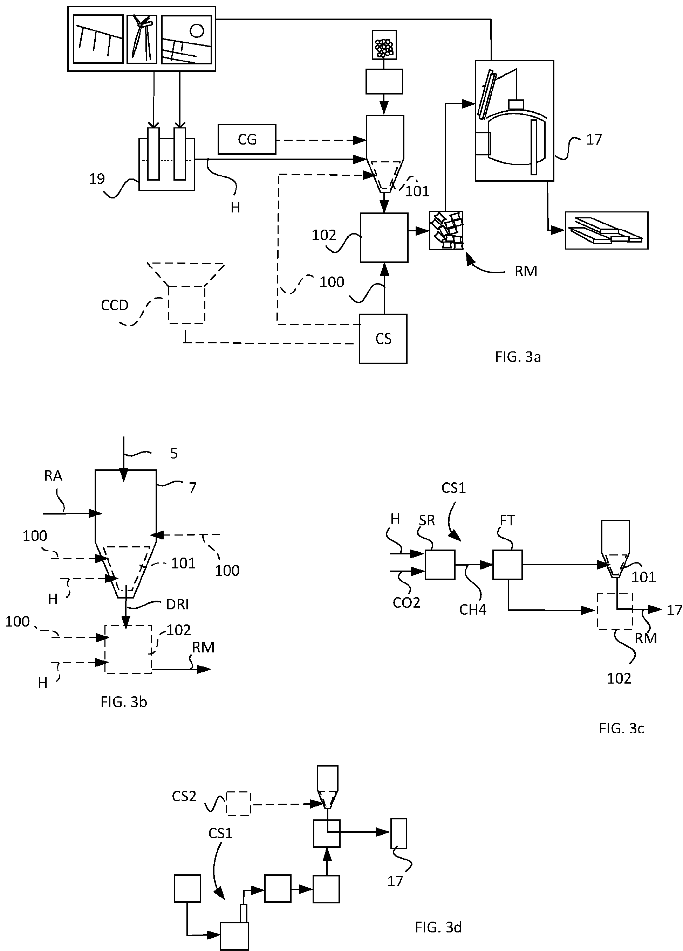

Figs. 3a to 3d illustrate a steel production configuration and process according to exemplary embodiments using re-generative energy and using carbon containing material for producing the intermediate product reducing the emission of carbon dioxide.

Fig. 3a illustrates a steel production configuration and process using re-generative energy according to a third example. A carbon containing substance 100 is extracted from a carbon source CS and is added to the iron ore oxide material during reduction and/or to the direct reduced iron ore material in a separate carburizing zone 101 of the direct reduction facility 7 and/or in a separate carburizing reactor 102 configured for providing the direct reduced iron ore material with carbon, managing the manufacture of a carbon containing intermediate product RM discharged from the direct reduction facility 7 and/or from the separate carburizing reactor 102.

Alternatively, the carbon containing substance 100 comprises a pure carbon element or being an element of molecules, such as methane, propane or other hydrocarbon or other molecules.

Alternatively, the carbon source CS may comprise a carbon capture and utilization unit (CCU).

Alternatively, the carbon capture and utilization unit (CCU) comprises a CO2 capturing device CCD configured for capturing of CO2 from the atmosphere, which captured CO2 is transferred to the separate carburizing zone 101 and/or the separate carburizing reactor 102.

Fig. 3b illustrates an exemplary steel production configuration and process.

The direct reduction facility 7 may be charged with high-temperature iron ore oxide material 5 of e.g. 800 to 1300 °C, wherein the thermal energy of the iron ore oxide material 5, to be charged into the direct reduction facility 7, is generated by an iron ore oxide material provider device (not shown).

Alternatively, the carburizing zone constitutes a separate (insulated) carburizing zone 101 configured for avoiding mixing a carbon containing substance 100, injected into the carburizing zone 101, with a reducing agent RA.

Alternatively, the carburizing zone constitutes a carburizing volume (not shown) of the interior of the direct reduction facility 7, which carburizing volume is configured for reduction of the iron ore oxide material 5 and configured for carburizing the iron ore oxide material 5 subject to reduction, and mixing the carbon containing substance 100 with the reducing agent RA.

Alternatively, the carburizing volume is configured to provide a carburizing chemical reaction between hydrogen H2 and Carbon dioxide CO2 for achieving carburizing of the iron ore oxide material 5 under reduction, wherein the iron ore oxide material 5 under reduction acts as catalyst to produce a carbon containing material added to the iron ore oxide material 5 under reduction.

Alternatively, the separate carburizing zone 101 is configured to provide a separate (insulated) carburizing chemical reaction between hydrogen H2 and Carbon dioxide CO2 for achieving carburizing of the direct reduced iron ore material 5, wherein the direct reduced iron ore material acting as catalyst to produce a carbon containing material added to the direct reduced iron ore material.

CO₂ + 2H₂ → C + 2 H₂O

CO₂ + H₂ → CO + H₂O

CO + H₂ → C + H₂O

Alternatively, the separate carburizing zone 101 is configured with a carburizing zone carbon containing substance inlet device (not shown) and/or a carburizing zone hydrogen inlet (not shown).

Alternatively, the carburizing zone carbon containing substance inlet is configured for feeding the carbon containing substance 100 (e.g. CO2, CH4) or other carbon containing compound into the separate carburizing zone 101.

Alternatively, the carburizing zone hydrogen inlet is configured for feeding hydrogen containing gas H (H2) into the separate carburizing zone 101.

Alternatively, the carburizing zone is configured as a separate carburizing reactor 102 that is configured with a first reactor fluid inlet (not shown) for feeding a first reactor fluid (carbon containing substance 100) into the separate carburizing reactor 102 and a second reactor fluid inlet (not shown) for feeding the second reactor fluid (hydrogen containing gas H) into the separate carburizing reactor 102, for providing a chemical reaction between said first and second reactor fluid.

Alternatively, the first reactor fluid inlet and/or the second reactor fluid inlet comprises a regulating device (not shown) for regulating the properties of the first and/or second reactor fluid.

Alternatively, the regulating device is electrically coupled to a control circuitry (not shown) adapted to regulate the properties of the first and/or second reactor fluid, such as concentration, temperature, flow rate, pressure, etc.

Alternatively, the direct reduced iron ore material and/or the iron ore oxide material subject to reduction acting as catalyst to produce a carbon containing material, such as methane CH4 and/or Carbon monoxide CO and/or solid Carbon C and/or other carbon compound, which carburizes the direct reduced iron ore material and/or the iron ore oxide material subject to reduction.

Alternatively, the separate carburizing reactor 102 is configured for a chemical reaction between the first reactor fluid comprising Carbon dioxide CO2 and the second reactor fluid comprising a hydrogen content of 80-100% by volume, wherein direct reduced iron ore material DRI fed into the separate carburizing reactor 102 acts as catalyst to produce CH4 and/or Carbon monoxide CO and/or solid Carbon C and/or other carbon compound, which carburizes the direct reduced iron ore material DRI.

Alternatively, the chemical reaction between said first and second reactor fluid is controlled by the control circuitry (not shown) for providing a carburizing chemical reaction between hydrogen H2 and Carbon dioxide CO2 for providing carburizing of the direct reduced iron ore material within the separate carburizing reactor 102, wherein the direct reduced iron ore material DRI acts as catalyst to produce CH4 and/or Carbon monoxide and/or solid Carbon and/or other carbon compound, acting to carburize the direct reduced iron ore material.

CO₂(g) + 2 H₂(g) → C(s) + 2 H₂O(g)

CO₂ + H₂ → CO + H₂O

CO + H₂ → C + H₂O

Fig. 3c illustrates an exemplary steel production configuration and process using re-generative energy. The carbon production unit comprises a Sabatier reactor SR producing methane CH4 from a reaction between Hydrogen H2 and Carbon Dioxide CO2, which methane CH4 being the carbon- or hydrogen-containing gas transferred to the separate carburizing zone 101 and/or to the separate carburizing reactor 102. The carbon production unit comprises a Fischer-Tropsch FT apparatus configured to produce a carbon containing product by reducing the methane CH4 produced by the Sabatier reactor, which carbon containing product is transferred to the separate carburizing zone 101 and/or to the separate carburizing reactor 102. The produced intermediate product RM is transferred to a steel making industry 17.

Fig. 3d illustrates an exemplary steel production configuration and process using re-generative energy. A biogas production unit CS2 is configured for production of carbon containing gas.

Alternatively, a steel production configuration and process using re-generative energy may comprise means for providing a so-called Bosch reaction within a portion of the direct reduction facility and/or separately, by adding hydrogen and carbon dioxide to the iron ore oxide material under reduction for carburizing the iron ore oxide material.

Alternatively, the Bosch reaction makes use of iron as a catalysator for the production of carbon by CO2(g) + 2 H2(g) → C(s) + 2 H2O(g) + thermal energy, which carbon may be produced in the separate carburizing zone of the direct reduction facility and/or in a separate carburizing reactor 102.

Alternatively, a carbon production unit CS1, configured for production of non-fossil produced carbon, is used by a cement industry plant manufacturing cement from mined calcium minerals.

Alternatively, the carbon production unit CS1 of the cement industry plant comprises a cement kiln (not shown) configured to capture Carbon Dioxide CO2 emitted from cement kiln during the production of cement, which Carbon Dioxide CO2 is used for carburizing the iron ore oxide material under reduction.

Alternatively, the carbon production unit and/or the Sabatier reactor and/or the Fischer-Tropsch apparatus and/or the carbon production unit and/or the carbon capture and utilization unit and/or the biogas production unit and/or the synthetic gas production unit is/are incorporated as integrated unit/s of the pre-heating apparatus and/or the iron ore oxide material production unit and/or the direct reduction facility and/or the electrolysis unit and/or the steel making industry 17.

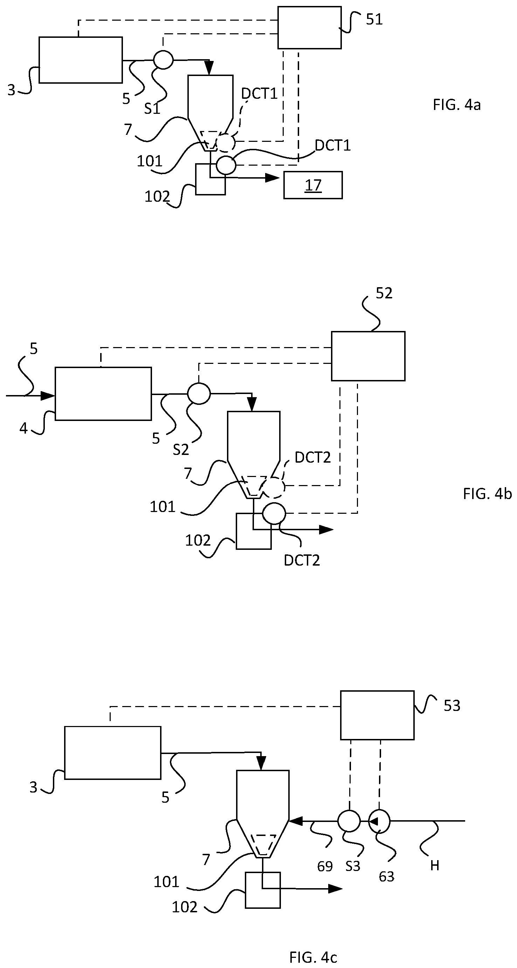

Figs. 4a to 4d illustrate a steel production configuration and process according to exemplary embodiments comprising a control circuitry coupled to an iron ore material production unit 3 and adapted to provide desired carburizing parameter values of the direct reduced iron ore material and/or the iron ore oxide material subject to reduction for optimizing carburizing of the direct reduced iron ore material and current demand from a steel production industry 17.

Fig. 4a illustrates a process using a first control circuitry 51 adapted to control the iron ore oxide material temperature of the iron ore oxide material 5 fed from the iron ore oxide material production unit 3 into the direct reduction facility 7 and/or to control the interior gas pressure (not shown) in the direct reduction facility 7 and/or the hydrogen temperature and/or hydrogen gas pressure of introduced hydrogen (not shown) used as reducing agent.

The first control circuitry 51 may be adapted to control the iron ore oxide material temperature of the iron ore oxide material 5 transferred into the direct reduction facility 7 by controlling the iron ore oxide material production unit 3 to discharge the iron ore oxide material 5 from the iron ore oxide material production unit 3 at a specific temperature, which specific temperature has a first temperature value that is determined from a desired carburizing parameter value of the direct reduced iron ore material ready for carburizing. A first detector member DCT1 of a carburizing reactor 102 and/or of a carburizing zone 101 is electrically coupled to the first control circuitry 51.

Alternatively, a first sensor device S1 is arranged at an iron ore oxide material discharge outlet (not shown) of the iron ore oxide material production unit 3 and/or at an iron ore oxide material charging inlet (not shown) of the direct reduction facility 7, which first sensor device S1 is coupled to the first control circuitry 51.

Alternatively, the steel and/or sponge iron process for the production of carburized sponge iron comprises the steps of; reducing the iron ore oxide material by means of the reducing agent, such as the hydrogen introduced into the direct reduction facility 7 to provide the direct reduced iron ore material, transferring the direct reduced iron material to a carburization zone 101, and carburizing the reduced iron ore material in the carburization zone 101 using a carbon containing substance, such as carburizing gas and/or solid carbon and/or the introduced hydrogen per se, to provide carburized sponge iron or the intermediate product.

Alternatively, the first sensor device S1 is configured to detect said first temperature value.

Alternatively, the first control circuitry 51 is configured to control the iron ore oxide material production unit 3 to discharge the iron ore oxide material 5 at said first temperature value that is determined from the desired carburizing parameter value of the direct reduced iron ore material ready for carburizing, wherein the first control circuitry 51 takes into account the desired carburizing parameter value when determining said first temperature value of the iron ore oxide material 5 to be charged into the direct reduction facility 7.

Alternatively, the desired carburizing parameter value is a parameter value of the direct reduced iron ore material (and/or the iron ore oxide material subject to reduction) that provides optimal carburizing of the direct reduced iron ore material and/or optimal carburizing of the iron ore oxide material subject to reduction.

Fig. 4b illustrates the application of a second control circuitry 52 adapted to control the iron ore oxide material temperature of the iron ore oxide material 5 transferred into the direct reduction facility 7 by controlling the pre-heating apparatus 4 discharging the iron ore oxide material 5 into the direct reduction facility 7 at a specific temperature, which specific temperature has a second temperature value that is determined from a desired carburizing parameter value of the direct reduced iron ore material ready for carburizing.

Alternatively, a second sensor device S2 is arranged at an iron ore oxide material discharge outlet (not shown) of the pre-heating apparatus 4 and/or at a charging inlet (not shown) of the direct reduction facility 7, which second sensor device S2 is coupled to the second control circuitry 52.

Alternatively, the second sensor device S2 is configured to detect said second temperature value.

A second detector member DCT2 of the carburizing reactor 102 and/or of the carburizing zone 101 is electrically coupled to the second control circuitry 52.

Alternatively, the second control circuitry 52 is configured to control the pre-heating apparatus 4 to discharge the iron ore oxide material 5 at the second temperature value that is determined from the desired carburizing parameter value of the direct reduced iron ore material ready for carburizing,

The second control 52 circuitry takes into account the desired carburizing parameter value when determining said second temperature value of the iron ore oxide material 5 to be charged into the direct reduction facility 7.

Alternatively, the desired carburizing parameter value is a temperature value of the direct reduced iron ore material (and/or the iron ore oxide material subject to reduction) that provides optimal carburizing of the direct reduced iron ore material and/or optimal carburizing of the iron ore oxide material subject to reduction.

For example:
- The specific temperature of ore oxide material 5 has a temperature of about 1100 °C when being charged into the direct reduction facility.
- The reducing agent (e.g. having a hydrogen content of 100% by volume) has a temperature of about 500 °C when introduced into the direct reduction facility, wherein the reducing agent reacts with the iron ore oxide material reducing the iron ore oxide material into the intermediate product by utilizing the thermal energy of the iron ore oxide material to heat or further heat the introduced reducing agent for achieving a chemical reaction between the iron ore oxide material and the reducing agent.
- The produced reduced iron ore material, ready to be discharged from the direct reduction facility and/or being ready for carburizing, has a temperature of about 600 °C (1100 °C - 500 °C = 600 °C).

In such way, for example, the reduced iron ore material has a desired temperature of about 600 °C, at which desired temperature carburizing of the reduced iron ore material is most efficient.

Alternatively, the desired carburizing parameter value corresponds with a desired iron ore porosity value of the direct reduced iron ore material, a desired iron ore dimension value of the direct reduced iron ore material, carbon content value etc.

Fig. 4c illustrates the application of a third control circuitry 53 adapted to control the hydrogen gas pressure of hydrogen H transferred into the direct reduction facility 7 by controlling a first pressurizing device 63 adapted to pressurize the hydrogen entering the direct reduction facility 7 at a specific hydrogen gas pressure, which specific hydrogen gas pressure has a first hydrogen gas pressure value that is determined from a desired carburizing parameter value of the direct reduced iron ore material ready for carburizing.

An iron ore oxide material production unit 3 is configured to discharge iron ore oxide material 5 holding thermal energy (that originates from the manufacturing thermal process provided by the iron ore oxide material production) into the direct reduction facility 7.

Alternatively, the third control circuitry 53 is adapted to control the hydrogen gas pressure by controlling the first pressurizing device 63 (such as a pressure pump) to inject the hydrogen H into the direct reduction facility 7 at said first hydrogen gas pressure value.

Alternatively, a third sensor device S3 is arranged at a hydrogen gas inlet 69 of the direct reduction facility 7, which third sensor device S3 is coupled to the third control circuitry 53.

Alternatively, the third sensor device S3 is configured to detect said first hydrogen gas pressure value.

A third detector member (not shown) of a carburizing reactor 102 and/or of a carburizing zone 101 is electrically coupled to the third control circuitry 53 and is configured to detect said a desired carburizing parameter value.

Alternatively, the third control circuitry 53 is configured to control the first pressurizing device 63 to pressurize the hydrogen H in the direct reduction facility 7 at said first hydrogen gas pressure value that is determined from the desired carburizing parameter value of the direct reduced iron ore material ready for carburizing, wherein the third control circuitry 53 takes into account the desired carburizing parameter value when determining said first hydrogen gas pressure value.

Alternatively, the desired carburizing parameter value is a temperature value of the direct reduced iron ore material (and/or the iron ore oxide material subject to reduction) that provides optimal carburizing of the direct reduced iron ore material and/or optimal carburizing of the iron ore oxide material subject to reduction.

Alternatively, the desired carburizing parameter value corresponds with a desired iron ore porosity value of the direct reduced iron ore material, a desired iron ore dimension value of the direct reduced iron ore material, carbon content value etc.

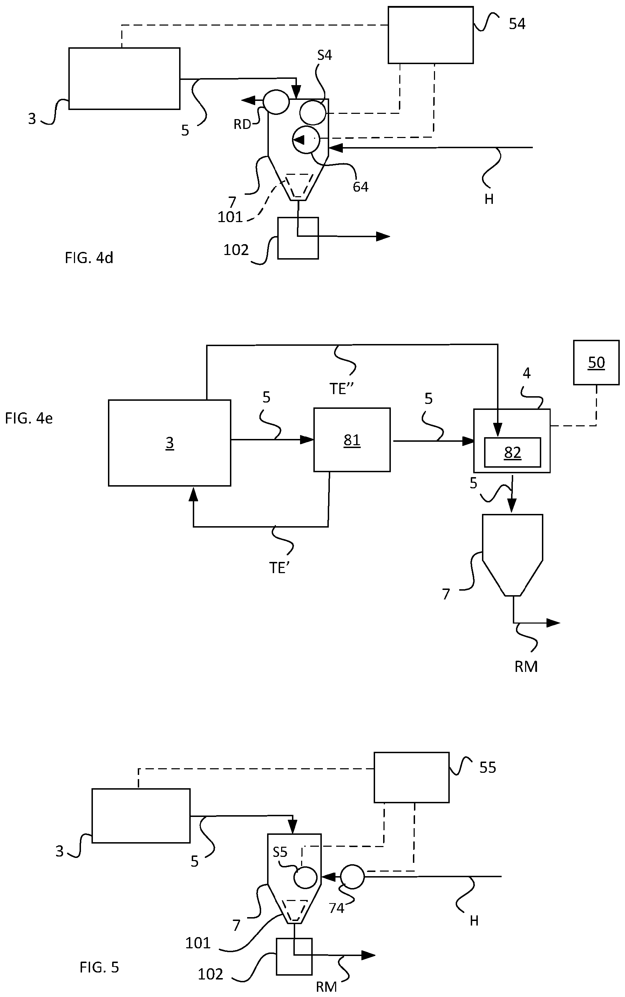

Fig. 4d illustrates the application of a process using a fourth control circuitry 54 is adapted to control the interior reduction pressure in the direct reduction facility 7 by controlling a second pressurizing device 64.

The second pressurizing device 64 may comprise a valve package assembly (not shown) configured for regulating the interior reduction pressure, wherein the interior of the direct reduction facility 7 may be pressurized by controlling the flow rate of hydrogen, carburizing gas, etc., and by controlling the top gas outlet flow by means of a regulator device RD coupled to the fourth control circuitry 54.

Alternatively, the regulator device RD may be configured for regulating the interior reduction pressure and/or the flow rate of hydrogen, carburizing gas, etc. and can be used for regulating the drawn-off top gas.

The interior reduction pressure is set at a specific interior reduction pressure, which specific interior reduction pressure has a first interior reduction pressure value that is determined from a desired carburizing parameter value of the direct reduced iron ore material ready for carburizing.

Alternatively, the fourth control circuitry 54 is adapted to control the interior reduction pressure by controlling the second pressurizing device 64 and/or by controlling the regulator device. A fourth sensor device S4 is arranged in the direct reduction facility 7 and is coupled to the fourth control circuitry 54. The fourth sensor device S4 is configured to detect said first interior reduction pressure value.

The fourth control circuitry 54 is configured to control the second pressurizing device 64 (and/or the regulator device RD) to pressurize the interior of the direct reduction facility 7 at said first interior reduction pressure value that is determined from a desired carburizing parameter value of the direct reduced iron ore material ready for carburizing.

A fourth detector member (not shown) of a carburizing zone 101 and/or a carburizing reactor 102 is electrically coupled to the fourth control circuitry 54, which fourth detector member detects the first interior reduction pressure value.

The fourth control circuitry 54 takes into account the desired carburizing parameter value when determining said first interior reduction pressure value.

Alternatively, the desired carburizing parameter value is a parameter value of the direct reduced iron ore material (and/or the iron ore oxide material subject to reduction) that provides optimal carburizing of the direct reduced iron ore material and/or optimal carburizing of the iron ore oxide material subject to reduction.

Alternatively, the desired carburizing parameter value or parameter value corresponds with a desired iron ore porosity value of the direct reduced iron ore material, a desired iron ore dimension value of the direct reduced iron ore material, carbon content value etc.

Fig. 4e illustrates a pre-heating apparatus 4 of an iron ore oxide material provider device of a steel production configuration according to one aspect. An iron ore oxide material production unit 3 is configured to discharge iron ore oxide material 5 holding thermal energy.

The iron ore oxide material 5 is cooled down by means of a cooler device 81 configured to cool down the discharged iron ore oxide material 5.

Alternatively, the thermal energy TE' extracted from the discharged iron ore oxide material 5 by means of the cooler device 81 is fed back to the iron ore oxide material production unit 3 and is used for the manufacturing thermal process for manufacture of the iron ore oxide material 5.

Alternatively, the cooled iron ore oxide material 5 is stored and/or transferred to a direct reduction facility 7. Before charging the iron ore oxide material 5 into the direct reduction facility 7, the iron ore oxide material 5 is pre-heated by the pre-heating apparatus 4.

Alternatively, a control circuitry 50 is adapted to control the pre-heating apparatus 4 to provide that the iron ore oxide material 5 has a specific temperature value (e.g. about 1100 °C) for reaching a desired temperature value (e.g. about 600 °C) of the reduced iron ore material (intermediate product RM).

Alternatively, the pre-heating apparatus 4 is configured to pre-heat the iron ore oxide material 5 into a temperature within the range of about 800-1300 °C.

Alternatively, the pre-heating apparatus 4 is provided with a heating element 82 that preheats the iron ore oxide material 5 to have said specific temperature value before charging the iron ore oxide material 5 into the direct reduction facility 7.

For example, the heating element 82 may be fed with thermal energy TE" extracted from the manufacturing thermal process of the iron ore oxide material production unit 3, which thermal energy TE" is used for pre-heating the iron ore oxide material 5.

For example, the heating element 82 may be configured with a hydrogen gas burner (not shown) generating heat to the iron ore mixture by using hydrogen and oxygen produced by an electrolysis unit (not shown) and/or configured with another type of combustion apparatus (not shown) and/or electric heater (etc.).

Alternatively, the control circuitry 50 is configured to control the pre-heating apparatus 4 to discharge the iron ore oxide material 5 at the specific temperature value that is determined from a desired parameter value of the direct reduced iron ore material (intermediate product RM).

For example, the desired parameter value of the direct reduced iron ore material may correspond with a desired carburizing temperature value of the direct reduced iron ore material, a desired iron ore porosity value of the direct reduced iron ore material, a desired iron ore dimension value of the direct reduced iron ore material, etc.

Fig. 5 illustrates the application of a process using a fifth control circuitry 55 adapted to control the hydrogen temperature of the hydrogen injected into the direct reduction facility 7 by controlling a heating device 74 configured to heat the hydrogen H at a specific hydrogen temperature, which specific hydrogen temperature has a first hydrogen temperature value that is determined from a desired carburizing parameter value of the direct reduced iron ore material ready for carburizing.

Alternatively, the fifth control circuitry 55 is adapted to control the hydrogen temperature by controlling the heating device 74 for providing said first hydrogen temperature value. A fifth sensor device S5 is arranged at the direct reduction facility 7, which fifth sensor device S5 is coupled to the fifth control circuitry 55 and is configured to detect the first hydrogen temperature value.

The fifth control circuitry 55 may be configured to control the hydrogen temperature from the desired carburizing parameter value of the direct reduced iron ore material ready for carburizing. A fifth detector member (not shown) of a carburizing reactor 102 and/or of a carburizing zone 101 is electrically coupled to the fifth control circuitry 55.

Alternatively, the desired carburizing parameter value is a parameter value of the direct reduced iron ore material (and/or the iron ore oxide material subject to reduction) that provides optimal carburizing of the direct reduced iron ore material and/or optimal carburizing of the iron ore oxide material subject to reduction.

Alternatively, at least one of the desired carburizing parameter values corresponds/correspond with a desired carburizing temperature value of the direct reduced iron ore material, a desired iron ore porosity value of the direct reduced iron ore material, a desired iron ore dimension value of the direct reduced iron ore material, etc.

The exemplary processes may be combined and the first, second, third, fourth and fifth control circuitries 51, 52, 53, 54, 55 may be circuits of a control circuitry 50 that adjusts the iron ore oxide material temperature and/or the reduction pressure and/or the hydrogen temperature and/or hydrogen gas pressure from demanded properties of the intermediate product RM.

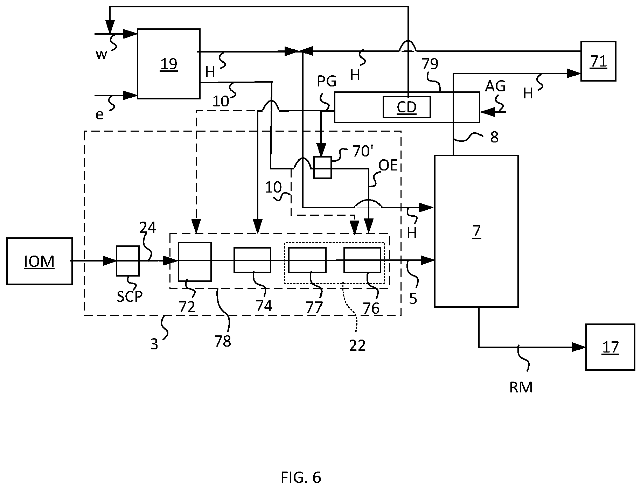

Fig. 6 illustrates a steel production configuration and process using an iron ore oxide material provider device comprising an iron ore oxide material production unit 3, which is configured to produce the iron ore oxide material 5 holding said thermal energy, which iron ore oxide material 5 holding said thermal energy is transferred into a direct reduction facility 7 for production of an intermediate product RM to be processed in a steel making industry 17.

Mined iron ore is transported from an iron ore mine IOM to a sorting and concentration plant SCP of the iron ore oxide material production unit 3. The iron ore may be subjected to screening, crushing, separation, grinding, flotation processes and further separation may be provided by the sorting and concentration plant SCP.

Alternatively, after the grinding, separation and flotation processes, various additives may be mixed into an iron ore mixture 24 or into a slurry.

The iron ore mixture 24 may be filtered to a certain moisture content and impurities may be separated from the iron ore mixture 24 for increasing the iron content.

When the enrichment of iron content in the iron ore mixture 24 is completed, the iron ore mixture 24 is transferred to a pelletizing plant 78 of the iron ore oxide material production unit 3. At the pelletizing plant 78, a clay mineral may be added as a binder to the iron ore mixture 24, and subsequently an agglomerated iron ore mixture (e.g. so called "green" pellets) may be formed in rotating drums (not shown). The iron ore mixture 24 may be dried 72 and pre-heated 74 for increasing the structural strength of iron ore mixture 24.

The pelletizing plant 78 may be a grate-kiln pelletizing plant or rotary kiln plant, or any other type of pellets producing plant. The iron ore oxide material production unit 3 is configured to process the agglomerated iron ore mixture 24 by means of the manufacturing thermal process.

Alternatively, the iron ore oxide material production unit 3 may produce agglomerated iron ore oxide material 5, such as pellets, to be charged directly into the direct reduction facility 7 in order to use the thermal heat of the iron ore oxide material 5 directly into the direct reduction facility 7 or via a pre-heating apparatus (see Fig.1; reference sign 4).

Alternatively, the production of said iron ore oxide material 5 may comprise the following steps; grinding iron ore bodies; separating iron ore particles; producing the iron ore mixture 24 of the iron ore particles, and indurating the iron ore mixture 24 by oxidation of the iron ore mixture 24 and/or sintering of the iron ore mixture 24.

Alternatively, the step of indurating the iron ore mixture 24 is preceded by a step of drying the iron ore mixture 24 and/or pre-heating and/or heating the iron ore mixture 24.

In order to achieve that the iron ore oxide material 5 will have satisfactory and proper final properties before charging it into the direct reduction facility 7, the iron ore mixture 24 preferably being pre-heated at the tempered pre-heat zone 74 and oxidized at the oxidation zone 77 and/or sintered at the sintering zone 76.

The iron ore mixture 24 is thus transferred into the indurating apparatus 22 comprising the oxidation zone 77 and/or the sintering zone 76.

Alternatively, the step of pre-heating and/or heating the iron ore mixture comprises oxidation of magnetite ore to hematite ore.

In such a way, additional thermal energy is produced, as the magnetite oxidizes to hematite, whereby the energy demand is further reduced, which gains efficient handle of fluctuations in production of re-generative energy used in processes for producing steel are known

Alternatively, for providing an efficient sintering process and/or oxidation process of the iron ore mixture 24 (agglomerated iron ore mixture, e.g. so called "green" pellets), an oxygen-enriched process gas OE is fed to the indurating apparatus 22.

Alternatively, a hydrogen gas burner (not shown) is arranged in the indurating apparatus 22 for providing a long flame of ignited mixture of gases (hydrogen and oxygen or others and/or ambient air) for induration of the iron ore mixture 24 for producing said iron ore oxide material 5 holding thermal energy.

A control circuitry (not shown) may be adapted to control the intensity and temperature of the long flame.

The hydrogen gas burner may comprise a housing (not shown) and a hydrogen gas inlet (not shown) directed to a combustion chamber (not shown) positioned within the housing.

The oxygen-enriched process gas OE is provided for increasing the oxidation rate and for providing operational control of the iron ore oxide material production unit 3.

It is possible to control the amount of the thermal energy of the iron ore oxide material 5 when charged into the direct reduction facility 7 by means the control circuitry.

The control circuitry may take into account a desired temperature value of the reduced iron ore oxide material to be carburized for optimal carburizing of the direct reduced iron ore material.

Alternatively, the oxygen used for enrichening the process gas may be the oxygen 10 produced by an electrolysis unit 19, also used for production of the hydrogen H. In such way is achieved better use of re-generative energy needed for driving the electrolysis unit, at the same time as the iron ore oxide material 5 holds thermal energy that promotes the reduction process and chemical reaction in the direct reduction facility 7 due to maintained reduction potential of the hydrogen H.

The sintering process may distinguish between heating and oxidation. The oxidation may take place with the oxygen-enriched process gas OE maintaining high oxygen pressure during the manufacturing thermal process, i.e. during the oxidation and/or sintering process (induration process) of the manufacturing thermal process.

Alternatively, the oxygen-enriched process gas comprises heated process gas that is injected with oxygen gas 10 at a mixing unit 70'. The heated process gas PG is generated by a heat exchanger 79 configured to transfer heat from a waste reducing fluid 8 discharged from the direct reduction facility 7 to an atmospheric gas AG.

Pure oxygen gas 10 may also be transferred from the electrolysis apparatus 19 to the indurating apparatus 22 for enabling efficient oxidation and/or sintering of the iron ore mixture 24.

Alternatively, the oxygen gas 10 is fed from the electrolysis unit 19, for example via a pipe line assembly (not shown).

The electrolysis unit 19 is configured to decompose water w into the hydrogen H and the oxygen 10 and may use re-generative energy and/or non-fossil produced energy.

The hydrogen H is introduced into the direct reduction facility 7 for providing a direct reduction of the iron ore oxide material 5 by means of a chemical reaction between the hydrogen H and the iron ore oxide material 5 holding said thermal energy, wherein the chemical reaction makes use of the thermal energy.

The direct reduced iron ore material discharged from the direct reduction facility 7 has a temperature that is lower than the temperature at which the iron ore oxide material being charged into the direct reduction facility 7.

The hydrogen H introduced into the direct reduction facility 7 has a temperature that is lower than the temperature at which the waste reducing fluid 8 is discharged from the direct reduction facility 7.

The waste reducing fluid 8 comprising hydrogen H and water steam is thus discharged from a top section of the direct reduction facility 7 into the heat exchanger 79 and a condensation device CD is configured to condensate the water steam of the waste reducing fluid 8 into water.

The hydrogen H is transferred via the heat exchanger 79 back to the direct reduction facility 7 and can be reused for said chemical reaction. A purification unit 71 may be coupled to the direct reduction facility 7 for purification of the hydrogen H of the waste reducing fluid 8.

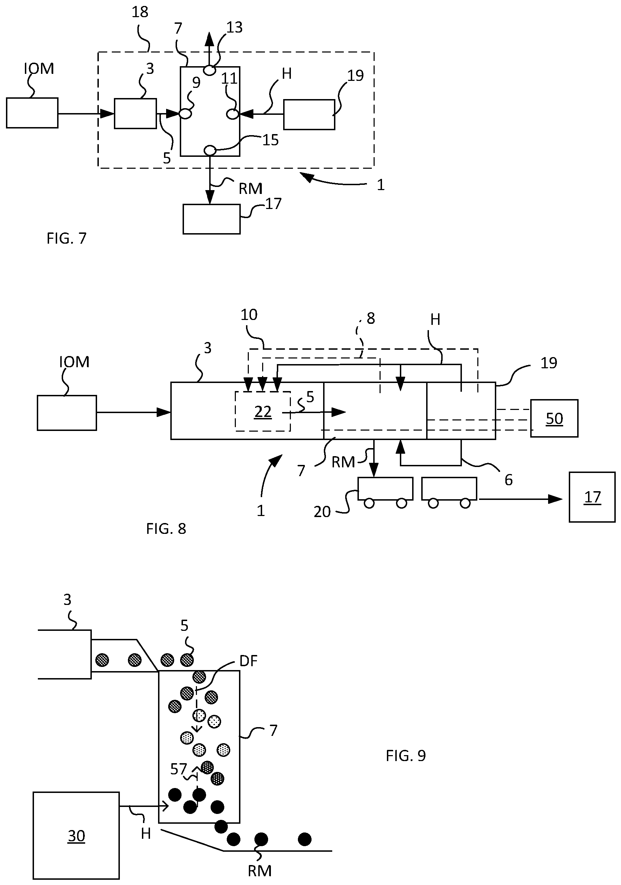

Fig. 7 illustrates a steel production configuration and process for producing steel using re-generative energy and/or non-fossil produced energy according to a sixth example. Iron ore fragments is transported from an iron ore mine IOM to an iron ore oxide material production unit 3. The iron ore oxide material production unit 3 is configured for production of an iron ore oxide material 5. The iron ore oxide material 5 holds thermal energy provided by a manufacturing thermal process, comprising e.g. oxidation and sintering processes, performed by the iron ore oxide material production unit 3.

Alternatively, the iron ore oxide material 5, holding thermal energy from the manufacturing thermal process, is directly transferred into a direct reduction facility 7 in such way that the iron ore oxide material 5 maintains said thermal energy (for example fully maintaining the thermal energy or substantially maintaining the thermal energy or maintaining the thermal energy to an extent of 50% to 90%), when being charged into the direct reduction facility 7 for providing the chemical reaction between a hydrogen H (reducing agent) and the iron ore oxide material 5.

Alternatively, the iron ore oxide material 5 holds thermal energy corresponding to a temperature within the range from about 850 °C to about 1300 °C, preferably between about 1000 °C to about 1250 °C, when being charged (transferred) into the direct reduction facility 7 from the iron ore oxide material production unit 3.

The iron ore oxide material 5, holding thermal energy that originates from the manufacturing thermal process provided by the iron ore oxide material production unit 3, is charged into the direct reduction facility 7. The direct reduction facility 7 is configured for introduction of the hydrogen H, produced by an electrolysis unit 19. The hydrogen H is adapted to react with the iron ore oxide material 5 holding said thermal energy.

Alternatively, the iron ore oxide material 5 is reduced into direct reduced iron ore material (intermediate product RM) by utilizing said thermal energy of the iron ore oxide material 5 to heat the hydrogen H for achieving a substantially or completely endothermal chemical reaction and/or a completely substantially or completely endothermal chemical reaction between the hydrogen H and the iron ore oxide material 5.

The direct reduction facility 7 comprises a iron ore oxide material charging inlet device 9 (e.g. a first opening), which is configured for transferring (pass-through) the iron ore oxide material 5 from the iron ore oxide material production unit 3 into the direct reduction facility 7.

The direct reduction facility 7 further comprises a hydrogen inlet device 11 configured for introducing the hydrogen H into the direct reduction facility 7.

Alternatively, the hydrogen H is adapted to react in a substantially or completely endothermal chemical reaction with the iron ore oxide material 5 holding said thermal energy.

Alternatively, the hydrogen H is adapted to react in a partial exothermal chemical reaction with the iron ore oxide material 5 holding said thermal energy.

Alternatively, the hydrogen H is adapted to react by a substantially or completely endothermal and by a minor exothermal chemical reaction with the iron ore oxide material 5 holding said thermal energy, which exothermal chemical reaction precedes or follows the substantially or completely endothermal chemical reaction during the reduction of the iron ore oxide material 5.

Alternatively, the hydrogen H is adapted to react in a substantially or completely endothermal and/or exothermal chemical reaction with the iron ore oxide material 5 holding said thermal energy provided by said manufacturing thermal process, which substantially or completely endothermal chemical reaction absorbs a first energy content from the iron ore oxide material 5, and which exothermal chemical reaction releases a second energy content, wherein the first energy content is larger than the second energy content.

Alternatively, the hydrogen H is adapted to absorb the first energy content to initiate and maintain the chemical reaction.

Alternatively, the first energy content is 95-99% of the total energy content and the second energy content is 1-5% of the total energy content of the chemical reaction.

The direct reduction facility 7 further comprises a waste reduction fluid outlet device 13 configured for discharging waste reduction fluid, such as water steam and hydrogen gas, from the direct reduction facility 7. The direct reduction facility 7 further comprises a direct reduced iron ore material outlet device 15 configured for discharging the direct reduced iron ore material from the direct reduction facility 7. The direct reduced iron ore material is transported to a steel making industry 17 for fulfilling the production of steel.

Alternatively, the direct reduction facility 7 is configured to provide direct reduction of the iron ore oxide material 5 to direct reduced iron ore material (intermediate product RM) by utilizing said thermal energy of the iron ore oxide material 5 provided by said manufacturing thermal process, i.e. the thermal energy originating from the manufacturing thermal process, to heat the hydrogen H for achieving the chemical reaction.

Alternatively, the direct reduction facility 7 and/or the electrolysis unit 19 and/or the steel making industry 17 is/are fully or partly integrated with the iron ore oxide material production unit 3 constituting an integrated direct reduced iron ore material and steel making industry 17.

Alternatively, according to one aspect, the iron ore oxide material 5 may be cooled down by means of a cooler device (not shown) configured to cool down the iron ore oxide material 5 discharged from the iron ore oxide material production unit 3. Thermal energy extracted from the discharged iron ore oxide material is fed back to the iron ore oxide material production unit 3 and is used for the manufacturing thermal process. The cooled iron ore oxide material 5 may be stored and/or transferred to a direct reduction facility 7. Before charging the cooled down iron ore oxide material 5 into the direct reduction facility 7, the iron ore oxide material 5 is pre-heated by the pre-heating apparatus (not shown), thus again the iron ore oxide material 5 holds thermal energy for the chemical reaction in the direct reduction facility 7.

Fig. 8 illustrates a steel production configuration with integrated production units, and a process for producing steel according to a seventh example. Iron ore fragment is transported from an iron ore mine IOM to an iron ore oxide material production unit 3. The iron ore oxide material production unit 3 produces an iron ore oxide material 5 holding thermal energy provided by a manufacturing thermal process provided by the iron ore oxide material production unit 3.

The manufacturing thermal process may comprise e.g. drying and pre-heating an iron ore mixture, oxidizing the iron ore mixture, and sintering the iron ore mixture in an indurating process managed by an indurating apparatus 22.

Alternatively, the iron ore oxide material 5 holding said thermal energy is transferred directly into a direct reduction facility 7 for providing a chemical reaction with a hydrogen gas H for direct reduction of the iron ore oxide material 5.

An electrolysis unit 19 is configured to produce the hydrogen gas H also produces oxygen gas 10 that can be used by the indurating apparatus 22 for providing the iron ore oxide material 5.

For example, the amount of hydrogen gas H and/or oxygen gas 10 produced by the electrolysis unit 19 may be regulated by a control circuitry 50 for providing heat used in the induration process (oxidation and/or sintering) performed by the iron ore oxide material production unit 3 for producing the iron ore oxide material 5 holding the thermal energy.

Alternatively, the iron ore oxide material 5 holding said thermal energy may be cooled down and thermal energy is reused by the iron ore oxide material production unit 3 for said manufacturing thermal process. The cooled iron ore oxide material 5 may be transferred to a sponge iron producer (not shown), which sponge iron producer heats the iron ore oxide material 5 in a pre-heating apparatus (not shown) for providing said thermal energy of the iron ore oxide material ready for reduction in a direct reduction facility for providing a chemical reaction with a hydrogen for direct reduction of the iron ore oxide material in a direct reduction facility.

Alternatively, pre-heating apparatus is configured to make use of recovered heat from the direct reduction facility, wherein thermal energy is introduced to the cooled iron ore oxide material 5 for providing the iron ore oxide material 5 holding thermal energy.

The direct reduction facility 7 is configured to receive the hydrogen H, which is produced by the electrolysis unit 19 that may an integrated production unit of the steel production configuration.

Alternatively, the electrolysis unit 19 may be positioned remote from the direct reduction facility 7.

The chemical reaction generates a waste reducing fluid 8 being discharged as a top gas from the direct reduction facility 7, which waste reducing fluid 8 may be reused by the iron ore oxide material production unit 3 for said manufacturing thermal process.

For example, the amount of waste reducing fluid 8 may be regulated by the control circuitry 50 for providing heat for the induration process (oxidation and/or sintering) performed by the iron ore oxide material production unit 3 for producing the iron ore oxide material 5 holding the thermal energy.

The control circuitry 50 may be adapted to control the manufacturing thermal process and to control the transfer of the waste reducing fluid 8 from the reduction facility 7 back to the iron ore oxide material production unit 3.

The control circuitry 50 may be electrically coupled also to the electrolysis unit 19 for controlling the production of hydrogen H and oxygen 10.

The control circuitry 50 may be electrically coupled also to the direct reduction facility 7 for controlling and monitoring the reduction of the iron ore oxide material 5 into a direct reduced iron ore material (an intermediate product RM).

The control circuitry 50 may be electrically coupled to a hydrogen gas regulating and/or pressurizing device (not shown) of the iron ore oxide material production unit 3 for controlling the manufacturing thermal process for the production of the iron ore oxide material 5.

The control circuitry 50 may be electrically coupled to the pre-heating apparatus (not shown) for controlling pre-heating of the iron ore oxide material 5 before charging it into the direct reduction facility 7.

The direct reduction facility 7 comprises a direct reduced iron ore material outlet device (not shown) configured for discharging the direct reduced iron ore material (intermediate product RM) to a train 20 for transportation of the direct reduced iron ore material to a steel making industry 17. The direct reduction facility 7 is thus configured to provide reduction of the iron ore oxide material 5 to direct reduced iron ore material by utilizing said thermal energy of the iron ore oxide material, which thermal energy originates from said manufacturing thermal process, to heat the hydrogen H for achieving said chemical reaction between the iron ore oxide material and the hydrogen H for providing said reduction.

Alternatively, the oxygen gas 10 is transferred from the electrolysis unit 19 to the iron ore oxide material production unit 3 for supporting said manufacturing thermal process provided by the iron ore oxide material production unit 3.

Alternatively, the control circuitry 50 may be electrically coupled to the iron ore oxide material production unit 3 for adjusting the amount of oxygen 10 introduced into the oxidation and/or sintering process (induration process) achieving the manufacturing thermal process provided by the iron ore oxide material production unit 3.

Alternatively, the control circuitry 50 is adapted to control the amount of oxygen 10 introduced into the oxidation and/or sintering process (induration process), or into any processing unit/production unit of the iron ore oxide material production unit 3 contributing to the manufacturing thermal process, and adjusting/directing the temperature of the iron ore oxide material to be charged into the direct reduction facility 7 toward a specific temperature value that corresponds with a desired temperature value of the direct reduced iron ore material discharged from the direct reduction facility 7 or into a carburizing zone (not shown).

Fig. 9 illustrates a direct reduction facility 7 of a steel production configuration according to a further example. An iron ore oxide material production unit 3 produces iron ore oxide material 5, which e.g. holds a temperature of about 900 °C to 1300 °C, preferably about 950 °C to 1250 °C, when being transferred from the iron ore oxide material production unit 3 and into the direct reduction facility 7.

The iron ore oxide material 5 may be in the form of iron ore pellets or other suitable agglomerates. The iron ore oxide material 5 is charged directly into the direct reduction facility 7 after production of the iron ore oxide material 5, whereas the iron ore oxide material 5 still holds thermal energy from the production process achieved by the iron ore oxide material production unit 3 for producing the iron ore oxide material 5. A reducing agent supply 30 is coupled to the direct reduction facility 7 and is configured to supply hydrogen H to the direct reduction facility 7.

A downward flow 56 of the iron ore oxide material of high temperature (said thermal energy) contacts an up flow 57 of the hydrogen H. The hydrogen H exhibits lower temperature than that of the iron ore oxide material 5. The direct reduction facility 7 may be defined as a counter current heat exchanger and is configured to cool the high temperature incoming iron ore oxide material 5 under direct reduction, wherein is provided a substantially or completely endothermal chemical reaction by means of the unheated hydrogen H.

Alternatively, the intermediate product RM discharged from the direct reduction facility 7 may have a temperature of about 50 °C to 300 °C, preferably about 100 °C to 200 °C, when being discharged from the direct reduction facility 7.

Alternatively, the discharged intermediate product RM may have a temperature of about 20°C to 500°C, when being discharged from the direct reduction facility 7.

Alternatively, the discharged direct reduced iron ore material may be subjected to carburizing, wherein the method of reducing iron ore oxide material 5 is determined to produce direct reduced iron ore material of higher temperature, e.g. about 400°C to 700°C, preferably about 500°C to 650 °C.

The temperature of the direct reduced iron ore material is controlled to a desired temperature value which is optimal for efficient carburizing or other preparation processes. In case of production of a carbon-free intermediate product, the discharged direct reduced iron ore material having high temperature preferably is cooled down by a cooler (not shown), whereas thermal heat can be recovered and transferred back e.g. to the iron ore oxide material production unit 3.

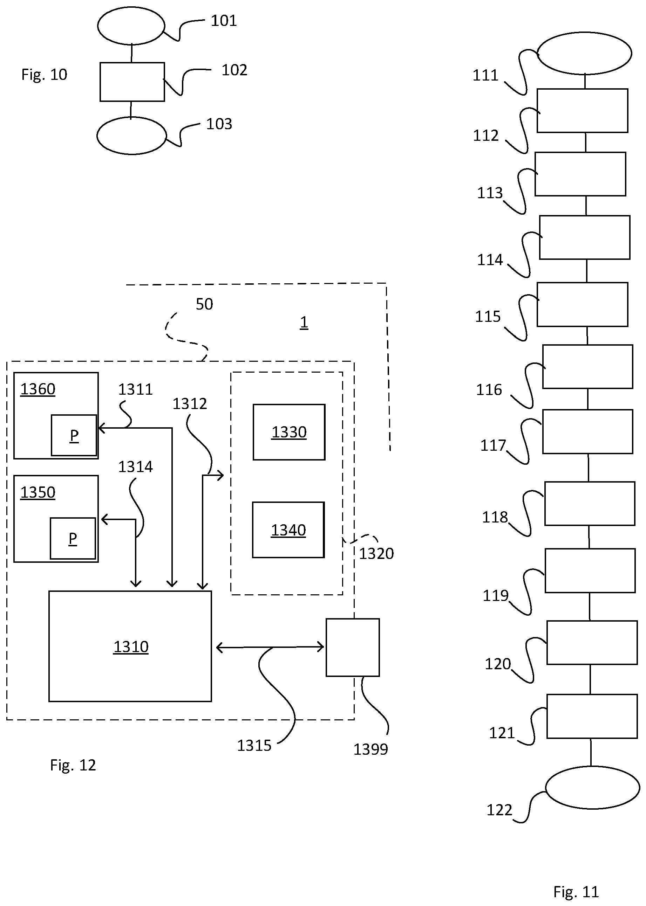

Fig. 10 illustrates a flowchart showing an exemplary process for producing steel, whereby iron ore is reduced with hydrogen in a direct reduction facility and the so-obtained intermediate product of direct reduced iron ore material and possible accompanying substances is/are metallurgically processed; the hydrogen is produced by electrolysis of water; the electric energy necessary for the electrolysis is re-generative energy which is derived from hydropower and/or wind power and/or photovoltaic or other re-generative energy forms.

The hydrogen and/or the intermediate product may be produced independently of the current demand, if sufficient re-generatively generated electric energy is available.

The process comprises a first step 101 starting the process. A second step 102 shows process. A third step 103 comprises stopping the process.

The second step 102 may comprise; transferring the iron ore from an iron ore provider device into the direct reduction facility holding thermal energy that originates from the iron ore provider device; the direct reduction facility is configured for introduction of the hydrogen adapted to react with the iron ore oxide holding thermal energy, thus reducing the iron ore oxide into the intermediate product by utilizing the thermal energy of the iron ore oxide to heat or further heat the introduced hydrogen for achieving a chemical reaction between the iron ore oxide and the hydrogen.

The second step 102 may comprise providing a method comprising the steps of: Producing the iron ore oxide material; charging the iron ore oxide material, holding thermal energy, into the direct reduction facility; introducing the reducing agent into the direct reduction facility; reducing said iron ore oxide material into an intermediate product by utilizing said thermal energy of the iron ore oxide material to heat or further heat the introduced reducing agent for achieving a chemical reaction; and discharging the intermediate product from the direct reduction facility; and/or transferring the intermediate product to the steel making industry.

Fig. 11 illustrates a flowchart showing an exemplary process for producing steel. The process comprises a first step 111 starting the process. A second step 112 comprises producing the hydrogen. The intermediate product and/or the hydrogen may always be produced independently of the current demand, if sufficient re-generatively generated electric energy is available. A third step 113 comprises storing the intermediate product that is not demanded is until demand/use, so that the re-generative energy that is saved therein is also stored. A fourth step 114 comprises, during the reduction of the iron ore oxide to the intermediate product, the step of adding a carbon- or hydrogen-containing gas to the hydrogen, in order to incorporate carbon into the intermediate product. A fifth step 115 comprises adding at least so much carbon- or hydrogen-containing gas to the hydrogen for the reduction, that the carbon content in the intermediate product is 0,0005 mass-% to 6,3 mass-%. A sixth step 116 comprises providing that the carbon- or hydrogen-containing gas is methane or other carbon-containing gases from biogas production, or from pyrolysis of renewable raw materials or synthetic gas from biomass. A seventh step 117 comprises producing the iron ore oxide material by means of an iron ore oxide material production unit, wherein the iron ore oxide material holding said thermal energy is transferred into the direct reduction facility. Alternatively, an eight step 118 comprises introducing an oxygen-enriched process gas into an indurating apparatus for increasing the oxidation rate in the manufacture of the iron ore oxide material and for providing additional operational control by means of a control circuitry coupled to the iron ore oxide material production unit. Alternatively, a ninth step 119 comprises controlling the amount of the thermal energy of the iron ore oxide material toward a temperature, when it is charged into the direct reduction facility, set from a desired temperature value of the discharged direct reduced iron ore material, which promotes optimal carburizing of the direct reduced iron ore material. A tenth step 120 may comprise electrolysis of water for the production of hydrogen and oxygen, which oxygen may be used by the iron ore oxide material production unit for the production of iron ore oxide material holding thermal energy, which originates from of the iron ore oxide material production unit. An eleventh step 121 comprises extraction of a carbon containing substance from a carbon source, which substance is added to the direct reduced iron ore material in a separate carburizing zone of the direct reduction facility and/or in a separate carburizing reactor configured for introducing carbon into the intermediate product discharged from the direct reduction facility. A twelfth step 122 comprises stopping the method.

Alternatively, the method comprises the steps of: Signalling a parameter value signal from a detector member of the direct reduction facility to the control circuitry; commanding the direct reduction facility to stop the chemical reaction between the iron ore oxide material and the reducing agent if the parameter value signal is an interruption value; and commanding a transferring device of the iron ore oxide material provider device to stop charging the iron ore oxide material, holding thermal energy, into the direct reduction facility.

Fig. 12 illustrates a control circuitry 50 of an iron ore oxide material production unit of a steel production configuration and process for production of steel according to a further example. The control circuitry 50 is configured to control the process for producing steel, whereby iron ore oxide material is reduced with hydrogen in a direct reduction facility and the so-obtained intermediate product of direct reduced iron ore material and possible accompanying substances is/are metallurgically processed. The hydrogen may be produced by electrolysis of water. The electric energy necessary for the electrolysis is re-generative energy, which is derived from hydropower and/or wind power and/or photovoltaic or other re-generative energy forms. The hydrogen and/or the intermediate product may be produced independently of the current demand, if sufficient re-generatively generated electric energy is available. The iron ore oxide material is transferred from an iron ore oxide material provider device into the direct reduction facility and holds thermal energy that originates from the iron ore oxide material provider device. The direct reduction facility is configured for introduction of the hydrogen adapted to react with the iron ore oxide material holding thermal energy, thus reducing the iron ore oxide material into the intermediate product by utilizing the thermal energy of the iron ore oxide material to heat or further heat the introduced hydrogen for achieving a chemical reaction between the iron ore oxide material and the hydrogen.

The control circuitry 50 may comprise a computer and a non-volatile memory NVM 1320, which is a computer memory that can retain stored information even when the computer is not powered.

The control circuitry 50 further comprises a processing unit 1310 and a read/write memory 1350. The NVM 1320 comprises a first memory unit 1330. A computer program (which can be of any type suitable for any operational data) is stored in the first memory unit 1330 for controlling the functionality of the control circuitry 50. Furthermore, the control circuitry 50 comprises a bus controller (not shown), a serial communication unit (not shown) providing a physical interface, through which information transfers separately in two directions. The control circuitry 50 may comprise any suitable type of I/O module (not shown) providing input/output signal transfer, an A/D converter (not shown) for converting continuously varying signals from a sensor arrangement (not shown) of the control circuitry 50 configured to determine the actual operational status of the iron ore oxide material production unit.

The control circuitry 50 is further configured to provide proper adjustments of e.g. the flow of process gas, hydrogen gas, oxygen gas, charging rate of iron ore oxide material into the direct reduction facility, discharging rate of direct reduced iron ore material, etc. from received control signals, and from detected operational status and other operational data. The control circuitry 50 also comprises an input/output unit (not shown) for adaptation to time and date. The control circuitry 50 comprises an event counter (not shown) for counting the number of event multiples that occur from independent events in operation of the iron ore oxide material production unit and direct reduction facility.

Furthermore, the control circuitry 50 includes interrupt units (not shown) associated with the computer for providing a multi-tasking performance and real time computing for semiautomatically and/or automatically operation of the iron ore oxide material production unit and direct reduction facility. The NVM 1320 also includes a second memory unit 1340 for external sensor check of the sensor devices and detector members.

A data medium for storing a program P may comprise program routines for automatically adapting the operation of the iron ore oxide material production unit and direct reduction facility in accordance with operational data. The data medium for storing the program P comprises a program code stored on a medium, which is readable on the computer, for causing the control circuitry 50 to perform the process and/or method steps described herein. The program P further may be stored in a separate memory 1360 and/or in the read/write memory 1350. The program P, in this embodiment, is stored in executable or compressed data format.

It is to be understood that when the processing unit 1310 is described to execute a specific function that involves that the processing unit 1310 may execute a certain part of the program stored in the separate memory 1360 or a certain part of the program stored in the read/write memory 1350. The processing unit 1310 is associated with a data port 999 for communication via a first data bus 1315 to be coupled to a set of process control units of the direct reduction facility, the iron ore oxide material production unit, the electrolysis unit and/or a steel making industry for performing the process. The non-volatile memory NVM 1320 is adapted for communication with the processing unit 1310 via a second data bus 1312. The separate memory 1360 is adapted for communication with the processing unit 610 via a third data bus 1311. The read/write memory 1350 is adapted to communicate with the processing unit 1310 via a fourth data bus 1314. After that the received data is temporary stored, the processing unit 1310 will be ready to execute the program code, according to the above-mentioned process.

Preferably, the signals (received by the data port 999) comprise information about operational status of the iron ore oxide material production unit and direct reduction facility. The received signals at the data port 999 can be used by the control circuitry 50 for controlling and monitoring automatic calibration of the sensor devices and detector members. Information and data may be manually fed, by an operator, to the control circuitry 50 via a suitable communication device, such as a computer display or a touchscreen. The method can also partially be executed by the control circuitry 50 by means of the processing unit 1310, which processing unit 1310 runs the program P being stored in the separate memory 1360 or the read/write memory 1350. When the control circuitry 50 runs the program P, the process disclosed herein will be executed.

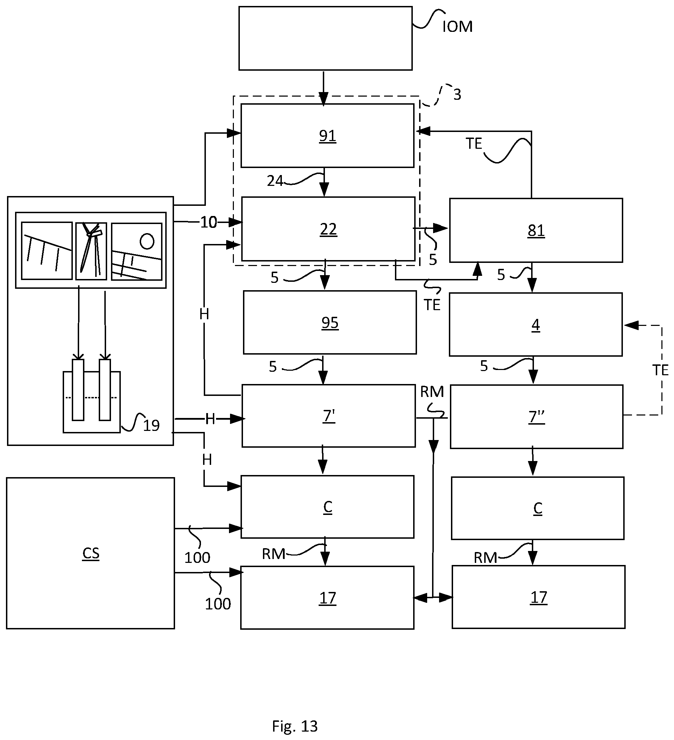

Fig. 13 illustrates an integrated steel production configuration according to one aspect. Iron ore is transferred from an iron ore mine IOM to an iron ore preparation facility 91 of an iron ore oxide material production unit 3 for providing an iron ore mixture 24. An electrolysis unit 19 is configured for electrolysis of water for the production of hydrogen H and oxygen 10 and uses re-generative energy. An iron ore oxide material 5 holding thermal energy is produced by an iron ore indurating apparatus 22 making use of the oxygen 10 and the hydrogen H for oxidation and/or sintering of the iron ore mixture 24.

Optionally, the iron ore oxide material 5 may be charged via a transferring device 95 (e.g. comprising a fireproof steel transport feeder) into a first direct reduction facility 7' for direct reduction of the iron ore oxide material 5 making use of the thermal energy of the iron ore oxide material and the introduced hydrogen H, whereas the temperature of the hydrogen is lower than the that of the charged iron ore oxide material 5.

Optionally, the iron ore oxide material 5 may be cooled down by a cooler device 81. The iron ore oxide material 5 may be stored and transported/transferred to a pre-heating apparatus 4 for pre-heating iron ore oxide material 5 before charging it into a second direct reduction facility 7". Direct reduction of the iron ore oxide material 5 uses thermal energy provided the iron ore oxide material 5 by means of the pre-heating apparatus 4. The cooler device 81 is configured to recover thermal energy TE fed back to the iron ore oxide material production unit 3. The pre-heating apparatus 4 may re-use thermal energy TE from the iron ore induration facility 92. The pre-heating apparatus 4 may use thermal energy TE from the second direct reduction facility 7" as well.

The first and second direct reduction facility 7', 7" being configured to produce a direct reduced iron ore material (intermediate product RM).

Optionally, the direct reduced iron ore material is carburized by a carburizing process C providing a carburized intermediate product RM.

A carbon containing substance 100 is extracted from a carbon source CS and is added to the iron ore oxide material during reduction and/or to the direct reduced iron ore material in a separate carburizing zone (not shown) of the direct reduction facility 7 and/or in a separate carburizing reactor (not shown) configured for providing the carburized intermediate product RM. The carbon containing intermediate product RM is prepared to be transferred to a steel making industry 17.

Optionally, the first and second direct reduction facility 7', 7" being configured to produce a carbon free intermediate product RM prepared to be transferred to a steel making industry 17.

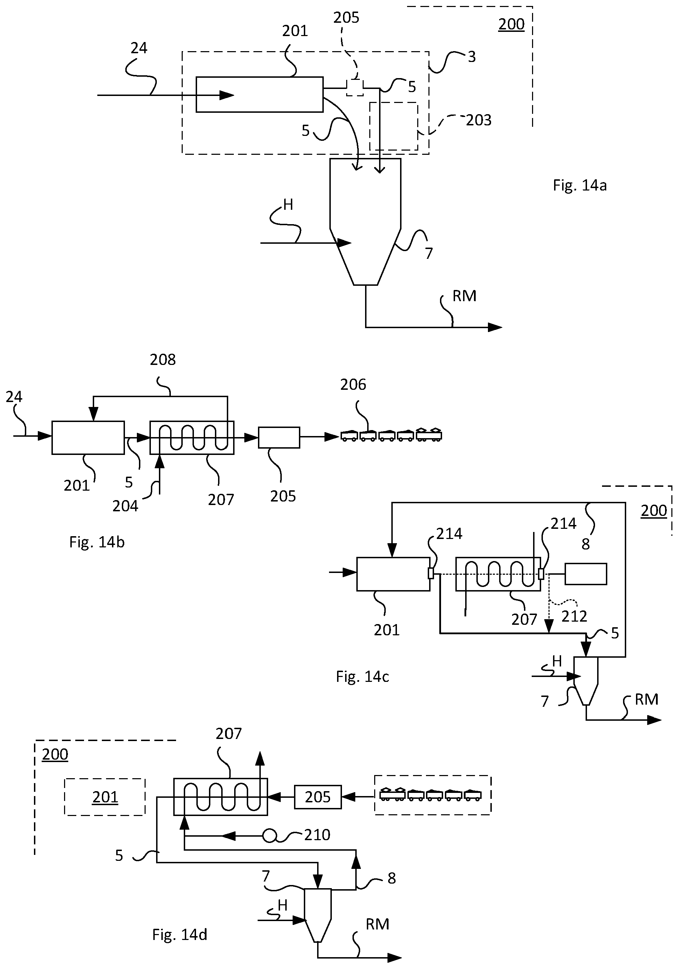

Fig. 14a shows an iron ore oxide material production unit 3 of a metal material production configuration 200 comprising an iron ore oxide material pre-heating apparatus 203 and a transferring device (not shown) adapted to transfer an iron ore oxide material 5 holding thermal energy that originates from a manufacturing thermal process. The iron ore oxide material pre-heating apparatus 203 of the iron ore oxide material production unit 3 may produce the iron ore oxide material holding thermal energy by means of e.g. a burner device, a heating element etc. (not shown), wherein previously cooled down iron ore oxide material is pre-heated by the iron ore oxide material pre-heating apparatus 203.

An iron ore oxide material pelletizing plant 201 of the iron ore oxide material production unit 3 may produce the iron ore oxide material holding thermal energy by means of an indurating apparatus (not shown) of the iron ore oxide material pelletizing plant 201. The iron ore oxide material pelletizing plant 201 is configured to process iron ore mixture 24 into said iron ore oxide material 5 holding thermal energy.

Optionally, the iron ore oxide material 5 holding thermal energy is transferred from the iron ore oxide material pelletizing plant 201 to a reduction facility 7 configured for reduction of the iron ore oxide material into reduced iron ore material (intermediate product RM) by means of a reducing agent H introduced into the reduction facility 7. The iron ore oxide material 5 produced by the iron ore oxide material pelletizing plant 201 may be charged directly into the reduction facility 7.

Optionally, the iron ore oxide material 5 holding thermal energy is transferred from the iron ore oxide material pre-heating apparatus 203 to the reduction facility 7 configured for reduction of the iron ore oxide material into the intermediate product RM by means of the reducing agent H introduced into the reduction facility 7. The previously cooled down iron ore oxide material may be stored at a storage stockpile 205 before transferring the iron ore metal oxide material to the iron ore oxide material pre-heating apparatus 203.

The iron oxide material 5 holding thermal energy provided by the iron ore oxide material pelletizing plant 201 or by the iron ore oxide material pre-heating apparatus 203 is reduced by the reducing agent H in the reduction facility 7 utilizing the thermal energy of the iron ore oxide material to heat or further heat the introduced reducing agent H for achieving a chemical reaction providing the intermediate product RM.

Fig. 14b shows an iron ore oxide material cooler/pre-heating apparatus 207 configured to operate as an iron ore oxide material pre-heating apparatus or as an iron ore oxide material cooler apparatus.

An iron ore oxide material pelletizing plant 201 of an iron ore oxide material production unit (not shown) is coupled to the iron ore oxide material cooler/pre-heating apparatus 207 and produces an iron ore oxide material 5 holding thermal energy by means of an indurating apparatus (not shown) of the iron ore oxide material pelletizing plant 201. The iron ore oxide material pelletizing plant 201 is configured to process an iron ore mixture 24 into said iron ore oxide material 5 holding thermal energy.

The manufacturing thermal process may be adapted for producing the iron ore oxide material and comprises a step of indurating the iron ore mixture for producing the iron ore oxide material. The step of indurating the iron ore mixture may comprises a step of oxidation of the iron ore mixture and/or a step of sintering the iron ore mixture.

The iron ore oxide material 5 holding thermal energy is transferred from the iron ore oxide material pelletizing plant 201 to the iron ore oxide material cooler/pre-heating apparatus 207, which cools down the iron ore oxide material 5 into a cooled down iron ore oxide material transferred to a storage stockpile 205. The thermal energy of the iron ore oxide material 5 is recovered by the iron ore oxide material cooler/pre-heating apparatus 207 by means of an atmosphere process gas 204 fed through the iron ore oxide material cooler/pre-heating apparatus 207.

The iron ore oxide material cooler/pre-heating apparatus 207 is set in a cooling operational mode for heating the atmosphere process gas 204 and providing a heat containing process gas 208 transferred back to the iron ore oxide material pelletizing plant 201. The heat containing process gas 208 is used by the iron ore oxide material production unit for producing the iron ore oxide material 5 holding thermal energy. A transport vehicle 206 is configured to transport the cooled down iron ore oxide material to a reduction facility (not shown).

Fig. 14c shows an iron ore oxide material cooler/pre-heating apparatus 207 associated with an iron ore oxide material pelletizing plant 201 of an iron ore material production configuration 200.

Optionally, the iron ore oxide material cooler/pre-heating apparatus 207 is disconnected from the iron ore oxide material pelletizing plant 201, wherein the iron ore oxide material is (preferably directly) transferred from the iron ore oxide material pelletizing plant 201 into a reduction facility 7 for charging the iron ore oxide material 5 holding thermal energy that originates from the manufacturing thermal process of the iron ore oxide material pelletizing plant 201.

The iron ore oxide material 5 holding thermal energy provided by the iron ore oxide material pelletizing plant 201 is reduced by a reducing agent H in the reduction facility 7 utilizing the thermal energy of the iron ore oxide material 5 for achieving a chemical reaction providing the reduced iron ore material (intermediate product RM). A waste reduction fluid outlet (not shown) at a top section of the reduction facility 7 is configured to draw waste reducing fluid 8 holding heat through a heat exchanger (not shown), that provides a heat containing process gas transferred back to the iron ore oxide material pelletizing plant 201.

The iron ore oxide material pelletizing plant 201 if the iron ore oxide material production unit 3 comprises an iron ore oxide material discharge outlet 214 configured to discharge the iron ore oxide material 5 holding thermal energy from the iron ore oxide material production unit 3.

Optionally, the iron ore oxide material 5 holding thermal energy is transferred via the iron ore oxide material cooler/pre-heating apparatus 207 (set in an operational mode not to cool down the iron ore oxide material holding thermal energy alternatively providing additional heat the iron ore oxide material holding thermal energy ) via a transfer path 212 to the reduction facility 7. The iron ore oxide material is transferred from the iron ore oxide material cooler/pre-heating apparatus 207 via an iron ore oxide material discharge outlet 214 of the iron ore oxide material cooler/pre-heating apparatus 207 to the reduction facility 7.

Fig. 14d shows an iron ore oxide material cooler/pre-heating apparatus 207 of an iron ore material production configuration 1.

The iron ore oxide material cooler/pre-heating apparatus 207 is set in a pre-heating operational mode for pre-heating a previously cooled down iron ore oxide material transferred from a storage stockpile 205 storing previously cooled down iron ore oxide material to the iron ore oxide material cooler/pre-heating apparatus 207 before charging iron ore oxide material 5 holding thermal energy into the reduction facility 7.

The thermal energy originates from a manufacturing thermal process provided by the iron ore oxide material cooler/pre-heating apparatus 207 adapted to produce - in pre-heating operational mode - the iron ore oxide material 5 holding thermal energy.

In the pre-heating operational mode, the previously cooled down iron ore oxide material may firstly be heated by a heating source (such as an electric heating element 210 or process gas burner device or other). Additionally, it is possible to make use of a waste reducing fluid 8, holding heat energy recovered from the reduction facility 7 and/or heat energy from an iron ore oxide material pelletizing plant 201 under operation or from other heat resources, for adding heat to the pre-heating process.

Alternatively, the waste reducing fluid 8 is transferred to the iron ore oxide material cooler/pre-heating apparatus 207 and being used as fuel for a burner member (not shown) of the iron ore oxide material cooler/pre-heating apparatus 207, which burner member is configured to pre-heat the iron ore oxide material 5 to be charged into the reduction facility 7.

Alternatively, the manufacturing thermal process is adapted for providing the iron ore oxide material and comprises a step of pre-heating the iron ore oxide material for providing the iron ore oxide material.

After the step of pre-heating the previously cooled down iron ore oxide material for producing the iron ore oxide material holding thermal heat, the following steps are necessary for producing a reduced iron ore material (intermediate product RM); producing said iron ore oxide material 5; charging said iron ore oxide material 5, holding thermal energy, to the reduction facility 7; introducing a reducing agent H to the reduction facility 7; reducing said iron ore oxide material 5 to the reduced iron ore material by utilizing said thermal energy of the iron ore oxide material 5 to heat or further heat the introduced reducing agent H for achieving a chemical reaction; and discharging the intermediate product RM from the reduction facility 7.

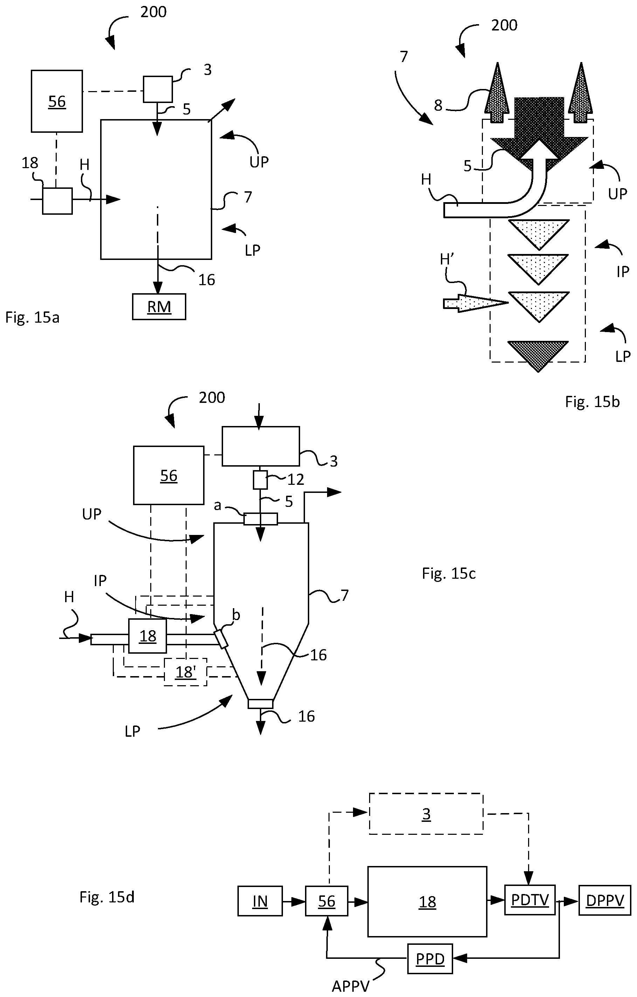

Fig. 15a illustrates an iron ore material production configuration 200 of an exemplary steel production configuration adapted for reduction of an iron ore oxide material 5 holding thermal energy into a reduced iron ore material 16.

The metal material production configuration 1 comprises an iron ore oxide material production unit 3, such as an iron ore oxide pelletizing plant or iron ore oxide pre-heating plant, configured for providing the iron ore oxide material 5 holding thermal energy. The metal material production configuration 1 comprises a direct reduction facility 7 configured to reduce the iron ore oxide material 5 holding thermal energy. An iron ore oxide material charging transfer unit (not shown) of the metal material production configuration 1 is configured to charge the iron ore oxide material 5 into an upper interior portion UP of the direct reduction facility 7.

Alternatively, an iron ore oxide material charging device (not shown) is configured to charge the iron ore oxide material into the upper interior portion of a reduction facility.

The direct reduction facility 7 comprises a reducing agent inlet (not shown) configured to introduce a hydrogen containing reducing agent H into a lower interior portion of the direct reduction facility 7, whereby the hydrogen containing reducing agent H is adapted to react with the iron ore oxide material 5 holding thermal energy for reducing the iron ore oxide material 5 by utilizing the thermal energy of the iron ore oxide material 5 to heat or further heat the introduced hydrogen containing reducing agent H for providing a chemical reaction between the hydrogen containing reducing agent H and the iron ore oxide material 5.

The hydrogen of the hydrogen containing reducing agent H may be produced by an electrolysis unit (not shown), that comprises a reducing agent temperature regulator 18 configured to adjust (pre-heat or cool down) the temperature of the hydrogen containing reducing agent H.

The direct reduction facility 7 is configured for providing a heat treatment process for heat treatment of the iron ore oxide material 5 subject to reduction and/or the reduced iron ore material 16 in the direct reduction facility 7. The metal material production configuration 1 comprises a sixth control circuitry 50, electrically coupled to the reducing agent temperature regulator 18 to pre-heat the hydrogen containing reducing agent H.

The sixth control circuitry 56 is adapted for controlling the temperature of the introduced pre-heated hydrogen containing reducing agent H for providing at least one desired passivation parameter value of the reduced iron ore material 16 forming the intermediate product RM.

The sixth control circuitry 56 is electrically coupled to the iron ore oxide material production unit 3 and is adapted for controlling the temperature of the iron ore oxide material 5 holding thermal energy to be charged into the upper interior portion UP. The reduced iron ore material 16 exhibiting the at least one desired passivation parameter value is discharged from the direct reduction facility 7 and is transported to a steel producer (not shown), whereas the reduced iron ore material (the intermediate product RM) is resistant to re-oxidation due to the passivation of the reduced iron ore material 16.

The direct reduction facility 7 is further configured for permitting the reduced iron ore material 16 to descend into the lower interior portion LP for providing the heat treatment process for heat treatment of the reduced iron ore material making use of additional thermal energy provided by the hydrogen containing reducing agent.

It has been shown that it is beneficial to make use of the present disclosure by the fact that the chemical reactivity and/or high impetus of the hydrogen of the hydrogen containing reducing agent H is maintained when introduced into the direct reduction facility.

The chemical reactivity and/or high impetus being essential for providing an efficient reduction of the iron ore oxide material. The introduced hydrogen containing reducing agent H comprises 80-100 % hydrogen, preferably 100% hydrogen. The sixth control circuitry 50 is adapted to control the temperature of the introduced pre-heated hydrogen containing reducing agent H toward a pre-determined temperature for providing sintering and/or heat treatment of the iron ore oxide material 5 subject to reduction during a pre-determined time period.

Alternatively, the heat treatment comprises heat hardening.

Alternatively, the heat treatment comprises a heat hardening process, which heat hardening process involves sintering of the reduced iron ore material and/or shrinkage of the reduced iron ore material and/or densification of the reduced iron ore material.

Alternatively, the temperature of the iron ore oxide material holding thermal energy to be charged into the upper interior portion UP is controlled by the sixth control circuitry 50 to be within the range of 900-1500 °C, preferably 1000-1300 °C.

Alternatively, the temperature of the hydrogen containing reducing agent is controlled by the sixth control circuitry 56 to be within the range of 100-400 °C, preferably 200-300 °C; or 0-300 °C, preferably 100-200 °C.

Fig. 15b illustrates a flow diagram provided of an iron ore material production configuration 200 of an exemplary steel production configuration adapted for reduction of an iron ore oxide material 5 holding thermal energy into a reduced iron ore material 16.

An iron ore oxide material 5 holding thermal energy is charged into a direct reduction facility 7. The direct reduction facility 7 may be defined to have an upper interior portion UP, an intermediate interior portion IP and a lower interior portion LP. A pre-heated hydrogen containing reducing agent H is introduced into the intermediate interior portion IP and flows upward meeting the downwardly transferred iron ore oxide material 5 holding thermal energy, whereby the upper interior portion UP functions as a counter current heat exchange zone for providing a chemical reaction between the iron ore oxide material 5 holding thermal energy and the pre-heated hydrogen containing reducing agent 6.

Alternatively, the iron ore oxide material holding thermal energy and being under reduction is transferred from the upper interior portion UP to the intermediate and/or the lower portion by means of gravity.

Alternatively, the temperature of the pre-heated hydrogen containing reducing agent H introduced to meet the iron ore oxide material 5 holding thermal energy in the upper interior portion UP is controlled by a sixth control circuitry (not shown) to provide that a waste reduction fluid 8, produced by the reduction, contains 100 % water steam or substantially 100% water steam. Due to the high temperature of the charged iron ore oxide material 5, there is achieved an efficient reduction of the iron ore oxide material 5 despite the fact that the pre-heated hydrogen containing reducing agent H comprises a large amount of water steam.

An additional introduction of a pre-heated hydrogen containing reducing agent H' may be provided into the intermediate interior portion IP and/or the lower interior portion LP. The temperature of the additionally introduced pre-heated hydrogen containing reducing agent H' is controlled by the sixth control circuitry for adaptation of the temperature toward a pre-determined temperature achieving sintering and/or heat treatment of the reduced iron ore material 16 during a pre-determined time period for providing the at least one desired passivation parameter value of the reduced iron ore material 16.

Fig. 15c illustrates an iron ore material production configuration 200 of an exemplary steel production configuration adapted for reduction of an iron ore oxide material 5 holding thermal energy into a reduced iron ore material 16. The metal material production configuration 1 comprises an iron ore oxide material production unit 3, such as an iron ore oxide pelletizing plant or iron ore oxide pre-heating plant, configured for providing the iron ore oxide material 5 holding thermal energy. The metal material production configuration 1 comprises a direct reduction facility 7 configured to reduce the iron ore oxide material 5 holding thermal energy.

An iron ore oxide material charging transfer unit 12 of the iron ore material production configuration 1 is configured to charge the iron ore oxide material 5 into an upper interior portion UP of the direct reduction facility 7 via an iron ore oxide material charging apparatus a comprising e.g. a transportation fire-proof steel band (not shown) configured to charge the iron ore oxide material 5 holding thermal energy into a top section of the upper interior portion UP.

The direct reduction facility 7 comprises a reducing agent inlet apparatus b configured to introduce a pre-heated hydrogen containing reducing agent H into an intermediate interior portion IP of the direct reduction facility 7, whereby the pre-heated hydrogen containing reducing agent H is adapted to react with the iron ore oxide material 5 holding thermal energy for reducing the iron ore oxide material 5 by utilizing the thermal energy of the iron ore oxide material 5 to heat or further heat the introduced pre-heated hydrogen containing reducing agent H for providing a chemical reaction between the pre-heated hydrogen containing reducing agent H and the iron ore oxide material 5. The hydrogen of the pre-heated hydrogen containing reducing agent H may be produced by an electrolysis unit (not shown).

The iron ore oxide material 5 holding thermal energy descends through the upper interior portion UP and is successively reduced into the reduced iron ore material 16 in the upper interior portion UP. The temperature of the introduced pre-heated hydrogen containing reducing agent H increases the farther up the introduced pre-heated hydrogen containing reducing agent H ascends in the upper interior portion UP, wherein the iron ore oxide material 5 holding thermal energy meets the introduced pre-heated hydrogen containing reducing agent H and the iron ore oxide material 5 holding thermal energy is cooled down.

The upper interior portion UP functions as a counter current heat exchange zone and promotes the chemical reaction between the iron ore oxide material and the pre-heated hydrogen containing reducing agent H.

Furthermore, the intermediate interior portion IP is configured for providing a heat treatment process for heat treatment of the reduced iron ore material 16 in the intermediate interior portion IP. The reduced iron ore material 16 descends into the intermediate interior portion IP from the upper interior portion UP.

A sixth control circuitry 56 is electrically coupled to a reducing agent pre-heater 18 configured to pre-heat a hydrogen containing reducing agent H to be introduced into the intermediate interior portion IP via the reducing agent inlet b.

The sixth control circuitry 56 controls the temperature of the reduced iron ore material 16 towards a pre-determined temperature, e.g. set within the range of 200-600 °C, preferably 300-500 °C, during a pre-determined time period sufficient long to enable the heat treatment process for providing at least one desired passivation parameter value of the reduced iron ore material 16.

In such way the temperature of the introduced pre-heated hydrogen containing reducing agent H is controlled by the sixth control circuitry 56 to maintain the temperature of the reduced iron ore material 16 in the intermediate interior portion IP at an elevated pre-determined temperature during an extended time period for achieving the heat treatment process.

In such way is achieved that the heat treatment process for heat treatment of the reduced iron ore material makes use of additional thermal energy provided by the pre-heated hydrogen containing reducing agent H, wherein the heat treatment process is controlled by the sixth control circuitry 56.

Alternatively, the direct reduction facility 7 is configured for permitting the reduced iron ore material 16 to descend into the lower interior portion LP and/or into the intermediate interior portion IP for providing the heat treatment process for heat treatment of the reduced iron ore material 16 making use of additional thermal energy provided by the pre-heated hydrogen containing reducing agent H.

Alternatively, the additional thermal energy is defined as thermal energy that is added to thermal energy of the iron ore oxide material 5 holding thermal energy and/or as thermal energy that is added to the still not utilized thermal energy of the reduced iron ore material descending through the intermediate interior portion IP and/or the lower interior portion LP.

Alternatively, the sixth control circuitry 56 is configured to control the additional thermal energy by adjusting the temperature of the introduced pre-heated hydrogen containing reducing agent for providing the at least one desired passivation parameter value of the reduced iron ore material.

The sixth control circuitry 56 may be electrically coupled to an additional reducing agent pre-heater 18' configured to pre-heat the hydrogen containing reducing agent H introduced into a lower interior portion LP and/or the intermediate interior portion of the reduction facility.

The introduced pre-heated hydrogen containing reducing agent H fed into the lower interior portion LP may comprise 80-100 % hydrogen, preferably 100% hydrogen. The sixth control circuitry 56 is adapted to control the temperature of the introduced pre-heated hydrogen containing reducing agent H fed into the lower interior portion LP toward a pre-determined temperature for providing sintering and/or heat treatment of reduced iron ore material 16 during a pre-determined time period.

Alternatively, the additional thermal energy is defined as thermal energy that is added to thermal energy of the iron ore oxide material 5 holding thermal energy and/or as thermal energy that is added to the still not utilized thermal energy of the reduced iron ore material descending through the intermediate interior portion IP and/or the lower interior portion LP.

The sixth control circuitry 56 is configured to control the additional thermal energy by adjusting the temperature of the introduced pre-heated for providing the at least one desired passivation parameter value of the reduced iron ore material.

Fig. 15d illustrates a closed loop diagram for a closed loop algorithm used by of an iron ore material production configuration of an exemplary steel production configuration. A sixth control circuitry 56 is electrically coupled to an iron ore oxide material provider unit 3, such as an iron ore oxide pelletizing plant or iron ore oxide pre-heating plant, and is adapted to adjust the temperature of the iron ore oxide material holding thermal energy to be charged into a direct reduction facility.

The sixth control circuitry 56 may be adapted to control the temperature of the iron ore oxide material holding thermal energy toward a pre-determined temperature value PDTV for providing a heat treatment process in the direct reduction facility for heat treatment of the iron ore oxide material subject to reduction and/or the reduced iron ore material during a pre-determined time period, thereby reaching the at least one desired passivation parameter value DPPV of the reduced iron ore material.

The at least one desired passivation parameter value DPPV may regard a porosity parameter and/or a dimension parameter and/or a weight parameter and/or an iron ore particle structure parameter and/or a sample cut evenness parameter and/or a shrinkage parameter and/or a sintering parameter and/or a Cold Crushing Strength parameter etc.

A passivation parameter detector PPD is associated with the reduction facility for detecting an actual passivation parameter value APPV. The sixth control circuitry 56 may execute a calculation and comparison procedure for adjusting the temperature of the iron ore oxide material holding thermal energy by means of the iron ore oxide material provider unit 3.

Alternatively, the sixth control circuitry 56 may be adapted to control the temperature of the charged iron ore oxide material in such way that the pre-determined temperature value PDTV, for providing a heat treatment process, generates a temperature value of the heat treatment process for reaching the at least one desired passivation parameter value DPPV. The sixth control circuitry 56 repeats the closed loop algorithm until the at least one desired passivation parameter value DPPV is reached.

The sixth control circuitry 56 is electrically coupled to a reducing agent temperature adjusting device 18 configured for temperature adjustment of a hydrogen containing reducing agent to be introduced into a reduction facility of the metal material production configuration, for achieving at least one desired passivation parameter value DPPV of the reduced iron ore material.

The closed loop diagram may use a starting process where an input temperature value IN of the pre-heated hydrogen containing reducing agent is used.

The sixth control circuitry 56 is adapted to control the reducing agent temperature adjusting device 18 in such way that the temperature of the introduced pre-heated hydrogen containing reducing agent is adapted toward a pre-determined temperature value PDTV for providing a heat treatment process in the reduction facility for heat treatment of the iron ore oxide material subject to reduction and/or the reduced iron ore material during a pre-determined time period thereby reaching the at least one desired passivation parameter value DPPV of the reduced iron ore material. The sixth control circuitry 56 takes into account the at least one desired passivation parameter value DPPV when determining the pre-determined temperature value PDTV. The at least one desired passivation parameter value DPPV of the reduced iron ore material is determined in view of reaching an efficient passivation of the reduced iron ore material.

The at least one desired passivation parameter value DPPV may regard a porosity parameter and/or a dimension parameter and/or a weight parameter and/or an iron ore particle structure parameter and/or a sample cut evenness parameter and/or a shrinkage parameter and/or a sintering parameter etc.

A passivation parameter detector PPD is associated with the reduction facility for detecting an actual passivation parameter value APPV.

The actual passivation parameter value APPV of the reduced metal material is detected by the passivation parameter detector PPD electrically coupled to the to the sixth control circuitry 56. The sixth control circuitry 56 executes a calculation and comparison procedure for adjusting the reducing agent temperature adjusting device 18 in such way that the temperature of the introduced pre-heated hydrogen containing reducing agent is adapted toward a pre-determined temperature value PDTV for reaching the at least one desired passivation parameter value DPPV.

The sixth control circuitry 56 repeats the closed loop algorithm until the at least one desired passivation parameter value DPPV is reached.

The sixth control circuitry 56 is configured to compare the actual passivation parameter value APPV with the at least one desired passivation parameter value DPPV and controls the reducing agent temperature adjusting device 18 to adjust the temperature of the hydrogen containing reducing agent until the at least one desired passivation parameter value DPPV is reached.

The iron ore oxide material holding thermal energy may be iron ore oxide pellets that is pre-heated to comprise thermal energy. The iron ore oxide pellets may be produced by a pelletizing plant processing iron ore mixture and transferred into a reduction facility by means of a transportation steel band.

The upper interior portion of the reduction facility is configured for reduction of the iron ore oxide pellets and the reduction facility is configured to provide the chemical reaction between the hydrogen containing reducing agent and the iron ore oxide pellets.

The lower portion and/or intermediate portion being configured for the heat treatment process for heat treatment of the iron ore oxide material.

The reduced and heat hardened iron ore material is discharged from the lower interior portion by means of a discharge transport unit coupled to an opening of the lower interior portion.

Alternatively, a computer of the sixth control circuitry 56 is electrically coupled to the iron ore oxide material charging device for controlling the charging rate into the reduction facility.

The computer may be electrically coupled to the iron ore oxide material provider unit for controlling the temperature of the iron ore oxide pellets to be charged and/or electrically coupled to the reducing agent temperature adjusting device for controlling the temperature of the introduced hydrogen containing reducing agent and/or electrically coupled to the discharge transport unit.

Alternatively, the reducing agent H comprising hydrogen may be pre-heated before introduction into the direct reduction facility 7, wherein the introduced reducing agent H may be pre-heated to a temperature (e.g. in some cases called high temperature) of about 200 to about 500 °C or about 300 °C to about 600 °C or about 400 °C to about 700 °C or about 500 °C to about 800 °C or about 600 °C to about 900 °C or about 700 °C to about 1000 °C or about 800 °C to about 1100 °C or about 900 °C to about 1200 °C or higher.

Alternatively, the temperature (e.g. in some cases called high temperature) of the iron ore oxide material to be charged into the direct reduction facility may have a temperature of about 50°C to about 350 °C or about 100°C to about 400 °C or about 200 to about 500 °C or about 300 °C to about 600 °C or about 400 °C to about 700 °C or about 500 °C to about 800 °C or about 600 °C to about 900 °C or about 700 °C to about 1000 °C or about 800 °C to about 1100 °C or about 900 °C to about 1200 °C or higher.

For example, the reducing agent having the temperature (e.g. in some cases called high temperature) (e.g. any temperature between the range about 600-1000°C or about 500-900°C or about 700-1100°C) to be introduced and/or being introduced into the direct reduction facility 7 meets the direct reduced iron material and/or the iron ore oxide material subject to direct reduction, which descends through the direct reduction facility 7, for decreasing the cooling rate of the direct reduced iron material and/or the iron ore oxide material subject to direct reduction descending through the direct reduction facility 7.

Alternatively, the temperature (e.g. in some cases called high temperature) (e.g. any temperature between the range about 600 °C to about 900 °C or about 700 °C to about 1000 °C or about 800 °C to about 1100 °C or about 900 °C to about 1200 °C or higher) of the iron ore oxide material to be charged and/or being charged into the direct reduction facility 7 meets the reducing agent H, the majority of which has been used for the chemical reaction, in the upper interior portion of the reduction facility 7 for partly further providing said chemical reaction, meanwhile the iron ore oxide material 5 subject to direct reduction and/or the direct reduced iron material farther down in the direct reduction facility 7 is subject to said heat treatment process, whereby the top gas to be drawn from the reduction facility and formed by the chemical reaction in the upper interior portion will be very hot and comprises high temperature water steam to be fed to a high temperature electrolysis unit.

Alternatively, the reduction potential of the hydrogen of the reducing agent is lower than that of the hydrogen of the reducing agent introduced farther down in the reduction facility.

Alternatively, a temperature (e.g. any temperature between the range about 50°C to about 350 °C or about 100°C to about 400 °C) of the iron ore oxide material to be charged and/or being charged into the direct reduction facility meets the reducing agent, the majority of which has been used for the chemical reaction, in the upper interior portion of the reduction facility for partly further providing said chemical reaction to at least some extent by further heating the introduced reducing agent for achieving said chemical reaction between the iron ore oxide material and the reducing agent.

Thereby is achieved an energy saving process for direct reduction of iron ore oxide material by means of hydrogen and/or hydrogen containing reducing agent, the hydrogen of which preferably may be temporarily stored in a gas storing tank and/or in a storage facility of a geological repository and/or in other buffer facilities, so that hydrogen of the reducing agent is available and can be used when re-generative energy is not sufficiently produced, i.e. for meeting fluctuations in production of re-generatively generated electric energy.

Alternatively, the temperature of the iron ore oxide material to be charged into the direct reduction facility may be lower than the temperature of the reducing agent to be introduced and/or being introduced into the direct reduction facility.

The present invention may relate to a process for producing steel, whereby iron ore oxide material is reduced with a reducing agent, such as a hydrogen containing reducing agent, in a direct reduction facility and the so-obtained intermediate product of direct reduced metal material and eventually accompanying substances is/are metallurgically processed; the reducing agent is produced by electrolysis of water by means of an electrolysis unit, such as a high temperature electrolysis unit, the electric energy necessary for the electrolysis may be re-generative energy which is derived from hydropower and/or wind power and/or photovoltaic and/or other re-generative energy forms and/or a nuclear plant, such as a plant comprising a small modular reactor SMR, wherein produced reduced iron material, such as sponge iron, so called an intermediate product, is produced independently of the current demand, if sufficient reducing agent is available.

The iron ore oxide material is transferred from an iron ore oxide material provider device, such as a pelletizing plant and/or a pre-heating apparatus, into the direct reduction facility and holds thermal energy that originates from the iron ore oxide material provider device.

The direct reduction facility is configured for introduction of the reducing agent adapted to react with the iron ore oxide material holding thermal energy, thus reducing the iron ore oxide material into the intermediate product by utilizing the thermal energy of the iron ore oxide material to further heat the introduced reducing agent for achieving a chemical reaction between the iron ore oxide material and the reducing agent, for providing an energy saving and time saving process for producing steel using re-generative energy on industrial scale, and for saving re-generative energy for meeting fluctuations in production of re-generatively generated electric energy.

Alternatively, the reducing agent is produced independently of the current demand, if sufficient generatively generated electric energy is available, which produced reducing agent is temporary stored for meeting said fluctuations.

The hydrogen of the hydrogen containing reducing agent and/or the hydrogen containing reducing agent may be stored in a gas storing tank and/or in a storage facility of a geological repository and/or in other buffer facilities.

The gas storing tank or the storage facility in geological repository may be located between the electrolysis unit and/or the high temperature electrolysis unit and the direct reduction facility.

The hydrogen and/or the hydrogen containing reducing agent is configured to be fed and/transferred to the direct reduction facility to be uses as reducing agent in the event of fluctuations, for example during summer season.

The re-generative electricity may be produced by the wind energy plants, coupled to and used by the electrolysis unit and/or the high temperature electrolysis unit, during spring and autumn seasons. The hydrogen of the hydrogen containing reducing agent and/or the hydrogen containing reducing agent produced by the re-generative energy by this means, during spring and autumn seasons, preferably being temporary stored in the gas storing tank and/or in the storage facility of the geological repository.

In such way is achieved efficient storage of re-generative energy (in the form of hydrogen and/or hydrogen containing reducing agent), which later on can be used by the direct reduction facility as a reducing agent during the summer season when the production of re-generative electricity is low, i.e. when sufficient re-generatively generated electric energy is not available.

Alternatively, the reducing agent may be pre-heated to some extent before being introduced into the direct reduction facility.

Alternatively, the temperature of the iron ore oxide material to be charged into the direct reduction facility may be higher than the temperature of the reducing agent to be introduced and/or being introduced into the direct reduction facility.

Alternatively, the temperature of the iron ore oxide material to be charged into the direct reduction facility may be lower than the temperature of the reducing agent to be introduced and/or being introduced into the direct reduction facility.

The temperature of the iron ore oxide material to be charged into the direct reduction facility may have a temperature of about 50°C to about 350 °C or about 100°C to about 400 °C or about 200 to about 500 °C or about 300 °C to about 600 °C or about 400 °C to about 700 °C or about 500 °C to about 800 °C or about 600 °C to about 900 °C or about 700 °C to about 1000 °C or about 800 °C to about 1100 °C or about 900 °C to about 1200 °C or higher.

The reducing agent may be pre-heated before introduction into the direct reduction facility, wherein the introduced reducing agent may be pre-heated to a temperature of about 200 to about 500 °C or about 300 °C to about 600 °C or about 400 °C to about 700 °C or about 500 °C to about 800 °C or about 600 °C to about 900 °C or about 700 °C to about 1000 °C or about 800 °C to about 1100 °C or about 900 °C to about 1200 °C or higher.

Alternatively, by introducing a relatively warm reducing agent (e.g. about 600 °C to 900 °C) into the direct reduction facility it is achieved that the iron ore oxide material-, holding thermal energy, reaching the intermediate portion and/or the lower interior portion of the direct reduction facility and being subjected for direct reduction and/or the heat treatment, -does not cool down rapidly in the direct reduction facility.

Thereby the heat treatment can be performed efficiently. The passivated and reduced iron material will have a compact and dense structure for achieving an intermediate product that is resistant to re-oxidation.

The intermediate product may be defined as a small, round, pear, droplet, globule, bead, spheroid or oval shaped body of passivated reduced iron ore material having a compact and dense structure for producing an intermediate product that is resistant to re-oxidation.

Alternatively, the direct reduction facility is configured for permitting the reduced iron ore material to descend into the lower interior portion and/or into the intermediate interior portion for providing the heat treatment process for heat treatment of the reduced iron ore material making use of the relatively warm reducing agent providing thermal energy for avoiding rapid cooling the iron ore material subject to direct reduction and/or heat treatment.

Alternatively, a control circuitry is coupled to an iron ore oxide pre-heating plant and/or heating device and is configured to control the temperature of the iron ore oxide material to be charged such that the iron ore oxide material subject to reduction and/or heat treatment will strive toward a pre-determined temperature of about 200-600 °C, preferably about 300-500 °C, during a pre-determined time period sufficient long to enable the heat treatment process providing said desired passivation parameter value of the reduced iron ore material, in turn providing the intermediate product resistant to re-oxidation.

Alternatively, the pre-determined temperature is about 400-800 °C, preferably about 500-700 °C.

Alternatively, the pre-determined temperature is about 600-1000 °C, preferably about 700-900 °C.

Alternatively, the control circuitry is further coupled to a reducing agent pre-heating device configured to pre-heat the reducing agent before introduction into the direct reduction facility and is configured to control the temperature of the reducing agent such that the iron ore oxide material subject to reduction and/or heat treatment will strive toward a pre-determined temperature of the of about 200-600 °C, preferably about 300-500 °C, during a pre-determined time period sufficient long to enable the heat treatment process providing said desired passivation parameter value of the reduced iron ore material, in turn providing the intermediate product resistant to re-oxidation.

Alternatively, the control circuitry may be adapted to control the temperature of the iron ore oxide material holding thermal energy toward the pre-determined temperature for providing the heat treatment process in the direct reduction facility for heat treatment of the iron ore oxide material subject to reduction during a pre-determined time period, thereby reaching a desired passivation parameter value regarding porosity and/or a sponge iron dimension and/or weight per volume of produced sponge iron and/or iron ore particle structure and/or sample cut evenness and/or shrinkage and/or sintering and/or Cold Crushing Strength etc.

Alternatively, the desired passivation parameter value may defined as a value of the rate and/or degree and/or grade and/or quota and/or proportion of re-oxidation of the intermediate product (sponge iron and/or reduced iron ore material).

Alternatively, the desired passivation parameter value regarding porosity, the definition of which can be expressed as the ratio of pore volume of the produced sponge iron to its total volume. The sponge iron dimension may be expressed as the average diameter of the generally produced sponge iron agglomerate. The weight per volume may be defined as the measure of the iron concentration of the generally produced sponge iron agglomerate. The iron ore particle structure may be defined as the final microstructure and distribution of dense and porous regions of the produced sponge iron agglomerate. The sample cut evenness may define the density of the produced sponge iron agglomerate.

Alternatively, the heat treatment process, provided by means of the control circuitry during a pre-determined time period, thereby reaching the desired passivation parameter value of the produced sponge iron, produces a sponge iron or intermediate product that has a dense structure and/or high uniformity of eventual porosity in specific regions (such as central region of the sponge iron agglomerate) and/or high uniform chemical composition for cost effective and energy saving production in subsequent steel production in steel plants and that is resistant to re-oxidation and that is produced with low Carbon dioxide emissions.

The present disclosure or disclosures may not be restricted to the examples described above, but many possibilities to modifications, or combinations of the described examples thereof should be apparent to a person with ordinary skill in the art without departing from the basic idea as defined in the appended claims.

## Claims

1. A process for producing steel, whereby iron ore oxide material (5) is reduced with a reducing agent (H) in a direct reduction facility (7) and the so-obtained intermediate product (RM) of direct reduced iron ore material and eventually accompanying substances is/are metallurgically processed;
- the reducing agent (H) is produced by electrolysis of water by means of an electrolysis unit (17);
- the electric energy necessary for the electrolysis may be re-generative energy which is derived from hydropower and/or wind power and/or photovoltaic or other re-generative energy forms (2),
- the intermediate product (RM) is produced independently of the current demand, if sufficient reducing agent is available;
**characterized in that**
the process comprises;
- transferring the iron ore oxide material (5) from an iron ore oxide material provider device (3, 4) into the direct reduction facility (7), wherein the iron ore oxide material (5) holds thermal energy that originates from the iron ore oxide material provider device (3, 4); wherein
- the direct reduction facility (7) is configured for introduction of the reducing agent (H) adapted to react with the iron ore oxide material (5) holding thermal energy, thus reducing the iron ore oxide material (5) into the intermediate product (RM) by utilizing the thermal energy of the iron ore oxide material (5) to heat or further heat the introduced reducing agent (H) for achieving a chemical reaction between the iron ore oxide material (5) and the reducing agent (H), for providing an energy saving and time saving process for producing steel using re-generative energy on industrial scale, and for saving re-generative energy for meeting fluctuations in production of re-generatively generated electric energy;
wherein an upper interior portion (UP) of the reduction facility (7) is configured to receive the iron ore oxide material (5) holding thermal energy; an iron ore oxide material charging device is configured to charge the iron ore oxide material (5) holding thermal energy into the upper interior portion (UP); and
- reducing the iron ore oxide material in the upper interior portion (UP) by utilizing the thermal energy of the iron ore oxide material (5) to heat or further heat the introduced hydrogen containing reducing agent for providing said chemical reaction.

2. The process according to claim 1, **wherein** the reducing agent (H) is produced independently of the current demand, if sufficient generatively generated electric energy is available, which produced reducing agent (H) is temporary stored for meeting fluctuations in production of re-generative energy.

3. The process according to claim 1 or 2, **wherein**
- the reducing agent (H) and/or the intermediate product (RM) is/are always produced independently of the current demand, if sufficient re-generatively generated electric energy is available;
- the intermediate product (RM) that is not demanded is stored until demand/use, so that the re-generative energy that is saved therein is also stored;
- during the reduction of the iron ore oxide material (5) to the intermediate product (RM), a carbon containing gas (CG) or hydrogen-containing gas is added to the reducing agent (H), in order to incorporate carbon into the intermediate product;
- at least so much carbon containing gas (CG) or hydrogen-containing gas is added to the reducing agent (H) for the reduction, that the carbon content in the intermediate product is 0,0005 mass-% to 6,3 mass-%; and
- the carbon containing gas is methane or other carbon-containing gases from biogas production, or from pyrolysis of renewable raw materials or synthetic gas from biomass.

4. The process according to any of claims 1 to 3, **wherein**
- the iron ore oxide material provider device comprises an iron ore oxide material production unit (3), which is configured to produce the iron ore oxide material (5) holding said thermal energy, which iron ore oxide material (5) holding said thermal energy is transferred into the direct reduction facility (7).

5. The process according to claim 4, **wherein** the iron ore oxide material (5) holds thermal energy that originates from a manufacturing thermal process of the iron ore oxide material production unit (3).

6. The process according to claim any of claim 1 to 3, **wherein**
- the iron ore oxide material provider device comprises a pre-heating apparatus (4), which is configured for pre-heating the iron ore oxide material (5) before transferring the iron ore oxide material (5) into the direct reduction facility (7).

7. The process according to any of the preceding claims, **wherein** the electrolysis unit (19) also produces oxygen (10), which oxygen (10) is used by the iron ore oxide material production unit (3) for manufacturing the iron ore oxide material (5).

8. The process according to claim 7, **wherein** the oxygen (10) is produced independently of the current demand, if sufficient re-generatively generated electric energy is available; and the intermediate product (RM) that is not demanded is stored until demand/use, so that the re-generative energy that is saved therein is also stored.

9. The process according to any of the preceding claims, wherein a carbon containing substance (100) extracted from a carbon source (CS) is added to the direct reduced iron ore material in a carburizing zone (101, 102) integrated with and/or coupled to the direct reduction facility (7).

10. The process according to claim 9, wherein the carbon source (CS) comprises;
- a carbon capture and utilization unit (CCU) and/or;
- a carbon production unit (CS1) configured for production of non-fossil produced carbon and/or;
- a biogas production unit (CS2) configured for production of carbon containing gas and/or;
- a synthetic gas production unit configured for production of carbon containing synthetic gas from biomass.

11. The process according to claim 1, **wherein** the intermediate product (RM) is a carbon-free intermediate product.

12. The process according to claim 11, **wherein** the intermediate product (RM) is transferred to a steel making industry (17) in a flammable product storage transport device (FL).

13. The process according to any of the preceding claims, **wherein** a control circuitry (50) is adapted to control the iron ore oxide material temperature of the iron ore oxide material (5) transferred into the direct reduction facility (7) and/or to control the interior gas pressure in the direct reduction facility (7) and/or the reducing agent temperature and/or the reducing agent gas pressure of the introduced reducing agent (H).

14. The process according to any of the preceding claims, **wherein** a first control circuitry (51) is adapted to control the iron ore oxide material temperature of the iron ore oxide material (5) transferred into the direct reduction facility (7) by controlling the iron ore oxide material production unit (3) discharging the iron ore oxide material (5) at a specific temperature, which specific temperature corresponds with a first temperature value that is determined from a desired parameter value of the direct reduced iron ore material and/or intermediate product (RM).

15. The process according to any of the preceding claims, **wherein** a second control circuitry (52) is adapted to control the iron ore oxide material temperature of the iron ore oxide material (5) transferred into the direct reduction facility (7) by controlling the pre-heating apparatus (4) discharging the iron ore oxide material (5) from the pre-heating apparatus (4) at a specific temperature, which specific temperature corresponds with a first temperature value that is determined from a desired parameter value of the direct reduced iron ore material and/or intermediate product (RM).

16. The process according to any of the preceding claims, **wherein** a third control circuitry (53) is adapted to control the reducing agent gas pressure of the reducing agent transferred into the direct reduction facility (7) by controlling a first pressurizing device (63) adapted to pressurize the reducing agent entering the direct reduction facility at a specific reducing agent gas pressure, which specific reducing agent gas pressure corresponds with a first reducing agent gas pressure value that is determined from a desired parameter value of the direct reduced iron ore material and/or intermediate product (RM).

17. The process according to any of the preceding claims, **wherein** a fourth control circuitry (54) is adapted to control the interior reduction pressure in the direct reduction facility (7) by controlling a second pressurizing device 64 for pressurizing the interior of the reduction facility (7) at a specific interior reduction pressure, which specific interior reduction pressure corresponds with a first interior reduction pressure value that is determined from a desired parameter value of the direct reduced iron ore material and/or intermediate product (RM).

18. The process according to any of the preceding claims, **wherein** a fifth control circuitry (55) is adapted to control the reducing agent temperature of the reducing agent injected into the direct reduction facility (7) by controlling a heating device (74) configured to heat the reducing agent at a specific reducing agent temperature, which specific reducing agent temperature corresponds with a first reducing agent temperature value that is determined from a desired parameter value of the direct reduced iron ore material and/or intermediate product (RM).

19. The process according to any of the preceding claims, **wherein** the control circuitry (51, 52, 53, 54, 55) is adapted to adjust the iron ore oxide material temperature and/or the interior reduction pressure and/or the reducing agent temperature and/or reducing agent pressure from desired properties of the intermediate product (RM).

20. The process according to any of the preceding claims, **wherein** the process comprises the steps of; directly reducing the iron ore oxide material by means of a reducing agent having a hydrogen content of at least 80% by volume; wherein a carbon content in the direct reduced iron ore material is then increased and/or added by means of a carburizing gas, and thereafter used carburizing gas is at least partly taken off while largely avoiding mixing the carburizing gas with the reducing agent.

21. A steel production configuration provided for production of steel and for a process for producing steel, the steel production configuration is **characterized by**;
- an iron ore oxide material provider device (3, 4) configured for providing an iron ore oxide material (5) holding thermal energy;
- a direct reduction facility (7) configured for reduction of the iron ore oxide material and configured for utilizing the thermal energy of the iron ore oxide material (5) to heat or further heat an introduced reducing agent (H);
- the direct reduction facility (7) is configured for introduction of the reducing agent (H) adapted to react with the iron ore oxide material (5) holding thermal energy for achieving a chemical reaction between the iron ore oxide material (5) and the reducing agent (H), for providing an energy saving and time saving process for producing steel using re-generative energy on industrial scale, and for saving re-generative energy for meeting fluctuations in production of re-generatively generated electric energy;
- wherein an upper interior portion (UP) of the reduction facility (7) is configured to receive the iron ore oxide material (5) holding thermal energy; an iron ore oxide material charging device is configured to charge the iron ore oxide material (5) holding thermal energy into the upper interior portion (UP);
- a control circuitry (50, 51, 52, 53, 54, 55) configured for controlling the iron ore oxide material provider device (3, 4), and for controlling the reduction of the iron ore oxide material;
- an iron ore oxide transferring device (95) adapted for charging the iron ore oxide material (5) into the direct reduction facility (7) from the iron ore oxide material provider device (3, 4); and/or
- an electrolysis unit (19) configured for electrolysis of water for the production of hydrogen and oxygen; and/or
- a steel making industry (17) configured for the production of steel.

22. The steel production configuration according to claim 21, wherein the control circuitry (50, 51, 52, 53, 54, 55) is configured to operate charging of the iron ore oxide material into the direct reduction facility (7); wherein the control circuitry (50, 51, 52, 53, 54, 55) is configured to control the temperature of the iron ore oxide material (5) transferred into the direct reduction facility (7) and/or to control the interior reduction pressure in the direct reduction facility (7) and/or the reducing agent temperature and/or the reducing agent gas pressure of the introduced reducing agent (H).

23. A data program (P), programmed for causing the steel production configuration according to claim 21 or 22 to execute the process according to any of claims 1 to 20, wherein said data program (P) comprises a program code readable on a computer of the control circuitry (50, 51, 52, 53, 54, 55) for providing a method comprising the steps of:
- producing the iron ore oxide material (5);
- charging the iron ore oxide material (5), holding thermal energy provided by the iron ore oxide material provider device (3, 4), from the iron ore oxide material provider device (3, 4) into the direct reduction facility (7)
- introducing the reducing agent (H) into the direct reduction facility (7);
- reducing said iron ore oxide material (5) into an intermediate product (RM) by utilizing said thermal energy of the iron ore oxide material (5) to heat or further heat the introduced reducing agent (H) for achieving a chemical reaction; and
- discharging the intermediate product (RM) from the direct reduction facility (7); and/or
- transferring the intermediate product (RM) to the steel making industry (17).

24. The data program (P) according to claim 23, wherein the method comprises the further step of:
- signalling a parameter value signal from a detector member (DCT1, DCT2) of the direct reduction facility (7) to the control circuitry (50, 51, 52, 53; 54; 55); and
- commanding a transferring device (95) of the iron ore oxide material provider device (3, 4) to stop charging the iron ore oxide material (5), holding thermal energy, into the direct reduction facility (7).

25. The process according to any of claims 1 to 20, **whereby** the iron ore oxide material (5) holding thermal energy provided by means of the iron ore oxide material provider device (3, 4) is charged via an iron ore oxide material charging device into an upper interior portion (UP) of the direct reduction facility (7) of the steel production configuration; a sixth control circuitry (56) is electrically coupled to a reducing agent temperature adjusting device (18) configured to adjust the temperature of a reducing agent (H) to be introduced into an intermediate portion (IP) and/or a lower interior portion (LP) of the direct reduction facility (7) via a reducing agent inlet device; the method is **characterized by** the steps of;
- reducing the iron ore oxide material (5) in the upper interior portion (UP) by utilizing the thermal energy of the iron ore oxide material (5) to heat or further heat the introduced hydrogen containing reducing agent (H) for providing a chemical reaction between the hydrogen containing reducing agent (H) and the iron ore oxide material (5);
- providing a heat treatment process for heat treatment of the iron ore oxide material (5) subject to reduction and/or the reduced iron ore material (16) before being discharged from the lower interior portion (LP); and controlling the temperature of the introduced reducing agent (H) for adjustment of the chemical reaction and/or the heat treatment process for reaching at least one desired passivation parameter value (DPPV) of the intermediate product (RM).

## Patentansprüche

1. Prozess zum Herstellen von Stahl, wobei Eisenerzoxidmaterial (5) mit einem Reduktionsmittel (H) in einer Direktreduktionsanlage (7) reduziert wird und das so erhaltene Zwischenprodukt (RM) aus direktreduziertem Eisenerzmaterial und etwaigen Begleitstoffen metallurgisch verarbeitet wird;
- das Reduktionsmittel (H) durch Elektrolyse von Wasser mittels einer Elektrolyseeinheit (17) erzeugt wird;
- die für die Elektrolyse notwendige elektrische Energie regenerative Energie sein kann, die aus Wasserkraft und/oder Windkraft und/oder Photovoltaik oder anderen regenerativen Energieformen (2) gewonnen wird;
- das Zwischenprodukt (RM) unabhängig vom aktuellen Bedarf erzeugt wird, wenn ausreichend Reduktionsmittel verfügbar ist;
**dadurch gekennzeichnet, dass** der Prozess umfasst;
- Überführen des Eisenerzoxidmaterials (5) von einer Eisenerzoxidmaterial-Bereitstellungsvorrichtung (3, 4) in die Direktreduktionsanlage (7), wobei das Eisenerzoxidmaterial (5) thermische Energie enthält, die aus der Eisenerzoxidmaterial-Bereitstellungsvorrichtung (3, 4) stammt; wobei
- die Direktreduktionsanlage (7) zur Einleitung des Reduktionsmittels (H) eingerichtet ist, das dazu ausgelegt ist, mit dem thermische Energie enthaltenden Eisenerzoxidmaterial (5) zu reagieren, wodurch das Eisenerzoxidmaterial (5) in das Zwischenprodukt (RM) reduziert wird, indem die thermische Energie des Eisenerzoxidmaterials (5) genutzt wird, um das eingeleitete Reduktionsmittel (H) zu erwärmen oder weiter zu erwärmen, um eine chemische Reaktion zwischen dem Eisenerzoxidmaterial (5) und dem Reduktionsmittel (H) zu erzielen, um einen energie- und zeitsparenden Prozess zum Herstellen von Stahl unter Verwendung regenerativer Energie im industriellen Maßstab und zum Einsparen regenerativer Energie zur Bewältigung von Schwankungen in der Erzeugung regenerativ erzeugter elektrischer Energie bereitzustellen;
wobei ein oberer Innenabschnitt (UP) der Reduktionsanlage (7) dazu eingerichtet ist, das thermische Energie enthaltende Eisenerzoxidmaterial (5) aufzunehmen; eine Eisenerzoxidmaterial-Beschickungsvorrichtung dazu eingerichtet ist, das thermische Energie enthaltende Eisenerzoxidmaterial (5) in den oberen Innenabschnitt (UP) einzufüllen; und
- Reduzieren des Eisenerzoxidmaterials im oberen Innenabschnitt (UP) durch Nutzung der thermischen Energie des Eisenerzoxidmaterials (5), um das eingeleitete wasserstoffhaltige Reduktionsmittel zu erwärmen oder weiter zu erwärmen, um die chemische Reaktion bereitzustellen.

2. Prozess nach Anspruch 1, **wobei** das Reduktionsmittel (H) unabhängig vom aktuellen Bedarf erzeugt wird, wenn ausreichend generativ erzeugte elektrische Energie verfügbar ist, wobei das erzeugte Reduktionsmittel (H) vorübergehend gespeichert wird, um Schwankungen in der Erzeugung regenerativer Energie auszugleichen.

3. Prozess nach Anspruch 1 oder 2, **wobei:**
- das Reduktionsmittel (H) und/oder das Zwischenprodukt (RM) stets unabhängig vom aktuellen Bedarf erzeugt werden, wenn ausreichend regenerativ erzeugte elektrische Energie verfügbar ist;
- das nicht benötigte Zwischenprodukt (RM) bis zur Nachfrage/Verwendung gespeichert wird, sodass die darin gespeicherte regenerative Energie ebenfalls gespeichert wird;
- während der Reduktion des Eisenerzoxidmaterials (5) zum Zwischenprodukt (RM) dem Reduktionsmittel (H) ein kohlenstoffhaltiges Gas (CG) oder wasserstoffhaltiges Gas zugesetzt wird, um Kohlenstoff in das Zwischenprodukt einzulagern;
- dem Reduktionsmittel (H) für die Reduktion mindestens so viel kohlenstoffhaltiges Gas (CG) oder wasserstoffhaltiges Gas zugesetzt wird, dass der Kohlenstoffgehalt im Zwischenprodukt 0,0005 Masse-% bis 6,3 Masse-% beträgt; und
- das kohlenstoffhaltige Gas Methan oder andere kohlenstoffhaltige Gase aus der Biogasproduktion, aus der Pyrolyse erneuerbarer Rohstoffe oder Synthesegas aus Biomasse ist.

4. Prozess nach einem der Ansprüche 1 bis 3, **wobei:**
- die Eisenerzoxidmaterial-Bereitstellungsvorrichtung eine Eisenerzoxidmaterial-Produktionseinheit (3) umfasst, die dazu eingerichtet ist, das die thermische Energie enthaltende Eisenerzoxidmaterial (5) herzustellen, wobei das die thermische Energie enthaltende Eisenerzoxidmaterial (5) in die Direktreduktionsanlage (7) überführt wird.

5. Prozess nach Anspruch 4, **wobei** das Eisenerzoxidmaterial (5) thermische Energie enthält, die aus einem thermischen Herstellungsprozess der Eisenerzoxidmaterial-Produktionseinheit (3) stammt.

6. Prozess nach einem der Ansprüche 1 bis 3, **wobei:**
- die Eisenerzoxidmaterial-Bereitstellungsvorrichtung eine Vorwärmeinrichtung (4) umfasst, die dazu eingerichtet ist, das Eisenerzoxidmaterial (5) vor der Überführung des Eisenoxidmaterials (5) in die Direktreduktionsanlage (7) vorzuwärmen.

7. Prozess nach einem der vorhergehenden Ansprüche, **wobei** die Elektrolyseeinheit (19) auch Sauerstoff (10) erzeugt, wobei der Sauerstoff (10) von der Eisenerzoxidmaterial-Produktionseinheit (3) zur Herstellung des Eisenerzoxidmaterials (5) verwendet wird.

8. Prozess nach Anspruch 7, **wobei** der Sauerstoff (10) unabhängig vom aktuellen Bedarf erzeugt wird, wenn ausreichend regenerativ erzeugte elektrische Energie verfügbar ist; und das nicht benötigte Zwischenprodukt (RM) bis zur Nachfrage/Verwendung gespeichert wird, sodass die darin gespeicherte regenerative Energie ebenfalls gespeichert wird.

9. Prozess nach einem der vorhergehenden Ansprüche, wobei dem direktreduzierten Eisenerzoxidmaterial in einer Aufkohlungszone (101, 102), die in die Direktreduktionsanlage (7) integriert und/oder mit ihr gekoppelt ist, ein aus einer Kohlenstoffquelle (CS) gewonnener kohlenstoffhaltiger Stoff (100) zugesetzt wird.

10. Prozess nach Anspruch 9, wobei die Kohlenstoffquelle (CS) umfasst;
- eine Kohlenstoffabscheidungs- und -nutzungseinheit (CCU) und/oder;
- eine Kohlenstoffproduktionseinheit (CS1), die zur Produktion von nicht fossil erzeugtem Kohlenstoff eingerichtet ist, und/oder;
- eine Biogasproduktionseinheit (CS2), die zur Produktion von kohlenstoffhaltigem Gas eingerichtet ist, und/oder;
- eine Synthesegasproduktionseinheit, die zur Produktion von kohlenstoffhaltigem Synthesegas aus Biomasse eingerichtet ist.

11. Prozess nach Anspruch 1, **wobei** das Zwischenprodukt (RM) ein kohlenstofffreies Zwischenprodukt ist.

12. Prozess nach Anspruch 11, **wobei** das Zwischenprodukt (RM) in einer brennbaren Produktlager-Transportvorrichtung (FL) in eine Stahlherstellungsindustrie (17) überführt wird.

13. Prozess nach einem der vorhergehenden Ansprüche, **wobei** eine Steuerschaltung (50) dazu ausgelegt ist, die Eisenerzoxidmaterialtemperatur des in die Direktreduktionsanlage (7) überführten Eisenerzoxidmaterials (5) zu steuern und/oder den Innengasdruck in der Direktreduktionsanlage (7) und/oder die Reduktionsmitteltemperatur und/oder den Reduktionsmittelgasdruck des eingeleiteten Reduktionsmittels (H) zu steuern.

14. Prozess nach einem der vorhergehenden Ansprüche, **wobei** eine erste Steuerschaltung (51) dazu ausgelegt ist, die Eisenerzoxidmaterialtemperatur des in die Direktreduktionsanlage (7) überführten Eisenerzoxidmaterials (5) zu steuern, indem die Eisenerzoxidmaterial-Produktionseinheit (3) gesteuert wird, das Eisenerzoxidmaterial (5) bei einer spezifischen Temperatur auszugeben, wobei die spezifische Temperatur einem ersten Temperaturwert entspricht, der aus einem gewünschten Parameterwert des direktreduzierten Eisenerzoxidmaterials und/oder Zwischenprodukts (RM) bestimmt wird.

15. Prozess nach einem der vorhergehenden Ansprüche, **wobei** eine zweite Steuerschaltung (52) dazu ausgelegt ist, die Eisenerzoxidmaterialtemperatur des in die Direktreduktionsanlage (7) überführten Eisenerzoxidmaterials (5) zu steuern, indem die Vorwärmeinrichtung (4) gesteuert wird, das Eisenerzoxidmaterial (5) bei einer spezifischen Temperatur aus der Vorwärmeinrichtung (4) auszugeben, wobei die spezifische Temperatur einem ersten Temperaturwert entspricht, der aus einem gewünschten Parameterwert des direktreduzierten Eisenerzoxidmaterials und/oder Zwischenprodukts (RM) bestimmt wird.

16. Prozess nach einem der vorhergehenden Ansprüche, **wobei** eine dritte Steuerschaltung (53) dazu ausgelegt ist, den Reduktionsmittelgasdruck des in die Direktreduktionsanlage (7) überführten Reduktionsmittels zu steuern, indem eine erste Druckbeaufschlagungsvorrichtung (63) gesteuert wird, die dazu ausgelegt ist, das in die Direktreduktionsanlage eintretende Reduktionsmittel bei einem spezifischen Reduktionsmittelgasdruck unter Druck zu setzen, wobei der spezifische Reduktionsmittelgasdruck einem ersten Reduktionsmittelgasdruckwert entspricht, der aus einem gewünschten Parameterwert des direktreduzierten Eisenerzoxidmaterials und/oder Zwischenprodukts (RM) bestimmt wird.

17. Prozess nach einem der vorhergehenden Ansprüche, **wobei** eine vierte Steuerschaltung (54) dazu ausgelegt ist, den Innenreduktionsdruck in der Direktreduktionsanlage (7) zu steuern, indem eine zweite Druckbeaufschlagungsvorrichtung 64 zur Druckbeaufschlagung des Innenraums der Reduktionsanlage (7) bei einem spezifischen Innenreduktionsdruck gesteuert wird, wobei der spezifische Innenreduktionsdruck einem ersten Innenreduktionsdruckwert entspricht, der aus einem gewünschten Parameterwert des direktreduzierten Eisenerzoxidmaterials und/oder Zwischenprodukts (RM) bestimmt wird.

18. Prozess nach einem der vorhergehenden Ansprüche, **wobei** eine fünfte Steuerschaltung (55) dazu ausgelegt ist, die Reduktionsmitteltemperatur des in die Direktreduktionsanlage (7) eingespritzten Reduktionsmittels zu steuern, indem eine Heizvorrichtung (74) gesteuert wird, die dazu eingerichtet ist, das Reduktionsmittel bei einer spezifischen Reduktionsmitteltemperatur zu erwärmen, wobei die spezifische Reduktionsmitteltemperatur einem ersten Reduktionsmitteltemperaturwert entspricht, der aus einem gewünschten Parameterwert des direktreduzierten Eisenerzoxidmaterials und/oder Zwischenprodukts (RM) bestimmt wird.

19. Prozess nach einem der vorhergehenden Ansprüche, **wobei** die Steuerschaltung (51, 52, 53, 54, 55) dazu ausgelegt ist, die Eisenerzoxidmaterialtemperatur und/oder den Innenreduktionsdruck und/oder die Reduktionsmitteltemperatur und/oder den Reduktionsmitteldruck anhand gewünschter Eigenschaften des Zwischenprodukts (RM) anzupassen.

20. Prozess nach einem der vorhergehenden Ansprüche, **wobei** der Prozess die Schritte umfasst; direktes Reduzieren des Eisenerzoxidmaterials mittels eines Reduktionsmittels mit einem Wasserstoffgehalt von mindestens 80 Volumen-%; wobei ein Kohlenstoffgehalt im direktreduzierten Eisenerzoxidmaterial dann durch ein Aufkohlungsgas erhöht und/oder zugesetzt wird, und danach verwendetes Aufkohlungsgas zumindest teilweise abgeführt wird, wobei eine Vermischung des Aufkohlungsgases mit dem Reduktionsmittel weitgehend vermieden wird.

21. Stahlproduktionsanordnung, die zur Herstellung von Stahl und für einen Prozess zum Herstellen von Stahl bereitgestellt ist, wobei die Stahlproduktionsanordnung **gekennzeichnet ist durch;**
- eine Eisenerzoxidmaterial-Bereitstellungsvorrichtung (3, 4), die dazu eingerichtet ist, ein thermische Energie enthaltendes Eisenerzoxidmaterial (5) bereitzustellen;
- eine Direktreduktionsanlage (7), die zur Reduktion des Eisenerzoxidmaterials eingerichtet und dazu eingerichtet ist, die thermische Energie des Eisenerzoxidmaterials (5) zu nutzen, um ein eingeleitetes Reduktionsmittel (H) zu erwärmen oder weiter zu erwärmen;
- die Direktreduktionsanlage (7) zur Einleitung des Reduktionsmittels (H) eingerichtet ist, das dazu ausgelegt ist, mit dem thermische Energie enthaltenden Eisenerzoxidmaterial (5) zu reagieren, um eine chemische Reaktion zwischen dem Eisenerzoxidmaterial (5) und dem Reduktionsmittel (H) zu erzielen, um einen energie- und zeitsparenden Prozess zum Herstellen von Stahl unter Verwendung regenerativer Energie im industriellen Maßstab und zum Einsparen regenerative Energie zur Bewältigung von Schwankungen in der Erzeugung regenerativ erzeugter elektrischer Energie bereitzustellen;
- wobei ein oberer Innenabschnitt (UP) der Reduktionsanlage (7) dazu eingerichtet ist, das thermische Energie enthaltende Eisenerzoxidmaterial (5) aufzunehmen; eine Eisenerzoxidmaterial-Beschickungsvorrichtung dazu eingerichtet ist, das thermische Energie enthaltende Eisenerzoxidmaterial (5) in den oberen Innenabschnitt (UP) einzufüllen;
- eine Steuerschaltung (50, 51, 52, 53, 54, 55), die zur Steuerung der Eisenerzoxidmaterial-Bereitstellungsvorrichtung (3, 4) und zur Steuerung der Reduktion des Eisenerzoxidmaterials eingerichet ist;
- eine Eisenerzoxid-Überführungsvorrichtung (95), die dazu ausgelegt ist, das Eisenerzoxidmaterial (5) von der Eisenerzoxidmaterial-Bereitstellungsvorrichtung (3, 4) in die Direktreduktionsanlage (7) zu beschicken; und/oder
- eine Elektrolyseeinheit (19), die zur Elektrolyse von Wasser zur Erzeugung von Wasserstoff und Sauerstoff eingerichtet ist; und/oder
- eine Stahlherstellungsindustrie (17), die zur Herstellung von Stahl ausgelegt ist.

22. Stahlproduktionsanordnung nach Anspruch 21, wobei die Steuerschaltung (50, 51, 52, 53, 54, 55) dazu eingerichtet ist, die Beschickung des Eisenerzoxidmaterials in die Direktreduktionsanlage (7) zu steuern; wobei die Steuerschaltung (50, 51, 52, 53, 54, 55) dazu eingerichtet ist, die Temperatur des in die Direktreduktionsanlage (7) überführten Eisenerzoxidmaterials (5) zu steuern und/oder den Innenreduktionsdruck in der Direktreduktionsanlage (7) und/oder die Reduktionsmitteltemperatur und/oder den Reduktionsmittelgasdruck des eingeleiteten Reduktionsmittels (H) zu steuern.

23. Datenprogramm (P), das dazu programmiert ist, die Stahlproduktionsanordnung nach Anspruch 21 oder 22 zu veranlassen, den Prozess nach einem der Ansprüche 1 bis 20 auszuführen, wobei das Datenprogramm (P) einen auf einem Computer der Steuerschaltung (50, 51, 52, 53, 54, 55) lesbaren Programmcode umfasst, der ein Verfahren bereitstellt, das die Schritte umfasst:
- Herstellen des Eisenerzoxidmaterials (5);
- Beschicken des Eisenerzoxidmaterials (5), das die durch die Eisenerzoxidmaterial-Bereitstellungsvorrichtung (3, 4) bereitgestellte thermische Energie enthält, aus der Eisenerzoxidmaterial-Bereitstellungsvorrichtung (3, 4) in die Direktreduktionsanlage (7)
- Einleiten des Reduktionsmittels (H) in die Direktreduktionsanlage (7);
- Reduzieren des Eisenerzoxidmaterials (5) zu einem Zwischenprodukt (RM) durch Nutzung der thermischen Energie des Eisenerzoxidmaterials (5), um das eingeleitete Reduktionsmittel (H) zu erwärmen oder weiter zu erwärmen, um eine chemische Reaktion zu erzielen; und
- Ausgeben des Zwischenprodukts (RM) aus der Direktreduktionsanlage (7); und/oder
- Überführen des Zwischenprodukts (RM) in die Stahlherstellungsindustrie (17).

24. Datenprogramm (P) nach Anspruch 23, wobei das Verfahren den weiteren Schritt umfasst:
- Übermitteln eines Parameterwertsignals von einem Detektionselement (DCT1, DCT2) der Direktreduktionsanlage (7) an die Steuerschaltung (50, 51, 52, 53; 54; 55); und
- Anweisen einer Überführungsvorrichtung (95) der Eisenerzoxidmaterial-Bereitstellungsvorrichtung (3, 4), die Beschickung des thermische Energie enthaltenden Eisenerzoxidmaterials (5) in die Direktreduktionsanlage (7) zu stoppen.

25. Prozess nach einem der Ansprüche 1 bis 20, **wobei** das von der Eisenerzoxidmaterial-Bereitstellungsvorrichtung (3, 4) bereitgestellte thermische Energie enthaltende Eisenerzoxidmaterial (5) über eine Eisenerzoxidmaterial-Beschickungsvorrichtung in einen oberen Innenabschnitt (UP) der Direktreduktionsanlage (7) der Stahlproduktionsanordnung beschickt wird; eine sechste Steuerschaltung (56) elektrisch mit einer Reduktionsmitteltemperatur-Einstellvorrichtung (18) gekoppelt ist, die dazu eingerichtet ist, die Temperatur eines Reduktionsmittels (H) einzustellen, das über eine Reduktionsmitteleinlassvorrichtung in einen Zwischenabschnitt (IP) und/oder einen unteren Innenabschnitt (LP) der Direktreduktionsanlage (7) einzuleiten ist; wobei das Verfahren durch die Schritte **gekennzeichnet ist;**
- Reduzieren des Eisenerzoxidmaterials (5) im oberen Innenabschnitt (UP) durch Nutzung der thermischen Energie des Eisenerzoxidmaterials (5), um das eingeleitete wasserstoffhaltige Reduktionsmittel (H) zu erwärmen oder weiter zu erwärmen, um eine chemische Reaktion zwischen dem wasserstoffhaltigen Reduktionsmittel (H) und dem Eisenerzoxidmaterial (5) bereitzustellen;
- Bereitstellen eines Wärmebehandlungsprozesses zur Wärmebehandlung des der Reduktion unterzogenen Eisenerzoxidmaterials (5) und/oder des reduzierten Eisenerzoxidmaterials (16) vor der Ausgabe aus dem unteren Innenabschnitt (LP); und Steuern der Temperatur des eingeleiteten Reduktionsmittels (H) zum Einstellen der chemischen Reaktion und/oder des Wärmebehandlungsprozesses zum Erreichen mindestens eines gewünschten Passivierungsparameterwertes (DPPV) des Zwischenprodukts (RM).

## Revendications

1. Procédé de production d'acier, selon lequel un matériau d'oxyde de minerai de fer (5) est réduit avec un agent réducteur (H) dans une installation de réduction directe (7) et le produit intermédiaire (RM) ainsi obtenu de matériau de minerai de fer réduit directement et d'éventuelles substances d'accompagnement sont traités métallurgiquement ;
- l'agent réducteur (H) est produit par électrolyse de l'eau au moyen d'une unité d'électrolyse (17) ;
- l'énergie électrique nécessaire pour l'électrolyse peut être une énergie régénérative qui est dérivée de l'énergie hydroélectrique et/ou de l'énergie éolienne et/ou de formes d'énergie photovoltaïque ou d'autres énergies régénératives (2),
- le produit intermédiaire (RM) est produit indépendamment de la demande actuelle, si suffisamment d'agent réducteur est disponible ;
**caractérisé en ce que** le procédé comprend :
- le transfert du matériau d'oxyde de minerai de fer (5) d'un dispositif fournisseur de matériau d'oxyde de minerai de fer (3, 4) dans l'installation de réduction directe (7), dans lequel le matériau d'oxyde de minerai de fer (5) détient de l'énergie thermique qui provient du dispositif fournisseur de matériau d'oxyde de minerai de fer (3, 4) ; dans lequel
- l'installation de réduction directe (7) est configurée pour l'introduction de l'agent réducteur (H) adapté pour réagir avec le matériau d'oxyde de minerai de fer (5) détenant de l'énergie thermique, réduisant ainsi le matériau d'oxyde de minerai de fer (5) pour former le produit intermédiaire (RM) en utilisant l'énergie thermique du matériau d'oxyde de minerai de fer (5) pour le fait de chauffer ou chauffer davantage l'agent réducteur (H) introduit pour l'obtention d'une réaction chimique entre le matériau d'oxyde de minerai de fer (5) et l'agent réducteur (H), pour la fourniture d'un procédé économisant de l'énergie et économisant du temps pour la production d'acier en utilisant de l'énergie régénérative à l'échelle industrielle, et pour l'économie d'énergie régénérative afin de faire face aux fluctuations dans la production d'énergie électrique générée de manière régénérative ;
dans lequel une partie intérieure supérieure (UP) de l'installation de réduction (7) est configurée pour recevoir le matériau d'oxyde de minerai de fer (5) détenant de l'énergie thermique ; un dispositif de chargement de matériau d'oxyde de minerai de fer est configuré pour charger le matériau d'oxyde de minerai de fer (5) détenant de l'énergie thermique dans la partie intérieure supérieure (UP) ; et
- la réduction du matériau d'oxyde de minerai de fer dans la partie intérieure supérieure (UP) en utilisant l'énergie thermique du matériau d'oxyde de minerai de fer (5) pour chauffer ou chauffer davantage l'agent réducteur contenant de l'hydrogène introduit pour la fourniture de ladite réaction chimique.

2. Procédé selon la revendication 1, dans lequel l'agent réducteur (H) est produit indépendamment de la demande actuelle, si suffisamment d'énergie électrique générée de manière régénérative est disponible, lequel agent réducteur (H) produit est stocké temporairement pour faire face aux fluctuations dans la production d'énergie régénérative.

3. Procédé selon la revendication 1 ou 2, **dans lequel**
- l'agent réducteur (H) et/ou le produit intermédiaire (RM) sont toujours produits indépendamment de la demande actuelle, si suffisamment d'énergie électrique générée de manière régénérative est disponible ;
- le produit intermédiaire (RM) qui n'est pas demandé est stocké jusqu'à la demande/l'utilisation, de sorte que l'énergie régénérative qui y est économisée est également stockée ;
- pendant la réduction du matériau d'oxyde de minerai de fer (5) pour former le produit intermédiaire (RM), un gaz contenant du carbone (CG) ou un gaz contenant de l'hydrogène est ajouté à l'agent réducteur (H), afin d'incorporer du carbone dans le produit intermédiaire ;
- au moins suffisamment de gaz contenant du carbone (CG) ou de gaz contenant de l'hydrogène est ajouté à l'agent réducteur (H) pour la réduction, pour que la teneur en carbone dans le produit intermédiaire soit de 0,0005 % en masse à 6,3 % en masse ; et
- le gaz contenant du carbone est du méthane ou d'autres gaz contenant du carbone provenant de la production de biogaz, ou de la pyrolyse de matières premières renouvelables ou de gaz synthétique provenant de la biomasse.

4. Procédé selon l'une quelconque des revendications 1 à 3, **dans lequel**
- le dispositif fournisseur de matériau d'oxyde de minerai de fer comprend une unité de production de matériau d'oxyde de minerai de fer (3), qui est configurée pour produire le matériau d'oxyde de minerai de fer (5) détenant ladite énergie thermique, lequel matériau d'oxyde de minerai de fer (5) détenant ladite énergie thermique est transféré dans l'installation de réduction directe (7).

5. Procédé selon la revendication 4, dans lequel le matériau d'oxyde de minerai de fer (5) détient de l'énergie thermique qui provient d'un procédé thermique de fabrication de l'unité de production de matériau d'oxyde de minerai de fer (3).

6. Procédé selon l'une quelconque des revendications 1 à 3, **dans lequel**
- le dispositif fournisseur de matériau d'oxyde de minerai de fer comprend un appareil de préchauffage (4), qui est configuré pour le préchauffage du matériau d'oxyde de minerai de fer (5) avant le transfert du matériau d'oxyde de minerai de fer (5) dans l'installation de réduction directe (7).

7. Procédé selon l'une quelconque des revendications précédentes, **dans lequel** l'unité d'électrolyse (19) produit également de l'oxygène (10), lequel oxygène (10) est utilisé par l'unité de production de matériau d'oxyde de minerai de fer (3) pour la fabrication du matériau d'oxyde de minerai de fer (5).

8. Procédé selon la revendication 7, **dans lequel** l'oxygène (10) est produit indépendamment de la demande actuelle, si suffisamment d'énergie électrique générée de manière régénérative est disponible ; et le produit intermédiaire (RM) qui n'est pas demandé est stocké jusqu'à la demande/l'utilisation, de sorte que l'énergie régénérative qui y est économisée est également stockée.

9. Procédé selon l'une quelconque des revendications précédentes, dans lequel une substance contenant du carbone (100) extraite d'une source de carbone (CS) est ajoutée au matériau de minerai de fer réduit directement dans une zone de carburation (101, 102) intégrée à et/ou couplée à l'installation de réduction directe (7).

10. Procédé selon la revendication 9, dans lequel la source de carbone (CS) comprend :
- une unité de capture et d'utilisation de carbone (CCU) et/ou ;
- une unité de production de carbone (CS1) configurée pour la production de carbone produit de manière non fossile et/ou ;
- une unité de production de biogaz (CS2) configurée pour la production de gaz contenant du carbone et/ou ;
- une unité de production de gaz synthétique configurée pour la production de gaz synthétique contenant du carbone à partir de biomasse.

11. Procédé selon la revendication 1, **dans lequel** le produit intermédiaire (RM) est un produit intermédiaire sans carbone.

12. Procédé selon la revendication 11, **dans lequel** le produit intermédiaire (RM) est transféré à une industrie sidérurgique (17) dans un dispositif de transport de stockage de produit inflammable (FL).

13. Procédé selon l'une quelconque des revendications précédentes, **dans lequel** une circuiterie de commande (50) est adaptée pour commander la température de matériau d'oxyde de minerai de fer du matériau d'oxyde de minerai de fer (5) transféré dans l'installation de réduction directe (7) et/ou pour commander la pression de gaz intérieure dans l'installation de réduction directe (7) et/ou la température d'agent réducteur et/ou la pression de gaz d'agent réducteur de l'agent réducteur (H) introduit.

14. Procédé selon l'une quelconque des revendications précédentes, **dans lequel** une première circuiterie de commande (51) est adaptée pour commander la température de matériau d'oxyde de minerai de fer du matériau d'oxyde de minerai de fer (5) transféré dans l'installation de réduction directe (7) par la commande de l'unité de production de matériau d'oxyde de minerai de fer (3) déchargeant le matériau d'oxyde de minerai de fer (5) à une température spécifique, laquelle température spécifique correspond à une première valeur de température qui est déterminée à partir d'une valeur de paramètre souhaitée du matériau de minerai de fer réduit directement et/ou du produit intermédiaire (RM).

15. Procédé selon l'une quelconque des revendications précédentes, dans lequel une deuxième circuiterie de commande (52) est adaptée pour commander la température de matériau d'oxyde de minerai de fer du matériau d'oxyde de minerai de fer (5) transféré dans l'installation de réduction directe (7) par la commande de l'appareil de préchauffage (4) déchargeant le matériau d'oxyde de minerai de fer (5) de l'appareil de préchauffage (4) à une température spécifique, laquelle température spécifique correspond à une première valeur de température qui est déterminée à partir d'une valeur de paramètre souhaitée du matériau de minerai de fer réduit directement et/ou du produit intermédiaire (RM).

16. Procédé selon l'une quelconque des revendications précédentes, **dans lequel** une troisième circuiterie de commande (53) est adaptée pour commander la pression de gaz d'agent réducteur de l'agent réducteur transféré dans l'installation de réduction directe (7) par la commande d'un premier dispositif de mise sous pression (63) adapté pour mettre sous pression l'agent réducteur entrant dans l'installation de réduction directe à une pression de gaz d'agent réducteur spécifique, laquelle pression de gaz d'agent réducteur spécifique correspond à une première valeur de pression de gaz d'agent réducteur qui est déterminée à partir d'une valeur de paramètre souhaitée du matériau de minerai de fer réduit directement et/ou du produit intermédiaire (RM).

17. Procédé selon l'une quelconque des revendications précédentes, **dans lequel** une quatrième circuiterie de commande (54) est adaptée pour commander la pression de réduction intérieure dans l'installation de réduction directe (7) par la commande d'un second dispositif de mise sous pression 64 pour la mise sous pression de l'intérieur de l'installation de réduction (7) à une pression de réduction intérieure spécifique, laquelle pression de réduction intérieure spécifique correspond à une première valeur de pression de réduction intérieure qui est déterminée à partir d'une valeur de paramètre souhaitée du matériau de minerai de fer réduit directement et/ou du produit intermédiaire (RM).

18. Procédé selon l'une quelconque des revendications précédentes, **dans lequel** une cinquième circuiterie de commande (55) est adaptée pour commander la température d'agent réducteur de l'agent réducteur injecté dans l'installation de réduction directe (7) par la commande d'un dispositif de chauffage (74) configuré pour chauffer l'agent réducteur à une température d'agent réducteur spécifique, laquelle température d'agent réducteur spécifique correspond à une première valeur de température d'agent réducteur qui est déterminée à partir d'une valeur de paramètre souhaitée du matériau de minerai de fer réduit directement et/ou du produit intermédiaire (RM).

19. Procédé selon l'une quelconque des revendications précédentes, **dans lequel** la circuiterie de commande (51, 52, 53, 54, 55) est adaptée pour ajuster la température de matériau d'oxyde de minerai de fer et/ou la pression de réduction intérieure et/ou la température d'agent réducteur et/ou la pression d'agent réducteur à partir de propriétés souhaitées du produit intermédiaire (RM).

20. Procédé selon l'une quelconque des revendications précédentes, **dans lequel** le procédé comprend les étapes de : la réduction directe du matériau d'oxyde de minerai de fer au moyen d'un agent réducteur ayant une teneur en hydrogène d'au moins 80 % en volume ; dans lequel une teneur en carbone dans le matériau de minerai de fer réduit directement est ensuite augmentée et/ou ajoutée au moyen d'un gaz de carburation, et par la suite le gaz de carburation utilisé est au moins partiellement retiré tout en évitant largement le mélange du gaz de carburation avec l'agent réducteur.

21. Configuration de production d'acier prévue pour la production d'acier et pour un procédé de production d'acier, la configuration de production d'acier est **caractérisée par** :
- un dispositif fournisseur de matériau d'oxyde de minerai de fer (3, 4) configuré pour la fourniture d'un matériau d'oxyde de minerai de fer (5) détenant de l'énergie thermique ;
- une installation de réduction directe (7) configurée pour la réduction du matériau d'oxyde de minerai de fer et configurée pour l'utilisation de l'énergie thermique du matériau d'oxyde de minerai de fer (5) pour chauffer ou chauffer davantage un agent réducteur (H) introduit ;
- l'installation de réduction directe (7) est configurée pour l'introduction de l'agent réducteur (H) adapté pour réagir avec le matériau d'oxyde de minerai de fer (5) détenant de l'énergie thermique pour l'obtention d'une réaction chimique entre le matériau d'oxyde de minerai de fer (5) et l'agent réducteur (H), pour la fourniture d'un procédé économisant de l'énergie et économisant du temps pour la production d'acier en utilisant de l'énergie régénérative à l'échelle industrielle, et pour l'économie d'énergie régénérative pour faire face aux fluctuations dans la production d'énergie électrique générée de manière régénérative ;
- dans laquelle une partie intérieure supérieure (UP) de l'installation de réduction (7) est configurée pour recevoir le matériau d'oxyde de minerai de fer (5) détenant de l'énergie thermique ; un dispositif de chargement de matériau d'oxyde de minerai de fer est configuré pour charger le matériau d'oxyde de minerai de fer (5) détenant de l'énergie thermique dans la partie intérieure supérieure (UP) ;
- une circuiterie de commande (50, 51, 52, 53, 54, 55) configurée pour la commande du dispositif fournisseur de matériau d'oxyde de minerai de fer (3, 4), et pour la commande de la réduction du matériau d'oxyde de minerai de fer ;
- un dispositif de transfert d'oxyde de minerai de fer (95) adapté pour le chargement du matériau d'oxyde de minerai de fer (5) dans l'installation de réduction directe (7) à partir du dispositif fournisseur de matériau d'oxyde de minerai de fer (3, 4) ; et/ou
- une unité d'électrolyse (19) configurée pour l'électrolyse de l'eau pour la production d'hydrogène et d'oxygène ; et/ou
- une industrie sidérurgique (17) configurée pour la production d'acier.

22. Configuration de production d'acier selon la revendication 21, dans laquelle la circuiterie de commande (50, 51, 52, 53, 54, 55) est configurée pour faire fonctionner le chargement du matériau d'oxyde de minerai de fer dans l'installation de réduction directe (7) ; dans laquelle la circuiterie de commande (50, 51, 52, 53, 54, 55) est configurée pour commander la température du matériau d'oxyde de minerai de fer (5) transféré dans l'installation de réduction directe (7) et/ou pour commander la pression de réduction intérieure dans l'installation de réduction directe (7) et/ou la température d'agent réducteur et/ou la pression de gaz d'agent réducteur de l'agent réducteur (H) introduit.

23. Programme de données (P), programmé pour amener la configuration de production d'acier selon la revendication 21 ou 22 à exécuter le procédé selon l'une quelconque des revendications 1 à 20, dans lequel ledit programme de données (P) comprend un code de programme lisible sur un ordinateur de la circuiterie de commande (50, 51, 52, 53, 54, 55) pour fournir un procédé comprenant les étapes de :
- la production du matériau d'oxyde de minerai de fer (5) ;
- le chargement du matériau d'oxyde de minerai de fer (5), détenant de l'énergie thermique fournie par le dispositif fournisseur de matériau d'oxyde de minerai de fer (3, 4), à partir du dispositif fournisseur de matériau d'oxyde de minerai de fer (3, 4) dans l'installation de réduction directe (7) ;
- l'introduction de l'agent réducteur (H) dans l'installation de réduction directe (7) ;
- la réduction dudit matériau d'oxyde de minerai de fer (5) en un produit intermédiaire (RM) en utilisant ladite énergie thermique du matériau d'oxyde de minerai de fer (5) pour chauffer ou chauffer davantage l'agent réducteur (H) introduit pour l'obtention d'une réaction chimique ; et
- le déchargement du produit intermédiaire (RM) de l'installation de réduction directe (7) ; et/ou
- le transfert du produit intermédiaire (RM) à l'industrie sidérurgique (17).

24. Programme de données (P) selon la revendication 23, dans lequel le procédé comprend l'étape supplémentaire de :
- le signalement d'un signal de valeur de paramètre d'un élément détecteur (DCT1, DCT2) de l'installation de réduction directe (7) à la circuiterie de commande (50, 51, 52, 53 ; 54 ; 55) ; et
- la commande à un dispositif de transfert (95) du dispositif fournisseur de matériau d'oxyde de minerai de fer (3, 4) d'arrêter le chargement du matériau d'oxyde de minerai de fer (5), détenant de l'énergie thermique, dans l'installation de réduction directe (7).

25. Procédé selon l'une quelconque des revendications 1 à 20, **selon lequel** le matériau d'oxyde de minerai de fer (5) détenant de l'énergie thermique fournie au moyen du dispositif fournisseur de matériau d'oxyde de minerai de fer (3, 4) est chargé par l'intermédiaire d'un dispositif de chargement de matériau d'oxyde de minerai de fer dans une partie intérieure supérieure (UP) de l'installation de réduction directe (7) de la configuration de production d'acier ; une sixième circuiterie de commande (56) est connectée électriquement à un dispositif d'ajustement de température d'agent réducteur (18) configuré pour ajuster la température d'un agent réducteur (H) devant être introduit dans une partie intermédiaire (IP) et/ou une partie intérieure inférieure (LP) de l'installation de réduction directe (7) par l'intermédiaire d'un dispositif d'entrée d'agent réducteur ; le procédé est **caractérisé par** les étapes de :
- la réduction du matériau d'oxyde de minerai de fer (5) dans la partie intérieure supérieure (UP) en utilisant l'énergie thermique du matériau d'oxyde de minerai de fer (5) pour chauffer ou chauffer davantage l'agent réducteur contenant de l'hydrogène (H) introduit pour la fourniture d'une réaction chimique entre l'agent réducteur contenant de l'hydrogène (H) et le matériau d'oxyde de minerai de fer (5) ;
- la fourniture d'un procédé de traitement thermique pour le traitement thermique du matériau d'oxyde de minerai de fer (5) soumis à la réduction et/ou du matériau de minerai de fer réduit (16) avant d'être déchargé de la partie intérieure inférieure (LP) ; et la commande de la température de l'agent réducteur (H) introduit pour l'ajustement de la réaction chimique et/ou du procédé de traitement thermique pour atteindre au moins une valeur de paramètre de passivation souhaitée (DPPV) du produit intermédiaire (RM).
